(19) Europäisches Patentamt
European Patent Office
Office européen des brevets

(11) **EP 3 052 966 B1**

(12) **EUROPÄISCHE PATENTSCHRIFT**

(45) Veröffentlichungstag und Bekanntmachung des Hinweises auf die Patenterteilung:
**28.04.2021 Patentblatt 2021/17**

(21) Anmeldenummer: **14777101.8**

(22) Anmeldetag: **29.09.2014**

(51) Int Cl.:
***G01T 1/24*** *(2006.01)*

(86) Internationale Anmeldenummer:
**PCT/EP2014/070806**

(87) Internationale Veröffentlichungsnummer:
**WO 2015/044421 (02.04.2015 Gazette 2015/13)**

(54) **RÖNTGENDETEKTOR**

X-RAY DETECTOR

DÉTECTEUR DE RAYONNEMENTS X

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2013 DE 102013219821**

(43) Veröffentlichungstag der Anmeldung:
**10.08.2016 Patentblatt 2016/32**

(73) Patentinhaber: **Fraunhofer-Gesellschaft zur Förderung der angewandten Forschung e.V.**
**80686 München (DE)**

(72) Erfinder:
- **HOFMANN, Thomas**
  **91091 Großenseebach (DE)**
- **HABL, Matthias**
  **90419 Nürnberg (DE)**
- **FIRSCHING, Markus**
  **90425 Nürnberg (DE)**

(74) Vertreter: **Hersina, Günter et al**
**Schoppe, Zimmermann, Stöckeler Zinkler, Schenk & Partner mbB Patentanwälte**
**Radlkoferstrasse 2**
**81373 München (DE)**

(56) Entgegenhaltungen:
EP-A1- 2 028 509    EP-A1- 2 060 932
WO-A1-2013/012809    WO-A2-2009/031126
DE-A1- 19 833 919    FR-A1- 2 128 402
JP-A- 2012 055 987    US-A1- 2004 054 248
US-A1- 2006 067 471    US-A1- 2006 081 899
US-A1- 2010 044 571    US-A1- 2011 101 228

- **NICOLAS ALLEC, KARIM S. KARIM: "A balanced, filterless, K-edge energy window multilayer detector for dual energy computed tomography", SPIE, PO BOX 10 BELLINGHAM WA 98227-0010, USA, Bd. 7622, Nr. 76224G, 31. Dezember 2010 (2010-12-31), - 31. Dezember 2010 (2010-12-31), XP040547294,**
- **JOSÉ-MANUEL ALVAREZ: "Research and development of a gamma-ray imaging spectrometer in the MeV range in Barcelona", SPIE, PO BOX 10 BELLINGHAM WA 98227-0010, USA/SPACE TELESCOPES AND INSTRUMENTATION 2010: ULTRAVIOLET TO GAMMA RAY, Bd. 7732, Nr. 77324P, 31. Dezember 2010 (2010-12-31), - 31. Dezember 2010 (2010-12-31), XP040540910,**

**EP 3 052 966 B1**

**Beschreibung**

Ausführungsbeispiele der vorliegenden Erfindung beziehen sich auf einen Röntgendetektor, ein Röntgensystem, ein Durchstrahlungssystem und ein Verfahren zur Bestimmung einer Eigenschaft eines Objekts.

Mittels eines Durchstrahlungssystems kann ein Objekt, wie z.B. ein Gepäckstück oder Lebewesen, mittels Röntgenstrahlung durchstrahlt werden, wobei die Projektion der Durchstrahlung über einen Röntgendetektor aufgenommen wird. So ist es mit herkömmlichen Röntgendetektoren möglich, Informationen über die Abschwächung der Strahlung durch das Objekt (flächig) zu erfassen. Es können jedoch typischerweise keine Informationen über die Veränderung des Röntgenspektrums und damit über die Materialzusammensetzung des Objekts erhalten werden.

Mit einem sogenannten Mehr-Energie-Verfahren können Energieinformationen generiert werden, dadurch dass beispielsweise das Spektrum der Röntgenstrahlung, durch eine andere Beschleunigungsspannung oder/und Vorfiltermaterialien, verändert wird. Hierdurch wird die effektive Energie des Spektrums verändert. Bei den Mehr-Energie-Verfahren wird sich zunutze gemacht, dass die Schwächungskoeffizienten sowohl material- als auch energieabhängig sind. Dadurch, dass der Abschwächungskoeffizient des Objektmaterials energieabhängig ist, unterscheidet sich somit auch die gemessene Intensität des Detektors. Üblicherweise wird für dieses Verfahren ein integrierender Detektor verwendet, welcher in einer vorgegebenen Integrationszeit, alle auf ihn treffenden Röntgenphotonen mit einer gewissen Effizient absorbiert und die entstehenden Signale über diese Zeit integriert. Mehr-Energie-Verfahren haben jedoch den Nachteil, dass mehrere Messungen hintereinander nötig sind, bei denen sich die Objektposition nicht unterscheiden darf. Dies ist z.B. bei sich kontinuierlich bewegenden Objekten oder sich um das Objekt drehenden Röhren-Detektorsystemen (Gantry-Systemen) nicht immer möglich und wenn, dann mit zusätzlichen Aufwand verbunden.

Entsprechend einer weiteren herkömmlichen Variante kommt ein sogenannter Sandwich-Detektor zum Einsatz. Auch hierbei handelt es sich um einen integrierenden Detektor, der im Gegensatz zu der oben diskutierten Variante zweischichtig ausgeführt ist, d.h. also, dass hinter einer ersten Detektorschicht (in Richtung des Strahlengangs) sich eine weitere Detektorschicht befindet. Zwischen dieser weiteren Schicht kann zusätzlich ein Filtermaterial platziert werden. Die erste Detektorschicht absorbiert vor allem den niederenergetischen Anteil der Strahlung, während die zweite Schicht vor allem den hochenergetischen Anteil der Strahlung absorbiert. Das Spektrum, das die erste Schicht detektiert, entspricht dem Spektrum hinter dem Objekt, während das Spektrum, das auf die zweite Schicht trifft, durch die erste Schicht und ggf. durch den zusätzlichen Filter weiter aufgehärtet ist. Das Spektrum, das die zwei Schichten detektieren, unterscheidet sich daher sehr. In anderen Worten hat dies den gleichen Effekt, wie eine Veränderung der Spektren (über Änderung der Beschleunigungsspannung und Vorfilterung), wie in der oben beschriebenen Variante. Im Gegensatz zu der oben beschriebenen Variante lassen sich jedoch auch kontinuierlich bewegliche Objekte untersuchen.

Ein weiterer herkömmlich eingesetzter Detektor zur Untersuchung der Materialzusammensetzung ist der sogenannte Photonenzählende Detektor. Dieser üblicherweise direkt konvertierende Halbleiterdetektor erfasst jedes Wechselwirkungsereignis separat und kann somit über die Höhe des Energieeintrags die Energie des wechselwirkenden Photons messen. Somit muss nicht mit unterschiedlichen Spektren gearbeitet werden. Durch Signallaufzeiten im Halbleiter, Mehrfachereignisse (mehrere Photonen unmittelbar hintereinander) und der begrenzten Verarbeitungsgeschwindigkeit der Elektronik sind die detektierbaren Photonenraten jedoch stark eingeschränkt, z.B. auf einige Megahertz. In Anwendungen, wie beispielsweise der Medizin oder bei Benutzung eines Linearbeschleunigers ist aber mit Eventraten von einigen hundert Megahertz zu rechnen. Des Weiteren besteht ein Nachteil dieser Detektorart darin, dass die aufwendige Herstellung und Prozessierung derzeit nur kleine monolithische Detektionsflächen erlaubt und sehr teuer ist.

Entsprechend einer weiteren herkömmlichen Variante können sogenannte Spektrometer eingesetzt werden, die zwar detaillierte Informationen über das Röntgenspektrum liefern, jedoch von der Photonenrate noch stärker eingeschränkt sind als Photonenzählende Detektoren. Außerdem wird keine direkte ortsauflösende Bildgebung ermölicht.

In der Literatur offenbart z.B. A balanced, filterless, K-edge energy window multilayer detector for dual energy computed tomography. Nicholas Allen und Karim S.Karim, Physics of Medical Imaging, 2010, Proc.of SPIE Vol.7622, 76224G, einen Detektoraufbau mit einer zunehmenden Energie-Deposition (inklusive das Erreichen eines Maximums) in einer ersten Schicht und einer abnehmenden Deposition in einer dritten Schicht für einen Energie-Bereich von 10-200 keV.

Ein Effekt des Energie-Depositionsverlaufes rundum die K-Kante der unterschiedlichen Detektorschichtmaterialien (LaOBr:Tb, Gadox und CaW04) wird diskutiert.

Die Patentschrift WO2009031126 weist einen Strahlungsdetektor auf, der mindestens drei unterschiedliche Sensorschichten umfasst, wobei unterschiedliche Materialien und/oder Dicken offenbart sind: Si in den primären Schichten und "high-stopping power" Materialien in der(n) sekundären Schicht(en) (GOS oder CZT). Die Schichten sind so ausgestaltet, dass möglichst wenig K-Kantenfluoreszenz stattfindet und die Schichten insgesamt möglichst eine Totalabsorption erlauben in den letzteren Schichten während die ersten Schichten eine niedrige Schwächung der einfallenden Strahlung aufweisen und nach dem erwarteten Fluss angepasst werden können, so dass möglichst gleiche Zählraten in allen Schichten wahrgenommen werden. Anwendungen in CT, PET und SPECT-Bereichen werden erwähnt.

EP2060932 offenbart eine Compton-Kamera mit "scatterer" und "absorber" Detektoren zum Detektieren Gamma-Strahlung mit Energien im Bereich von 100 keV bis 2 MeV. Die Detektoren können als Positionsempfindliche Halbleiterdetektoren ausgebildet sein. Eine Anordnung bestehend aus einer Detektorschicht aus Si-Material und aus zwei Ge-Detektorschichten erlaubt eine erhöhte Absorptionseffizienz der Kamera.

US2006/081899 handelt über eine CT/PET/SPECT-Detektoreinheit zur Messung von Transmission (X-Strahlen) und Emission (GammaStrahlen) im Bereich von 40 keV bis 1 MeV, umfassend mindestens drei Detektorschichten aus CZT oder CdTe mit unterschiedlichen Dicken zwischen 0,5 mm und 3 cm, wobei 4 und 5 Schichten auch offenbart sind. Die Position, Zeit und Energie eines Absorptionsereignisses wird bestimmt.

Aufgrund der diskutierten Nachteile besteht der Bedarf nach einem verbesserten Konzept. Deshalb ist es Aufgabe der vorliegenden Erfindung ein Konzept zur energieauflösenden Bildgebung zu schaffen, welches insbesondere für die Bildgebung in Röntgensystemen, aber auch für die Lokalisierung einer Strahlungsquelle oder die Justage eines Röntgensystems eingesetzt werden kann.

Die Aufgabe wird durch einen Röntgendetektor gemäß Anspruch 1, ein Röntgensystem gemäß Anspruch 10 sowie durch eine Verwendung gemäß Anspruch 14, ein Verfahren gemäß Anspruch 15 und ein Computerprogramm gemäß Anspruch 17 gelöst.

Ausführungsbeispiele der vorliegenden Erfindung schaffen einen Röntgendetektor zur Detektion von Röntgenstrahlung. Dieser Röntgendetektor umfasst eine erste Schicht mit mindestens einer Sensorzelle, eine zweite Zeile mit mindestens einer Sensorzelle und eine dritte Zeile mit mindestens einer Sensorzelle, wobei die mindestens drei Sensorschichten in Einstrahlungsrichtung der Röntgenstrahlung hintereinander angeordnet sind. Die Sensorzellen der ersten, zweiten und dritten Sensorschicht sind ausgebildet, um jeweils ein Sensorsignal $I_x$ abhängig von der einwirkenden Röntgenstrahlung auszugeben. Auf Basis der Sensorsignale $I_x$ der Sensorzellen der mindestens drei Sensorschichten ist ein Verlauf einer Energiedeposition über die Eindringtiefe durch die mindestens drei Sensorschichten ermittelbar.

Die Erfindung basiert auf der Erkenntnis, dass eine energieauflösende Durchstrahlung durch die Analyse des Röntgenspektrums, die einen Rückschluss auf die Materialzusammensetzung des durchstrahlen Objekts oder auf weitere geometrische Eigenschaften zulässt, ermöglicht wird. Die Gewinnung der Informationen über das Röntgenspektrum basiert dabei auf charakteristischen Modellen der Energiedeposition entlang einer Eindringtiefe in den Detektor. Um die Energiedeposition entlang der Eindringtiefe zu ermitteln, umfasst der Röntgendetektor mindestens drei hintereinander, d.h. entlang der Eindringtiefe angeordnete Detektorzeilen bzw. Detektorschichten, die jeweils mindestens eine, bevorzugt aber auch mehrere Detektorzellen umfassen. Durch die Ermittlung der Intensität in die einzelnen Schichten ist der Energieverlauf bzw. der Verlauf einer Energiedeposition über die Eindringtiefe ermittelbar. Dies bietet also den Vorteil, dass mittels einer mit dem sogenannten integrierenden Detektor aufgenommenen einzigen Aufnahme ausreichend Informationen über das Röntgenspektrum gewonnen werden können, so dass alle für das Spektrum charakteristischen Parameter bestimmbar sind. Hierbei können die oben beschriebenen Nachteile hinsichtlich Beschränkung in der Event- bzw. Zählrate (aufgrund von Signallaufzeiten im Sensormaterial und der Ausleseelektronik) im Vergleich zu Photonenzählenden Detektoren bzw. hinsichtlich der Anzahl der Aufnahmen im Vergleich zu Mehr-Energie-Detektoren, vermieden werden.

Entsprechend weiteren Ausführungsbeispielen sind die einzelnen hintereinander angeordneten Sensorschichten hinsichtlich Materialzusammensetzung und/oder hinsichtlich Dicke derart ausgeführt, dass an der Position der ersten Sensorschicht der Verlauf der Energiedeposition über die Eindringtiefe zunimmt und dass an der Position der dritten Sensorschicht der Verlauf der Energiedeposition die Eindringtiefe abnimmt. Ferner ist die zweite Sensorschicht so angeordnet, dass an der Position derselben der Verlauf der Energiedeposition ein Intensitätsmaximum besitzt. Hierzu weist die erste Sensorschicht beispielsweise eine kleinere Schichtdicke als die zweite Sensorschicht auf.

Zwischen der ersten und der zweiten sowie zwischen der zweiten und der dritten können entsprechend weiteren Ausführungsbeispielen weitere Sensorschichten bzw. Sensorschichten angeordnet sein, auch wenn die Reduzierung der Sensorschichten auf drei oder auch auf vier hinsichtlich Umsetzung Vorteile bietet.

Entsprechend weiteren Ausführungsbeispielen ist der Verlauf der Energiedeposition über die Eindringtiefe anhand folgender Faltung beschreibbar:

$$I_{dep}(t,E) = I_{Verlust}(t,E) * y(x,t,E),$$

mit

$$I_{Verlust}(t,E) = \mu(E) I_0(E)\, e^{-\mu(E)t}$$

Hierbei ist t die Eindringtiefe, E die Röntgenphotonenenergie, $\mu$ ein Schwächungskoeffizient des Materials der Sensorzelle, $I_0$ die Ursprungsintensität der Strahlung und y(x,t,E) eine Verteilfunktion.

Bezug nehmend auf die oben vorgestellten Ausführungsbeispiele angemerkt, dass entsprechend weiteren Ausführungsbeispielen die einzelnen Sensorzellen zueinander fluchtend ausgerichtet sein können.

Entsprechend weiteren Ausführungsbeispielen ist der Röntgendetektor Teil eines Röntgensystems, das ferner eine Auswertevorrichtung umfasst, die ausgebildet ist, um eine Eigenschaft des Objekts auf Basis des Verlaufs der Energiedeposition über die Eindringtiefe zu bestimmen. Hierzu kann die Auswertevorrichtung entsprechend weiteren Ausführungsbeispielen dazu ausgewählt sein, um den Verlauf der Energiedeposition anhand der zwei e-Funktionen, nämlich:

$$\text{für } t = 0 \text{ bis } t = t_{\text{Imax}}: \quad I_{dep\_r}(t) = I_{max} - I_{hub}\, e^{-\mu_r t},$$

$$\text{für } t = t_{\text{Imax}} \text{ bis } t = t_{max}: \quad I_{dep\_f}(t) = I_y\, e^{-\mu_f t},$$

zu berechnen. Bei der Berechnung bestimmt die Auswertevorrichtung die bis zu sechs Koeffizienten aus den e-Funktionen, wobei $\mu_r$ ein den aufklingenden Bereich t = 0 bis t = $t_{\text{Imax}}$ beschreibender Koeffizient ist, $I_{max}$ der maximale Intensitätseintrag oder ein auf den Ursprungsintensitätseintrag oder ein auf den absoluten Intensitätseintrag oder den absoluten Ursprungsintensitätseintrag $I_0$ normierter Intensitätseintrag ist, $I_{hub}$ die Intensitätsdifferenz zwischen der Oberflächenintensität und dem maximalen Intensitätseintrag oder eine auf den absoluten Intensitätseintrag oder den absoluten Ursprungsintensitätseintrag normierte Intensitätsdifferenz ist, $\mu_f$ ein den abklingenden Bereich t = $t_{\text{Imax}}$ bis $t_{max}$ beschreibender Koeffizient ist, $t_{\text{Imax}}$ die Tiefenposition des maximalen Intensitätseintrags ist, und $I_y$ ein Energieeintrag oder ein auf den Ursprungsintensitätseintrag oder ein auf den absoluten Ursprungsintensitätseintrag normierten Energieeintrag ist.

Entsprechend weiteren Ausführungsbeispielen können die Sensorzellen des Röntgendetektors lateral versetzt zueinander sein, d.h. also, dass eine Vielzahl der Sensorzellen in der ersten Sensorschicht gegenüber einer Vielzahl der Sensorzellen in der zweiten und dritten Sensorschicht lateral versetzt sind und/oder dass eine Vielzahl der Sensorzellen in der zweiten Sensorschicht gegenüber einer Vielzahl der Sensorzellen in der dritten Schicht lateral, z.B. um einen Versatz, der dem Pixelpitch der Sensorzellen innerhalb jeder Sensorschicht dividiert durch n entspricht, versetzt sind.

So ist es vorteilhafterweise möglich, dass eine erhöhte Ortsauflösungsfähigkeit des Röntgendetektors erreicht wird. Die Pixelgröße ist dabei gleichbleibend, während durch den relativen Versatz der Detektorschichten die Detektoreffizienz bzw. die Abtastfähigkeit gesteigert wird. Dieser vielschichtige Detektor bleibt weiterhin energieauflösend.

Entsprechend weiteren Ausführungsbeispielen wird ein Röntgensystem mit einem oben beschriebenen Röntgendetektor mit versetzten Sensorzellen und eine Auswertevorrichtung geschaffen, wobei die Auswertevorrichtung ausgebildet ist, um auf Basis der Vielzahl der Sensorsignale voneinander überlappender Sensorzellen der mehreren Sensorschichten für jede Sensorschicht ein virtuelles Pixel zu berechnen, so dass die Ortsauflösung gesteigert werden kann. Verschlechterungen in der Ortsauflösung durch Schrägdurchstrahlung des Detektormaterials, z.B. bei hohen Öffnungswinkeln, können durch Anpassung der virtuellen Pixelpfade kompensiert werden.

Weitere Ausführungsbeispiele beziehen sich auf einen Röntgendetektor, bei dem ein Kollimator parallel zu den entlang der ersten Sensorschicht angeordneten Sensorzellen angeordnet ist, so dass die effektive Detektorhauptfläche auf eine Öffnung beschränkt ist, um die Energiedeposition entlang eines Eindringpfads, der sich durch die Öffnung erstreckt, zu beschränken. Ein derartiges System weist ferner eine Auswertevorrichtung auf, die ausgebildet ist, um auf Basis der Sensorsignale $I_x$ der Vielzahl der Sensorzellen, die eine Röntgenstrahlung detektieren, den Eindringpfad zu bestimmen, um eine Strahlenquelle zu lokalisieren.

Entsprechend weiteren Ausführungsbeispielen kann bei Nutzung eines zweiten Röntgendetektors mit einem zweiten Kollimator oder eines Kollimators mit zwei Öffnungen die Entfernung zwischen dem Röntgendetektor und der Strahlenquelle bestimmt werden. Somit ist es also möglich, eine Strahlenquelle mittels nur einer Aufnahme und auch ohne mechanisches Achssystem zu lokalisieren. Unter Einbeziehung des symmetrischen Energiedepositionsverhaltens orthogonal zum Eindringpfad und der Auswertung der Symmetriezentren ist eine Sub-Pixel-genauen Auswertung möglich, mit der die Bestimmung des Quellenorts gesteigert werden kann. Insbesondere für Computertomographie-Systeme kann die Position der Systemkomponenten während der Messung kontinuierlich bestimmt bzw. zu Justagezwecken überwacht werden. Es ist auch möglich, ein Driften der Brennfleckposition zu detektieren und zu kompensieren. Hintergrund hierzu ist, dass insbesondere bei Computertomographie-Systemen eine exakte Justage bzw. geometrischer Abstimmung Voraussetzung für einen verzerrungsfreien bzw. fehlerfreien Betrieb ist. Das Problem hierzu besteht nämlich darin, dass der Entstehungsort der Strahlung (Brennfleck) meist nicht genau bekannt ist und sich je nach Einstellung der Röntgenquelle und auch während einer Messung örtlich verändern kann. Zudem führen die Toleranzen des mechanischen Aufbaus und der Achssysteme zu Positionsfehlern. Bevor oder während Messungen durchgeführt werden können, sollten diese Fehler bestimmt werden, um sie mechanisch oder auch in der späteren Datenverarbeitung rechnerisch berücksichtigen zu können. Durch das vorgestellte Verfahren kann auf die sonst üblichen Justierverfahren, z.B. mit Hilfsmitteln wie Kugelstäben oder Drähten unter Abfahrung einer vollständigen Umdrehung des Objektdrehtellers (Manipulators) verzichtet werden.

Bezug nehmend auf das oben genannte Ausführungsbeispiel zu den Kollimatoren sei darauf hingewiesen, dass der Röntgendetektor und die Auswertevorrichtung auch für andere Einsatzgebiete vorteilhafterweise eingesetzt werden können, nämlich zum Auffinden einer Strahlenquelle, wie z.B. eines radioaktiven Materials, welches in einer Kiste bzw. einem Container verpackt ist.

Entsprechend weiteren Ausführungsbeispielen wird ein Durchstrahlungssystem geschaffen, das einen oben charakterisierten Röntgendetektor sowie eine Strahlenquelle umfasst.

Weitere Ausführungsbeispiele beziehen sich auf ein Verfahren zur Bestimmung einer Eigenschaft eines Objekts und/oder einer Eigenschaft eines Durchstrahlungssystems mittels eines Röntgendetektors. Das Verfahren umfasst die Schritte des Ermittelns eines Verlaufs einer Energiedeposition über die Eindringtiefe durch die mindestens drei Sensorschichten auf Basis der Sensorsignale $I_x$ der Sensorzellen der mindestens drei Sensorschichten und des Bestimmens der Eigenschaft des Objekts (z.B. Materialzusammensetzung) und/oder der Eigenschaft des Durchstrahlungssystems (z.B. Geometrie) auf Basis des bestimmten Verlaufs der Energiedeposition.

Entsprechend Ausführungsbeispielen erfolgt der Schritt des Bestimmens anhand von zwei e-Funktionen:

$$\text{für } t = 0 \text{ bis } t = t_{Imax}: \quad I_{dep\_r}(t) = I_{max} - I_{hub}\, e^{-\mu_r t},$$

$$\text{für } t = t_{Imax} \text{ bis } t = t_{max}: \quad I_{dep\_f}(t) = I_y\, e^{-\mu_f t},$$

Hierbei ist $\mu_r$ ein den aufklingenden Bereich $t = 0$ bis $t = t_{Imax}$ beschreibender Koeffizient, $I_{max}$ der maximale Intensitätseintrag oder ein auf den Ursprungsintensitätseintrag oder ein auf den absoluten Intensitätseintrag oder den absoluten Ursprungsintensitätseintrag $I_0$ normierter Intensitätseintrag. $I_{hub}$ ist die Intensitätsdifferenz zwischen der Oberflächenintensität und dem maximalen Intensitätseintrag oder eine auf der Ursprungsintensitätsdifferenz oder eine auf den absoluten Intensitätseintrag oder den absoluten Ursprungsintensitätseintrag normierte Intensitätsdifferenz ist, $\mu_f$ ein den abklingenden Bereich $t = t_{Imax}$ bis $t_{max}$ beschreibender Koeffizient, $t_{Imax}$ die Tiefenposition des maximalen Intensitätseintrags, und $I_y$ ein Energieeintrag oder ein auf den Ursprungsintensitätseintrag oder ein auf den absoluten Ursprungsintensitätseintrag normierten Energieeintrag. Hierbei werden dann die sechs Koeffizienten zur Bestimmung der e-Funktionen bestimmt. Dieses Bestimmen bzw. allgemein die beschriebenen Verfahren können auch mittels eines Computers, der mit der entsprechenden Software versehen ist, durchgeführt werden.

Ausführungsbeispiele der vorliegenden Erfindung werden anhand der beiliegenden Figuren erläutert. Es zeigen:

Fig. 1a    einen schematisch dargestellten Röntgendetektor gemäß einem ersten Ausführungsbeispiel;

Fig. 1b    einen exemplarischen Röntgendetektor gemäß einem weiteren Ausführungsbeispiel;

Fig. 2    ein schematisches Blockschaltbild eines Systems mit einem Röntgendetektor aus Fig. 1 und einer Auswertevorrichtung gemäß einem weiteren Ausführungsbeispiel;

Fig. 3a    ein Diagramm zur Illustration der normierten Intensitätsverluste über die Eindringtiefe;

Fig. 3b    ein Diagramm zur Illustration der CSDA-Reichweite;

Fig. 3c    ein Diagramm zur Illustration des Verlaufs der deponierten Energie über die Eindringtiefe;

Fig. 3d    ein Diagramm zur Illustration des Verlaufs der deponierten Energie über die Eindringtiefe;

Fig. 3e    ein Diagramm zur Illustration der charakteristischen Parameter in Abhängigkeit des Objektes;

Fig. 3f    ein Diagramm des Verlaufs des deponierten Energie über die Eindringtiefe zusammen mit Grenzen von unterschiedlichen Sensorschichten;

Fig. 3g    ein Diagramm der logarithmierten Intensitätsverhältnisse und der normierten Gesamtintensitäten;

Fig. 4    einen schematischen Röntgendetektor mit einem Kollimator gemäß einem weiteren Ausführungsbeispiel;

Fig. 5a    ein Diagramm mit einem simulierten Signaleintrag orthogonal zum Eindringpfad für vier verschiedene Photonenenergien;

Fig. 5b    ein Diagramm mit einem simulierten Signaleintrag orthogonal zum Eindringpfad in Abhängigkeit der monoenergetischen Röntgenprotonenenergie;

Fig. 6a    einen schematischen Röntgendetektor mit einem Kollimator, eingesetzt zum Lokalisieren einer Strahlungsquelle gemäß einem Ausführungsbeispiel;

Fig. 6b    ein Diagramm eines simulierten Signaleintrags unter einem Einstrahlwinkel a;

Fig. 7    eine exemplarische geometrische Anordnung eines Justageaufbaus gemäß einem Ausführungsbeispiel;

Fig. 8a    einen schematisch dargestellten Röntgendetektor mit versetzten Pixeln in der Frontansicht gemäß einem Ausführungsbeispiel;

Fig. 8b    den Röntgendetektor aus Fig. 8a in der Draufsicht;

Fig. 8c    ein Diagramm zur Illustration eines Detektorantwortsignals eines vierschichtigen Röntgendetektors mit versetzten Pixeln; und

Fig. 8d    einen schematisch dargestellten Röntgendetektor mit versetzten Pixeln mit unterschiedlichen Pixelpitches.

Nachfolgend werden Ausführungsbeispiele der vorliegenden Erfindung anhand der beiliegenden Figuren im Detail erläutert.

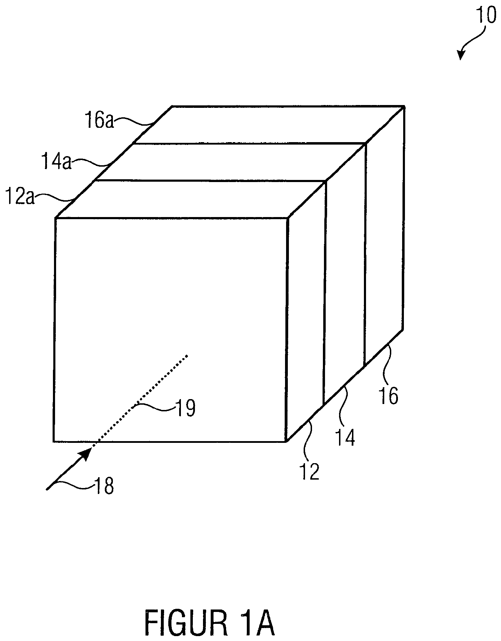

Fig. 1a zeigt einen Röntgendetektor 10 mit einer ersten Detektorzeile 12, einer zweiten Detektorzeile 14 und einer dritten Detektorzeile 16. Die drei Detektorzeilen 12, 14 und 16 sind entlang der Einstrahlungsrichtung 18 der Röntgenstrahlung 18 als Sandwich (das heißt z.B. direkt aneinander angrenzend) hintereinander angeordnet. Die Einstrahlungsrichtung verläuft bevorzugterweise orthogonal oder zumindest steil bezogen auf die Oberfläche der ersten Sensorschicht 12. Insbesondere im Fall einer orthogonalen Strahlungsrichtung 18 besteht der Vorteil, dass Energieinformationen des Röntgenspektrums mit hoher Exaktheit gewonnen werden können.

Jede Sensorschicht 12 bzw. 14 bzw. 16 umfasst mindestens eine Sensorzelle 12a bzw. 14a bzw. 16a, die ausgebildet ist, ein Sensorsignal $I_{12a}$ bzw. $I_{14a}$ bzw. $I_{16a}$ oder allgemein $I_x$ auszugeben, wobei $I_x$ abhängig von der einwirkenden Röntgenstrahlung 18 ist und Auskunft über die durch die jeweilige Sensorzelle 12a, 14a oder 16a detektierte Intensität gibt. Es sei an dieser Stelle angemerkt, dass bevorzugt jede Sensorzelle 12, 14 oder 16 eine Vielzahl von Sensorzellen 12a, 14a oder 16a bzw. Pixeln umfasst. Entsprechend einem bevorzugten Ausführungsbeispiel sind die Sensorzellen einreihig nebeneinander angeordnet, wobei anstelle eines so geschaffenen Zeilendetektors auch durch eine mehrreihige Anordnung ein Flächendetektor denkbar wäre.

Nachfolgend wird die Funktionsweise des Röntgendetektors 10 beschrieben: Jede der Sensorschichten 12, 14 und 16 ist dazu ausgebildet, die einstrahlende (z.B. polychromatische) Röntgenstrahlung 18 zumindest partiell durchzulassen, wobei eine Veränderung der Energiedeposition über die Eindringtiefe (Eindringtiefe entlang der Einstrahlungsrichtung 18) im Detektor 10 erfolgt. Dieser Energiedepositionsverlauf kann auf Basis der Schichtanordnung (vgl. 12, 14 und 16) des Detektors 10 ermittelt werden. Auf Basis dieses Energiedepositionsverlaufs können weitere Informationen über die reine geometrische (zweidimensionale) Darstellung des Durchleuchtungsobjekts hinaus gewonnen werden. Ein Beispiel hierfür ist die Materialzusammensetzung des Durchleuchtungsobjekts. Zusätzlich ist es auch möglich auf Basis dieses Konzepts weitere Informationen, wie z.B. geometrische Informationen über das Durchleuchtungssystem bzw. über die Röntgenstrahlung oder auch eine andere Strahlung zu sammeln, wie im Folgenden ausgeführt werden wird. Es sei angemerkt, dass die Verteilungsfunktion energieabhängig ist und sich bei polychromatischer Bestrahlung über die Eindringtiefe t verändert.

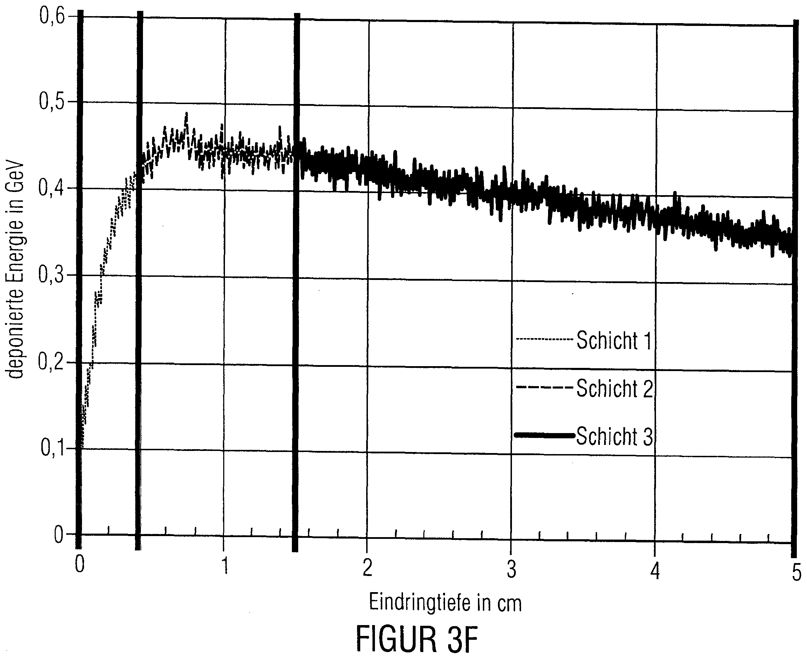

Entsprechend weiteren Ausführungsbeispielen können die Sensorschichten 12, 14 und 16 unterschiedliche Dicken aufweisen, die in Abhängigkeit von dem zu erwartenden Verlauf der Energiedeposition durch den Röntgendetektor 10 (also entlang der Richtung 18) gewählt sind, wie Bezug nehmend in Fig. 3f erörtert werden wird. Hierbei sind beispielsweise die Schichten für den Aufbaueffekt (vgl. Schicht 12) dünner, da er meist sehr kurzreichweitig ist.

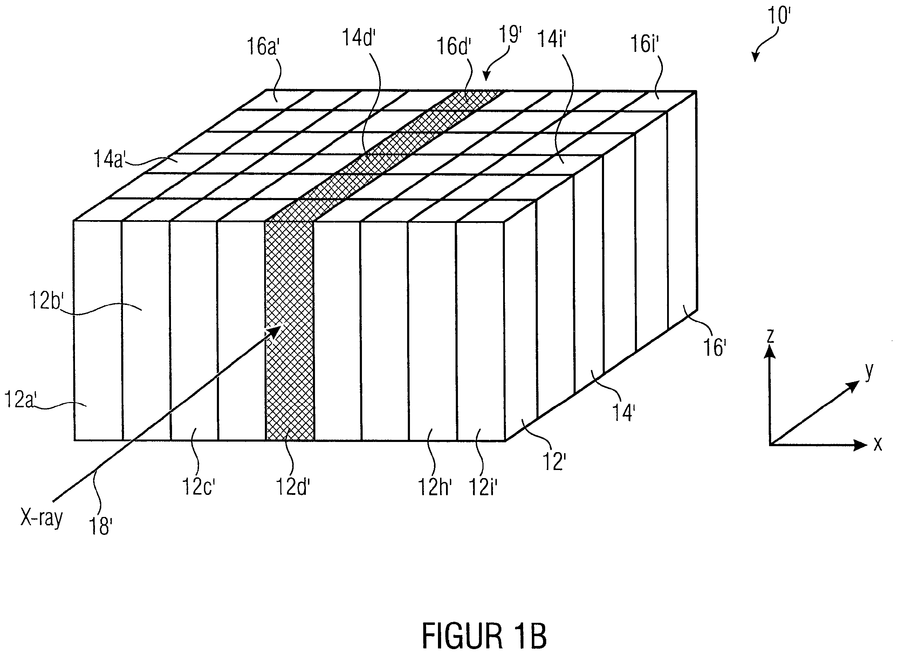

Fig. 1b zeigt einen Detektor 10' mit einer Vielzahl von (in y- Richtung) angeordneten Sensorschichten 12', 14' und 16', wobei zwischen den Sensorschichten 12' und 14' und zwischen den Sensorschichten 14' und 16' weitere Sensorschichten vorgesehen sind, die bevorzugt, wie oben erläutert, abhängig von dem Energiedepositionsverlauf angeordnet sind. Ein Detektor mit vier Schichten hätte z.B. idealerweise zwei Schichten, in denen der Verlauf zunimmt, bevor dann in der folgenden Schicht das Maximum erreicht wird und in der letzten Schicht wieder abnimmt.

Alle Sensorschichten 12', 14' und 16' sowie die dazwischenliegenden Sensorschichten sind gleich aufgebaut und umfassen eine Vielzahl von nebeneinander hier als Stäbchen angeordnete Sensorelemente 12a' bis 12i' bzw. 14a' bis 14i' bzw. 16a' bis 16i'. Bei diesem mehrschichtigen Zeilendetektor 10' sind die stäbchenförmigen Sensorzellen 12a' bis 12i', 14a' bis 14i' bzw. 16a' bis 16i' so angeordnet, dass diese sich in x-Richtung erstrecken, wobei die Sensorzellen 12a' bis 12i', 14a' bis 14i' und 16a' bis 16i' in y-Richtung zueinander fluchtend angeordnet sind. In anderen Worten kann der Aufbau des Detektors 10' also dadurch beschrieben werden, dass der Detektor 10' in x-Richtung bildgebende Eigenschaften und in y-Richtung energieauflösende Eigenschaften aufweist bzw. dass aus einem zweidimensionalen Flächendetektor ein energieauflösender Zeilendetektor wird. Es sei angemerkt, dass zur Vereinfachung von einem Detektor 10' mit einer Pixelierung in zwei Dimensionen gesprochen wird, d.h. dass man durch die hier vorgeschlagene seitliche Einstrahlungsart somit einen bildgebenden energieauflösenden Zeilendetektor erhält. Alternativ wäre es auch möglich durch eine Pixelierung in allen drei Dimensionen (x, y, z) einen bildgebenden energieauflösenden Flächendetektor zu erhalten.

Des Weiteren sei angemerkt, dass in Fig. 1b die Röntgenstrahlung, die sich entlang der y-Richtung erstreckt, mit dem Bezugszeichen 18' versehen ist. Die Röntgenstrahlung 18' trifft auf die Sensorzellen 12d', 14d' und 16d' auf bzw. durchdringt den Röntgendetektor 10' entlang dieser Sensorelemente 12d', 14d' und 16d' (vgl. Pfad 19'). Zur besseren Illustration sind die entsprechenden Sensorzellen markiert.

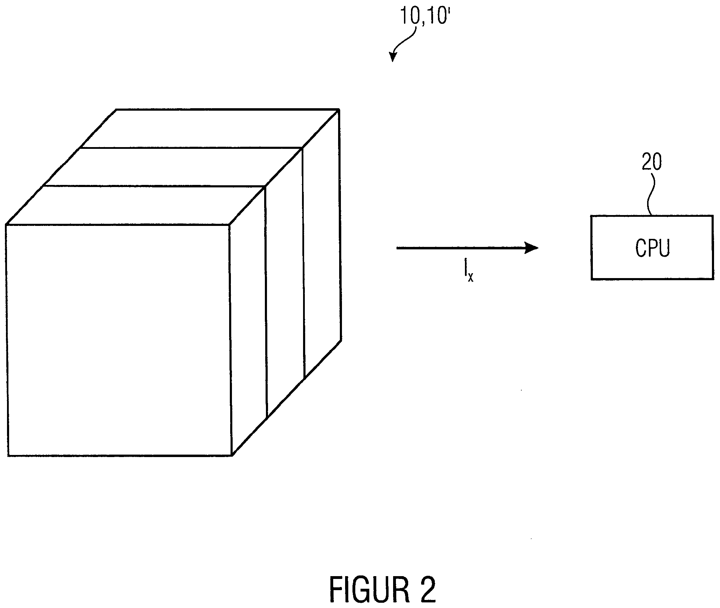

Der Röntgendetektor 10' wird seitlich so eingestellt, dass in y-Richtung Informationen zur Energiedeposition entlang des Eindringpfades 18 gesammelt werden. Mit dem dargestellten Detektor 10' ist nun abhängig von dem jeweiligen Auswerteverfahren bzw. von der jeweiligen Auswertelogik eine Anpassung an unterschiedliche Anwendungen möglich. So kann beispielsweise eine Eigenschaft eines Durchstrahlungsobjekts auf Basis des Verlaufs der Energiedeposition über die Eindringtiefe bestimmt werden. Des Weiteren ist es möglich, geometrische Einflüsse bzw. geometrische Parameter des Röntgensystems zu bestimmen. Hierzu kann z.B. der Entstehungsort der Strahlung genau bestimmt werden, um beispielsweise ein Röhren-Detektor-System exakt aufeinander zu justieren. Auf derartige Beispiele wird im Folgenden näher eingegangen. Vorher sei allerdings angemerkt, dass ein weiteres Ausführungsbeispiel sich auf ein Röntgensystem, wie es in Fig. 2 dargestellt ist, bezieht.

Fig. 2 zeigt einen Röntgendetektor 10 bzw. 10', der dazu ausgebildet ist, Sensorsignale $I_x$ an eine Auswerteeinheit 20, die beispielsweise einen CPU umfassen kann, auszugeben. Die Auswerteeinheit führt zumindest eines der im Folgenden näher beschriebenen Verfahren durch, wobei das zentrale Verfahren die Schritte des Ermittelns eines Verlaufs einer Energiedeposition über die Eindringtiefe y durch die mindestens drei Sensorschichten 12, 14, 16 bzw. 12', 14' und 16' auf Basis der Sensorsignale $I_x$ der Sensorzellen 12a, 14a und 16a bzw. 12a' bis 12i', 14a' bis 14i' und 16a' bis 16i' der mindestens drei Sensorschichten 12, 14, 16 bzw. 12', 14' und 16' umfasst. Das Verfahren umfasst ferner den Schritt des Bestimmens der Eigenschaft des Objekts und/oder der Eigenschaft des Durchstrahlungssystems auf Basis des vorbestimmten Verlaufs der Energiedeposition.

Dieser Schritt des "Bestimmens" kann entsprechend weiteren Ausführungsbeispielen beispielsweise das Ermitteln der Koeffizienten zweier e-Funktionen, die bis zu sechs Koeffizienten umfassen können umfassen. Die zwei e-Funktionen beschreiben den Verlauf der Energiedepositionen für zwei Bereiche, nämlich den Bereich von Eindringtiefe t = 0 bis Eindringtiefe zu dem Ort, an dem die Intensität maximal ist $t_{max}$ und für den Bereich zwischen der maximalen Intensität $t_{max}$ bis zur maximalen Eindringtiefe (Detektorende). Die e-Funktionen lauten:

$$\text{für } t = 0 \text{ bis } t = t_{Imax}: \quad I_{dep\_r}(t) = I_{max} - I_{hub}\, e^{-\mu_r t},$$

$$\text{für } t = t_{Imax} \text{ bis } t = t_{max}: \quad I_{dep\_f}(t) = I_y\, e^{-\mu_f t},$$

Hierbei ist $\mu_r$ ein den aufklingenden Bereich t = 0 bis $t_{max}$ beschreibender Koeffizient, $I_{max}$ der maximale

Intensitätseintrag oder ein auf den Ursprungsintensitätseintrag oder ein auf den absoluten Intensitätseintrag oder den absoluten Ursprungsintensitätseintrag $I_0$ normierter Intensitätseintrag ist. $I_{hub}$ beschreibt die Intensitätsdifferenz zwischen der Oberflächenintensität und dem maximalen Intensitätseintrag oder eine auf der Ursprungsintensitätsdifferenz oder eine auf den absoluten Intensitätseintrag oder den absoluten Ursprungsintensitätseintrag normierte Intensitätsdifferenz ist, $\mu_f$ ein den abklingenden Bereich $t = t_{Imax}$ bis $t_{max}$ beschreibender Koeffizient, $t_{Imax}$ die Tiefenposition des maximalen Intensitätseintrags, und $I_y$ ein Energieeintrag oder ein auf den Ursprungsintensitätseintrag oder ein auf den absoluten Ursprungsintensitätseintrag normierten Energieeintrag. Es sei angemerkt, dass im nicht beanspruchten Fall, wenn die Strahlung 18 zu niederenergetisch ist (ca. < 400 keV) ein Sonderfall vorliegt, so dass dann das Maximum an der Position $t = 0$ liegt und die erste Gleichung damit entfällt.

Nachfolgend werden das Verfahren und insbesondere der Hintergrund des Verfahrens im Detail beschrieben.

Das Verfahren bzw. die Auswertemethodik beruht auf der durch Röntgenstrahlung hervorgerufenen Energiedeposition entlang des Eindringpfades in einem Detektormaterial. Der Verlauf der Energiedeposition ist hierbei vom Spektrum der Röntgenstrahlung und dem Detektormaterial abhängig. Das Spektrum wiederum, ist abhängig von der Röntgenquelle, möglichen Filtermaterialien im Strahlengang und schließlich dem Messobjekt. Da das Spektrum der Röntgenquelle und der Einfluss der Filtermaterialien als bekannt und konstant angenommen werden können, lässt sich durch die Veränderungen in der Energiedeposition entlang des Eindringpfades auf das Messobjekt rückschließen.

Wie herausgefunden wurde, lassen sich insgesamt drei charakteristische Merkmale in der Energiedeposition feststellen, die sich zur Gewinnung von Informationen über das Röntgenspektrum nutzen lassen:

1. Die Abschwächung der Röntgenstrahlung durch das Detektormaterial, bzw. deren Energieverlust über die Eindringtiefe hinweg, kann auf Grundlage des Lambert-Beerschen-Gesetzes beschrieben werden. Dabei folgt die Abschwächung der Röntgenstrahlung, d.h. der Dosisverlust über die Eindringtiefe hinweg, einem exponentiell abfallenden Verlauf, welcher charakteristisch für die Photonenenergie und das Detektormaterial ist. Es ist jedoch zu beachten, dass dieser Dosisverlust nicht der deponierten Dosis im Detektormaterial entspricht.

2. Die bei der Wechselwirkung der Röntgenphotonen mit dem Detektormaterial entstehenden Elektronen und Sekundärteilchen haben eine energieabhängige Reichweite und Vorzugsrichtung. Das heißt, an einem Wechselwirkungsort wird nicht die gesamte Energie deponiert, sondern es erfolgt eine räumliche Deposition im Detektormaterial. Im Allgemeinen gilt, desto höher die Röntgenphotonenenergie, desto weitreichender und vorwärts gerichteter dieser Effekt. Dies führt dazu, dass bei hohen Energien in den ersten Detektorschichten zwar bereits Röntgenstrahlung wechselwirkt, die Energiedeposition jedoch noch mit der Eindringtiefe ansteigt. Ab einer gewissen (ebenfalls energieabhängigen) Eindringtiefe stellt sich annähernd ein Gleichgewicht zwischen wechselwirkender Strahlung und deponierter Energie ein und der exponentiell abfallende Verlauf nach 1. (Lambert-Beer'sches-Gesetz) zeigt sich.

3. Über das Verhältnis von gesamter deponierter Energie im Detektor mit und ohne Messobjekt lässt sich eine Information über das absolute Schwächungsverhalten des Messobjektes gewinnen.

Mit Hilfe dieser drei Merkmale ist es möglich über die Energiedeposition, entlang der Eindringtiefe im Detektor, Informationen über das Röntgenspektrum zu gewinnen, mit denen dann wiederum auf die Materialien im Strahlengang zurückgeschlossen werden kann. Zunächst soll mit der Hilfe des Lambert-Beerschen-Gesetzes die Abschwächung der Röntgenstrahlung über die Eindringtiefe hinweg beschrieben werden.

Nach dem Lambert-Beerschen-Gesetz gilt allgemein für monoenergetische Strahlung:

$$I_1 = I_0\, e^{-\mu d}$$

Dies sagt aus, dass die Ursprungsintensität $I_0$ hinter einem Objekt, aus einem Material mit dem Schwächungskoeffizienten $\mu$ und einer Dicke $d$, auf eine Intensität $I_1$ abgeschwächt ist. Der Schwächungskoeffizient ist material- und auch energieabhängig. Auch ist es möglich, dass sich der totale Schwächungskoeffizient aus den Schwächungskoeffizienten mehrerer Materialien der (mit der Anzahl n) zusammensetzt.

$$I_1 = I_0\, e^{\sum_n -\mu_n d_n}$$

Die Differenz zwischen der Ursprungsintensität $I_0$ (bzw. der Eingangsdosis) und der Ausgangsintensität $I_1$ (bzw. Ausgangsdosis) ist dabei nicht gleichzusetzen mit der deponierten Intensität bzw. Dosis im Objekt. Dies liegt an der Reichweite der entstehenden Sekundärteilchen, die z.B. auch aus dem Objekt herausgestreut werden können.

Für den Fall, dass das Objekt ein Detektormaterial ist und um den Verlauf der deponierten Intensität in diesem Detektormaterial beschreiben zu können, ist es also nötig zu wissen, mit welchem Verhalten die eintreffende Intensität abgeschwächt wird, als auch welchen Einfluss die Reichweite der Sekundärteilchen haben.

Zur Herleitung der Funktion mit der die Röntgenstrahlung über die Eindringtiefe t im Detektormaterial hinweg abgeschwächt wird, soll zunächst von monoenergetischer Strahlung und einem einzigen Detektormaterial ausgegangen werden. Generell gilt, dass die vorderen Schichten des Detektors für die hinteren Schichten als abschwächendes Objekt wirken und daher keine homogene Abschwächung im Detektormaterial erwartet werden kann.

Die insgesamt abgeschwächte Intensität bzw. Dosis $I_{verlust\_gesamt}$ im Detektormaterial (mit einer Tiefe $t_{ges}$) lässt sich wie folgt beschreiben:

$$I_{verlust\_gesamt} = I_0 - I_1 = I_0(1 - e^{-\mu t_{ges}})$$

Das bedeutet, die Differenz zwischen der Ursprungsintensität $I_0$ und der Ausgangsintensität $I_1$, nach einem Detektormaterial mit dem Schwächungskoeffizienten $\mu$ und der Gesamtdicke $t_{ges}$, ist die totale abgeschwächte Intensität $I_{verlust\_gesamt}$.

Die Funktion $I_{verlust}(t)$ mit der die Intensität über die Eindringtiefe t eines Detektors (mit einer Gesamtdicke $t_{ges}$) hinweg verringert wird, lässt sich durch die Ableitung von $I_{verlust\_gesamt}$ beschreiben:

$$I_{verlust}(t) = \dot{I}_{verlust\_gesamt} = \mu I_0 e^{-\mu t} = \mu I_1$$

Somit ist der Intensitätsverlust über die Eindringtiefe eine exponentiell abfallende Funktion mit einem detektormaterial- und energieabhängigen Schwächungskoeffizienten $\mu$, normiert auf einen Faktor, aus der Ausgangsintensität und dem Schwächungskoeffizienten. Zur Bestimmung der Intensitätsverluste in einem diskreten, d.h. pixellierten Detektor ist es nötig, das bestimmte Integral über die Pixelgrenzen a und b zu bilden, wobei hier die Grenzen in Richtung der Eindringtiefe gemeint sind und nicht die zu den Nachbarpixeln.

$$I_{ab} = \int_a^b I_{verlust}(t)dt = \mu I_0 \left[-\frac{1}{\mu}e^{-\mu t}\right]_a^b = I_0(e^{-\mu a} - e^{-\mu b})$$

Trägt man nun die diskreten Dosisverluste pro Pixel gegen die Eindringtiefe auf, so bekommt man folgenden Verlauf:

$$I(n) = I_0\left(e^{-\mu n p} - e^{-\mu(n+1)p}\right) = I_0(1 - e^{-\mu p})e^{-\mu n p}$$

Wobei p der Pixelpitch in Richtung der Eindringtiefe ist und n die Pixelnummer für die gilt:
n = 0, 1, 2, 3, ...

Nach den obigen Gleichungen besitzt der Dosisabfall somit im kontinuierlichen als auch im diskreten Detektorsystem den gleichen relativen, exponentiell abfallenden, Verlauf. Lediglich der Normierungsfaktor unterscheidet sich.

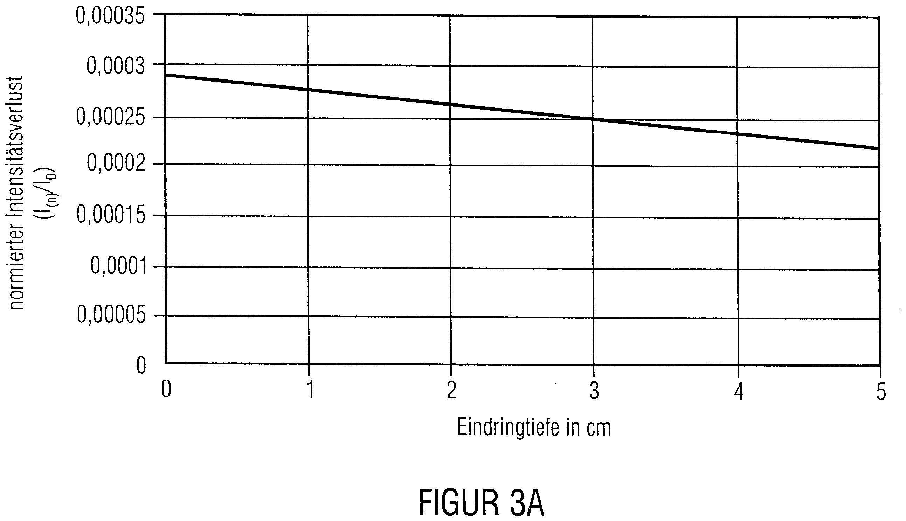

Fig. 3a zeigt beispielhaft den auf die Eingangsintensität normierten Intensitätsverlust über die Eindringtiefe in einem Siliziumsensormaterial bei 50 $\mu$m Pixelpitch und 9 MeV monochromatischer Bestrahlung. Der Verlauf fällt dabei exponentiell (mit dem Schwächungskoeffizient von Silizium bei 9 MeV) nach folgender Formel ab:

$$\frac{I(n)}{I_0} = 0{,}00029e^{-0{,}05825n}$$

Das Integral über die Kurve in Fig. 3a ist ca. 0,25, was bedeutet dass durch die 5 cm Silizium insgesamt ca. 25% der Eingangsintensität abgeschwächt werden.

Würde die gesamte Energie am Ort der Abschwächung deponiert werden, ergäbe sich ein Energiedepositionsverlauf, wie in Fig. 3a dargestellt. Da allerdings die erzeugten Sekundärteilchen mit einer gewissen Verteilungsfunktion $\gamma(x)$ die abgeschwächte Dosis als eingetragene Energie im Detektor deponieren, ist kein solches Verhalten zu erwarten. Diese Verteilungsfunktion beschreibt, wie die Energie örtlich, vom Ort der Wechselwirkung bzw. Abschwächung ausgehend, deponiert wird. Sie ist material- und energieabhängig und wird im Wesentlichen von den Anteilen der physikalischen Wechselwirkungsarten und deren Streuverhalten, der energieabhängigen Reichweite der Sekundärelektronen zusammen mit der Objekt- bzw. Detektorgeometrie bestimmt.

Im Folgenden sollen die drei relevanten stattfindenden Wechselwirkungsarten von Röntgenstrahlung mit dem Sensormaterial, sowie die Reichweite der Sekundärelektronen im Sensormaterial kurz erläutert werden:
Bei niederenergetischen Röntgenphotonen ist vor allem der Photoeffekt relevant. Das erzeugte Sekundärelektron übernimmt bis auf die Bindungsenergie des herausgeschlagenen Elektrons die vollständige Energie des Röntgenphotons und deponiert diese relativ nahe dem Wechselwirkungsort, womit die entstehende Signalaufstreuung gering bleibt. Mit ansteigender Röntgenphotonenenergie verliert der Photoeffekt an Bedeutung und der Anteil der Comptonstreuung nimmt immer weiter zu und dominiert schließlich. Bei der Comptonstreuung überträgt das Röntgenphoton nur einen Teil seiner Energie an ein Sekundärelektron und setzt dann seinen Weg durch das Detektormaterial unter einem anderen Winkel fort. Das gestreute Röntgenphoton kann nun an anderer (ggf. weit entfernter) Stelle im Detektor wieder wechselwirken und so zu einer weitreichenden Aufstreuung führen. Insgesamt fällt damit das Verhältnis zwischen deponierter Energie in der Nähe des ersten Wechselwirkungsortes und dem Signalaufstreuungsanteil somit geringer aus, als beim Photoeffekt.

Bei noch höheren Photonenenergien (> 1,022 MeV) kann die sogenannte Paarbildung stattfinden. Wie beim Photoeffekt wird auch hier wieder die gesamte Energie (in Form von Masse und kinetischer Energie) auf die zwei, hier neu entstehenden Sekundärteilchen (ein Positron und ein Elektron) übertragen. Es findet wieder ein kontinuierlicher Energieeintrag in der Nähe des Wechselwirkungsortes statt, wobei das Positron annihiliert und zwei, mit 511 keV relativ kurzreichweitige Röntgenphotonen entstehen können. Insgesamt fällt das Verhältnis zwischen Energieeintrag in der Nähe der Wechselwirkung und dem Signalaufstreuungsanteil somit wieder größer aus, als beim Compton-Effekt.

Mit den genannten physikalischen Effekten lässt sich statistisch beschreiben, wo Sekundärelektronen entstehen können und welche Energie sie dabei haben können. Diese Sekundärelektronen haben eine hohe kinetische Energie und bewegen sich durch das Sensormaterial, wobei sie auf ihren Wegen kontinuierlich Energie verlieren und dabei geladene Teilchen, wie z.B. Elektronen-Loch-Paar-Wolken in einem Halbleitermaterial, erzeugen. Diese geladenen Teilchen stellen letztendlich das messbare Signal im Sensor dar. Die entstandenen Sekundärelektronen besitzen dabei eine material- und energieabhängige Reichweite. Annäherungsweise lässt sich diese Reichweite durch die sogenannte Continuous-Slowing-Down-Approximation (CSDA) bestimmen. Hierfür wird vereinfacht von einem gleichmäßig wirkenden Bremsvermögen auf das Elektron entlang des Eindringpfades ausgegangen. Schwankungen im Energieverlust entlang des Pfades werden hierbei vernachlässigt. Diese Methode kommt der Realität sehr nahe, da diese Fluktuationen in der Regel gering ausfallen.

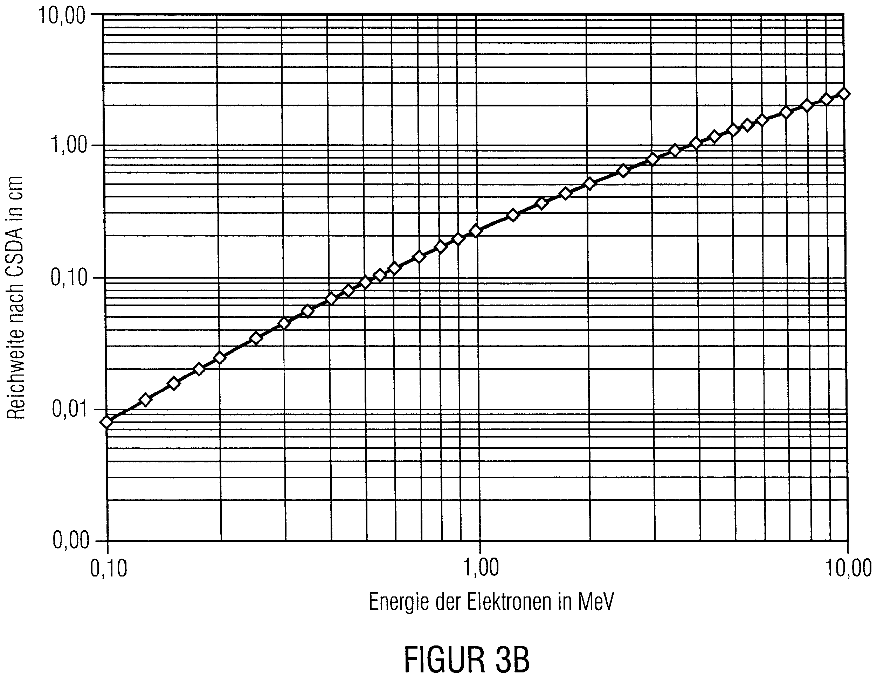

Fig. 3b zeigt die mittels CSDA berechnete Reichweite der Elektronen in einem Siliziumsensormaterial. Ein Elektron mit 500 keV Energie hat beispielsweise eine Reichweite von etwa 0,9 mm.

Der Energieeintrag über die Eindringtiefe hinweg stellt schließlich eine Überlagerung aller genannten Effekte dar. Um die Funktion der Tiefendosisverteilung $I_{dep}(t)$ zu erhalten, muss die Funktion der Intensitätsabschwächung $I_{verlust}(t)$ mit der Verteilungsfunktion $\gamma(x)$ gefaltet werden:

$$I_{dep}(t) = I_{verlust}(t) * \gamma(x)$$

Das Ergebnis solch einer Faltung bekommt man z.B. durch Simulation des Energieeintrags in einem bestrahlten Detektormaterial.

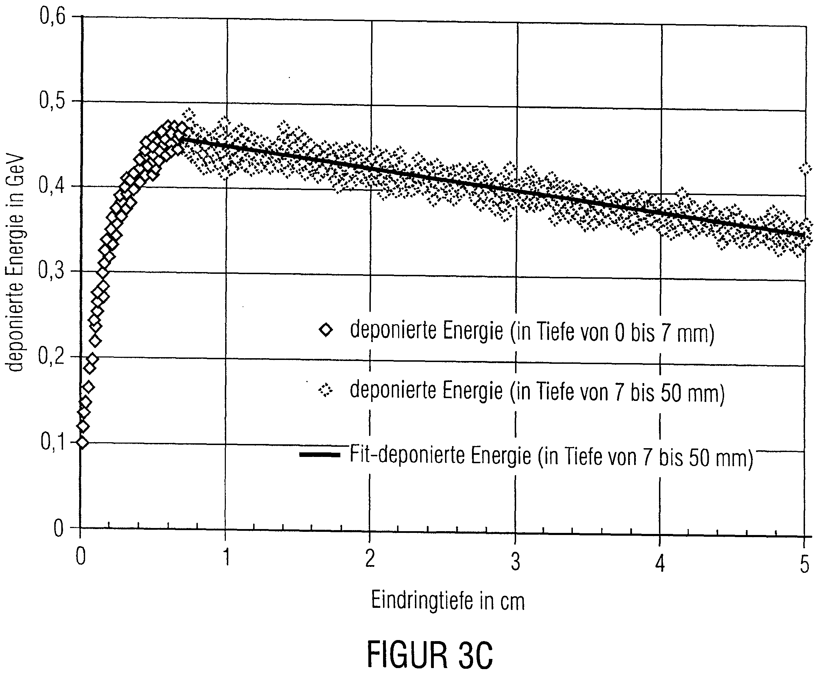

Fig. 3c zeigt beispielsweise, die mittels Monte-Carlo-Simulation ermittelte Energiedeposition entlang der Eindringtiefe für ein Siliziumdetektormaterial und monochromatischer Bestrahlung mit 9 MeV Photonenenergie. Simuliert wurden eine Million 9 MeV Röntgenquanten. Wie zu sehen ist, steigt die deponierte Energie im Detektor zunächst stark an, bevor sie ein Maximum erreicht und anschließend wieder abfällt. Zur Verdeutlichung wurden die simulierten Daten in zwei Farben eingeteilt: das ansteigende Verhalten ist grün, das abfallendes Verhalten blau, eingezeichnet. Die Fitfunktion für den abfallenden Verlauf hat dabei folgende Parameter:

$$I_{dep\_f}(n) = 0{,}47763 e^{-0{,}06043n} \, [GeV]$$

Was bei dieser Simulation auffällt, ist das der abfallende Verlauf der Energiedeposition ebenso einer abfallenden e-Funktion, wie der des abgeschwächten Intensitätsverlaufs nach Lambert-Beer entspricht. Wobei der festgestellte Abfallkoeffizient (0,060 1/cm), im folgendem $\mu_f$ genannt, dem Schwächungskoeffizient (0,058 1/cm) von Silizium bei 9 MeV sehr ähnlich ist.

Mathematisch lässt sich der Verlauf wie folgt beschreiben:

$$I_{dep\_f}(t) = I_\gamma e^{-\mu_f t}$$

Die Werte des Abfallkoeffizienten $\mu_f$ und des Schwächungskoeffizienten stimmen nicht exakt überein, da die Funktion der abgeschwächten Dosis auf Grund der Faltung mit der Verteilungsfunktion verzerrt wird. Die Übereinstimmung ist dabei abhängig von der Röntgenphotonenenergie und dem Detektormaterial. Als Richtwert gilt, je steiler die Funktion der abgeschwächten Dosis, desto größer die Abweichung. Durch die Pixelgröße und ebenfalls durch die Faltung mit der Verteilungsfunktion wird die Höhe des absoluten Intensitätseintrags $I_\gamma$ beeinflusst.

Generell lässt sich feststellen, dass der abfallenden Energiedepositionsverlauf für alle Röntgenphotonenenergien auftritt und sich nach der obigen Funktion mathematisch beschreiben lässt. Zwischen den Verläufen der abfallenden deponierten Energiekurven und der Röntgenphotonenenergie besteht dabei ein proportionaler Zusammenhang. Mit dessen Hilfe lassen sich über das Energiedepositionsverhalten, Rückschlüsse auf die Röntgenphotonenenergie ziehen.

Für den ansteigenden Energiedepositionsverlauf ist die Verteilungsfunktion $\gamma(x)$ verantwortlich. Wie beim abfallenden Energiedepositionsverlauf, zeigte sich auch für den ansteigenden Verlauf, dass sich dieser durch eine mathematische Funktion nachbilden lässt:

$$I_{dep\_r}(t) = I_{max} - I_{hub} e^{-\mu_r t}$$

$I_{max}$ entspricht dabei dem auftretenden Intensitätsmaximum im Detektor. $I_{hub}$ ist ein Faktor der nötig ist, da die Exponentialfunktion nicht im Nullpunkt sondern mit einem Offset startet, da an der Detektoroberfläche bereits Dosis deponiert wird. Über die Subtraktion von $I_{max}$ und $I_{hub}$ lässt sich diese Oberflächendosis berechnen. $\mu_r$ ist der Koeffizient der e-Funktion, der die Steilheit der Funktion beschreibt. t entspricht wie beim abfallenden Verhalt der Eindringtiefe.

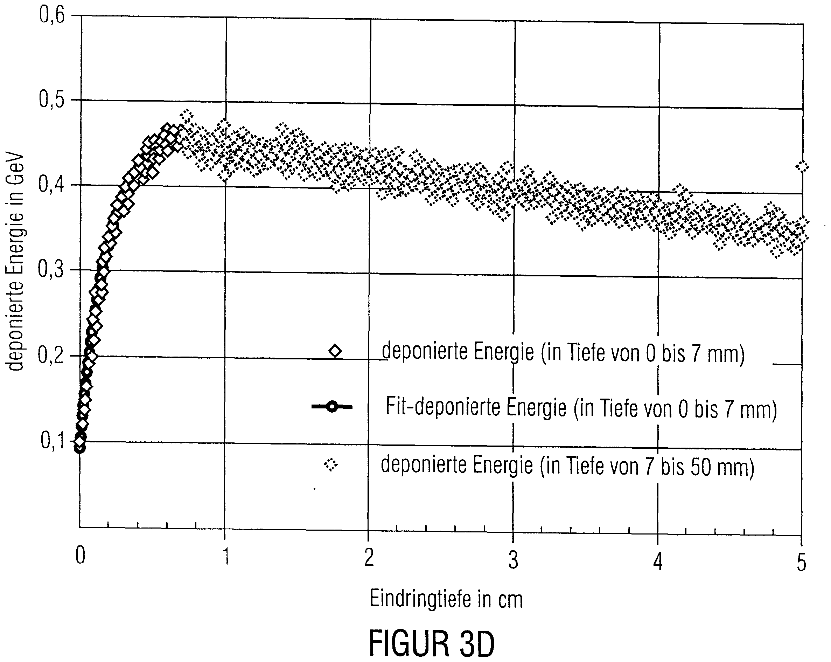

Fig. 3d zeigt das gleiche Simulationsergebnis wie Fig. 3c, jedoch ist hier der Fit, bzw. die mathematische Nachbildung, des ansteigenden Energie Verhaltens mit eingezeichnet. Die Fitfunktion hat dabei folgende Parameter:

$$I_{dep\_r}(n) = 0{,}47 - 0{,}38 e^{-5{,}26n} \, [GeV]$$

Im Gegensatz zum abfallenden Verlauf, benötigen die Röntgenphotonen jedoch mindestens eine Grenzenergie von etwa 400 keV, damit ein ansteigender Effekt beobachtbar ist. Dies resultiert aus der energieabhängigen Vorzugsrichtung der Verteilungsfunktion $\gamma(x)$. Unterhalb dieser Energie ist noch kein Dosisaufbaueffekt sichtbar, bzw. nur sehr oberflächennah und daher kaum wahrnehmbar und messbar. Das bedeutet, dass sich das Verhalten der ansteigenden Energiedeposition erst ab höheren Energien (> 400 keV) zu Nutze gemacht werden kann.

Neben dem Koeffizienten der e-Funktionen, sagen außerdem der Ort (Eindringtiefe) des Energiemaximums und die Höhe der Oberflächendosis etwas über die Energie der eintreffenden Röntgenphotonen aus.

Die mathematischen Nachbildungsmodelle für die den ansteigenden, als auch den abfallenden, Energiedepositionsverlauf lassen sich auch auf die Energieeinträge bei polychromatischer Bestrahlung anwenden. Die Überlagerung vieler e-Funktionen führt hier zu einer Summenfunktion, welche sich ebenfalls gut durch eine e-Funktion beschreiben lässt. Der Grund hierfür liegt darin, dass bereits bei monochromatischer Bestrahlung mit Röntgenstrahlung, polychromatische Sekundärteilchenenergien vorhanden sind, deren Einträge aufsummiert werden. Bei der polychromatischen Bestrahlung mit Röntgenstrahlung verändern sich lediglich die Zusammensetzung und Anteile der polychromatischen Sekundärteilchenenergien.

Der große Unterschied zwischen monochromatischer und polychromatischer Bestrahlung liegt darin, dass die Verteilungsfunktion $\gamma(x)$ nun nicht mehr über die Detektortiefe hinweg konstant ist. Auf Grund der detektorinternen Strahlaufhärtung verändert sich die Zusammensetzung des Spektrums über die Eindringtiefe und damit auch die Verteilungsfunktion. Diese Änderung der Verteilungsfunktion ist dabei jedoch nicht nur vom Ausgangsspektrum, sondern auch vom Messobjekt abhängig und ermöglicht damit eine energieauflösende Bildgebung über die Eindringtiefe, auch bei polychromatischer Bestrahlung.

Gebräuchliche Mehrenergieverfahren, basierend auf integrierenden Detektoren, beruhen darauf das gemessene Signal hinter dem Objekt mit dem ungeschwächten Primärsignal in Relation zu setzen. Dieser Schritt wird für unterschiedliche Spektren mehrfach wiederholt. Mit dem gemessenen Schwächungsverhalten, in Abhängigkeit der bekannten effektiven Energien der Spektren, kann anschließend auf die Objektzusammensetzung zurückgeschlossen werden.

Die Information der absoluten Signalhöhe, also das gemessene Signal hinter dem Objekt in Relation zu dem ungeschwächten Primärsignal, wird auch in der vorgeschlagenen Methodik benutzt und verwertet. Jedoch ist eine mehrfache Aufnahme unter unterschiedlichen Spektren nicht nötig, da zusätzliche Informationen zur Verfügung stehen und direkt Rückschlüsse auf die Objektzusammensetzung erlauben.

Insgesamt werden fünf, unter Umständen auch unabhängige, Ausführungsbeispiele bzw. Anwendungen der beschrieben Erkenntnisse vorgestellt.

    1. Detektor zur Bestimmung der für das Spektrum charakteristischen Parameter
    2. Optimierter Detektor (mit wenigen Schichten) basierend auf den Spektrum charakterisierenden Parametern
    3. Gewinnung von Energieinformation des Röntgenspektrums über den deponierten Signaleintrag orthogonal zur Eindringrichtung der Strahlung
    4. Detektor zur Lokalisierung der Strahlungsquelle
    5. Erhöhung der Ortsauflösung (durch erhöhte Abtastung) durch relativen Versatz der Detektorschichten

Wie oben vorgestellt, ist es möglich den Energiedepositionsverlauf über die Eindringtiefe hinweg mathematisch zu beschreiben. Dabei stehen die gemessenen Parameter in Zusammenhang mit dem zu Grunde liegenden Spektrum und ermöglichen somit Rückschlüsse auf dieses. Hierfür ist jedoch eine feine Abtastung in Richtung der Eindringtiefe nötig. Das heißt, der Detektor benötigt eine ausreichende Menge an Pixeln (passender Abmessungen) in dieser Richtung.

Um mit solch einem Detektor energie- bzw. materialauflösend arbeiten zu können, ist es zunächst nötig, den Zusammenhang zwischen den gemessenen Parametern und dem zu Grunde liegenden Spektrum zu charakterisieren. Hierzu kann zunächst eine Datenbank mit Referenzdatensätzen erstellt werden. Dies kann z.B. durch (Monte-Carlo-)Simulation oder Messung geschehen. Anhand einer Reihe von Messungen bzw. Simulationen mit unterschiedlichen Objektmaterialien und -stärken (z.B. Stufenkeile) lässt sich die Datenbank füllen. Mit der Hilfe einer Referenzmessung ohne Messobjekt und dem Rohspektrum gewinnt man zusätzlich Informationen über den Energieeintrag des Rohspektrums ohne Objekt.

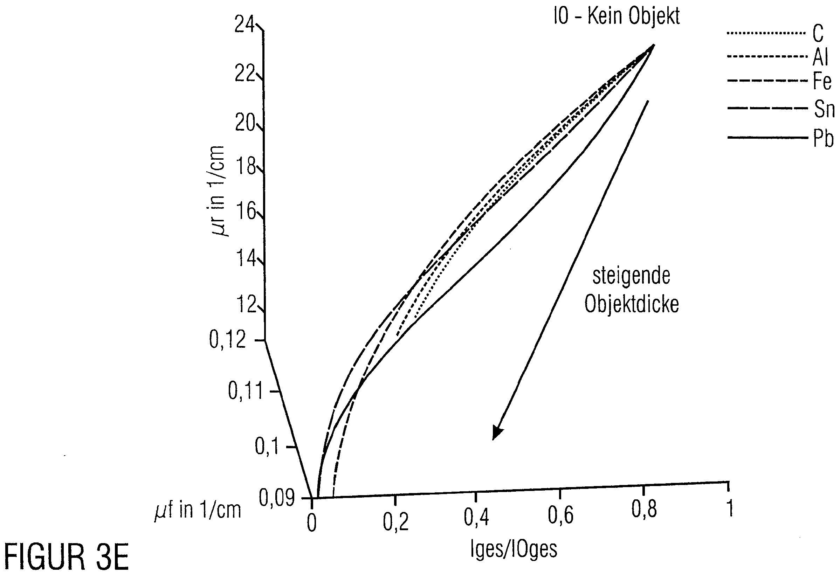

Fig. 3e zeigt simulativ ermittelte, für das Spektrum charakteristische Paramater ($\mu_r$ = Koeffizient der aufklingenden e-Funktion, $\mu_f$ = Koeffizient der abfallenden e-Funktion, I-ges/I0ges = Absoluter auf I0 normierter Energieeintrag), für unterschiedliche Objektmaterialien (Kupfer, Aluminium, Eisen, Zinn und Blei) ansteigender Dicken, für ein Siliziumsensormaterial und ein 9 MV Linearbeschleunigerspektrum.

Beispielshaft ist solch eine Datenbank mit drei der für das Spektrum charakteristischen Parametern ($\mu_r$ = Koeffizient der aufklingenden e-Funktion, $\mu_f$ = Koeffizient der abfallenden e-Funktion, $I_{ges}/I_{0ges}$ = Absoluter auf $I_0$ (d.h. kein Objekt) normierter Energieeintrag) in Fig. 3e, für verschiedenen Objektmaterialien, als 3D-Plot dargestellt. Die Parameter der Oberflächendosis und Maximumsposition sind darüber hinaus auch noch in der Datenbank vorhanden.

Deutlich ist in Fig. 3e zur Erkennen, wie alle Kurven aus einem Punkt hervorgehen (Objektdicke = 0 cm) und mit steigender Objektdicke auseinanderlaufen. Da die Kurven keine Schnittpunkte im dreidimensionalen Raum besitzen, ist prinzipiell immer eine eindeutige Bestimmung von Objektmaterial und -dicke gegeben. Die Kennlinien von Objekten, welche aus mehreren Materialien zusammengesetzt sind, liegen je nach Zusammensetzung und effektiver Kernladungszahl zwischen den gezeigten Kurvenverläufen.

Fig. 3e zeigt die physikalische Machbarkeit, dass charakteristische Informationen über die Objekte anhand der Energieeinträge über die Eindringtiefe vorhanden sind. Wie gut und mit welcher Genauigkeit diese Information entnommen werden kann, hängt von dem Ausgangsspektrum der Quelle und einer eventuellen Vorfilterung, dem Detektoraufbau (Pixelgröße, Sensormaterial und -dicke) und der zur Verfügung stehenden Integrationszeit ab. Der Detektor kann also so aufgebaut/entworfen werden, dass er möglichst allgemein einsetzbar ist oder aber auf bestimmte Rahmenbedingungen (z.B. ein definiertes Messspektrum) hin optimiert werden.

Der Detektor kann auch aus mehreren unterschiedlichen Sensormaterialien bestehen. So könnte es z.B. sinnvoll sein, für den ersten Detektorbereich ein Sensormaterial niedriger Kernladungszahl und Dichte zu wählen, damit die Reichweite der Sekundärteilchen möglichst groß ist und somit die aufklingende Konstante gut bestimmt werden kann.

Da die direkte Bestimmung der für das Spektrum charakteristischen Parameter sehr viele Schichten bzw. Pixel benötigt, fällt der Signalanteil pro Pixel gering aus, was zu längeren Integrationszeiten oder geringeren Signal-Rausch-Verhältnissen führt. Zudem ist auch ein hoher Aufwand im mechanischen Aufbau, in der elektrischen Detektion und Signalwandlung (viele Sensorelemente und Digitalisierungselemente), sowie der Informationsverarbeitungskette gegeben.

Im Folgenden wird ein optimierter Detektor vorgestellt, der auf der Bestimmung der für das Spektrum charakteristischen Parameter basiert, dabei aber möglichst wenige Schichten besitzen soll.

Solch eine auf Messzeit und Umsetzungsaufwand optimierte Bauart, stellt einen Detektor mit lediglich drei Schichten dar. Dabei werden die drei Bereich so gewählt, dass möglichst viel Information über die das Spektrum charakterisierenden Parameter gemessen werden kann.

Fig. 3f zeigt den Verlauf der deponierten Energie über die Eindringtiefe in einem Siliziumsensormaterial bei 9 MeV monochromatischer Bestrahlung. Hierbei sind als schwarze Striche die Grenzen der drei Bereiche des Sensormaterials eingezeichnet. Diese Positionen entlang der Eindringtiefe stellt ein Beispiel, wie die Wahl der drei Schichten erfolgen könnte, dar. Mit der Summe der Signale aus Schicht 1 relativ zur Summe der Signale aus Schicht 2 kann eine Aussage über den Verlauf der aufklingenden e-Funktion getroffen werden. Die Summe der Signale aus Schicht 3 relativ zu der Summe der Signale aus Schicht 2 liefert dagegen eine Aussage über den Verlauf der der abfallenden e-Funktion. Schicht 2 selbst liefert zudem noch eine gute Aussage über den absoluten Energieeintrag. Wobei hierzu auch alle drei Schichten herangezogen werden können. Bei lediglich drei Schichten kann nicht direkt auf alle für das Spektrum charakterisierenden Parameter zurückgeschlossen werden, jedoch steckt deren Information implizit in den Verhältnissen der Signale der Schichten zueinander.

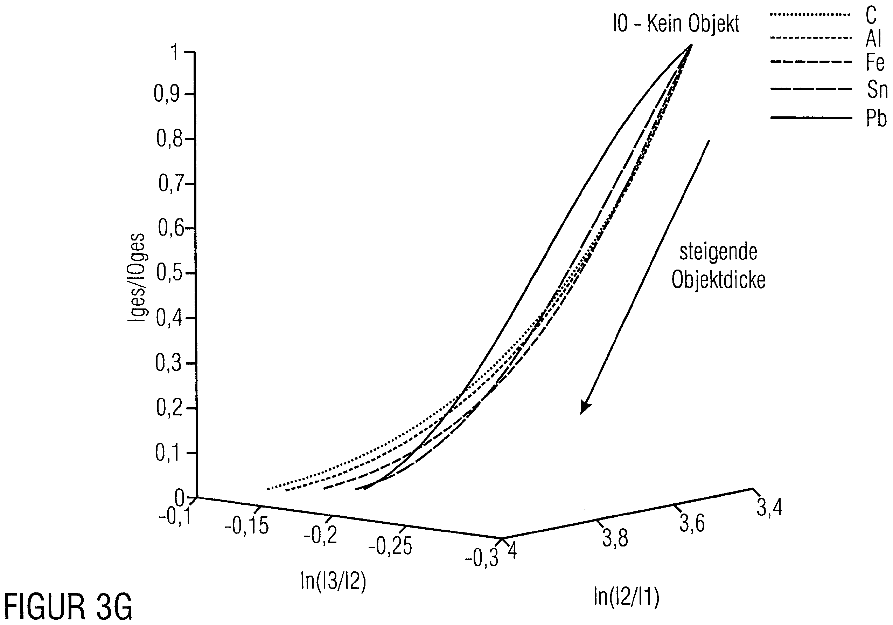

Fig. 3g zeigt ein Diagramm der logarithmierten Intensitätsverhältnisse und normierten Gesamtintensitäten für ein Silizium-Sensormaterial und 9 MV-LinearbeschleunigerSpektrum für verschiedene Objektmaterialien unterschiedlicher Dicke. Im Detail ist dargestellt, wie sich, für unterschiedliche Objektmaterialien, die berechneten logarithmierten Intensitätsverhältnisse und die normierte Gesamtintensität mit ansteigender Objektdicke verändern. I1 entspricht dabei dem Integral der Signaleinträge aus Schicht 1, I2 denen aus Schicht 2 und I3 denen aus Schicht 3. Für Iges wurden die Einträge aller Schichten integriert. Das Verhältnis ln(I2/I1) verhält sich dabei proportional zum Koeffizienten des ansteigenden Verlaufes, das Verhältnis ln(I3/I2) zum Koeffizienten des abfallenden Verlaufs.

Im Diagramm ist deutlich sichtbar, wie sich die Verhältnisse und die Intensität ändern. Hierbei ergeben sich keine Schnittpunkte (außer natürlich im Startpunkt, d.h. ohne Objekt). Dies ermöglicht eine eindeutige Trennung der unterschiedlichen Materialien. Der Unterschied für Materialien stark unterschiedlicher Kernladungszahlen wird besonders gut sichtbar.

Im Gegensatz zu dem beschriebenen Detektor mit drei Schichten ist es mit einem Detektor mit mindestens vier Schichten möglich, auch die für das Spektrum charakteristischen Parameter zu bestimmen.

Der ansteigende Verlauf lässt sich mathematisch, wie bereits erwähnt, nach folgender Formel beschreiben:

$$I_{dep\_r}(t) = I_{max} - I_{hub}\, e^{-\mu_r t}$$

Die gemessene Intensität in einer Schicht (bzw. Pixels) entspricht dabei dem bestimmten Integral mit den bekannten Schichtgrenzen $t_1$ und $t_2$, also:

$$I_{dep\_r}(t) = \int_{t1}^{t2} (I_{max} - I_{hub}\, e^{-\mu_r t})\, dt$$

Diese Formel ist für alle Schichten (bzw. Pixel) gültig, in denen die deponierte Energie entlang des Eindringpfades noch ansteigt, d.h. also in den vorderen Schichten des Detektors. Da die Gleichung insgesamt drei Unbekannt

beinhaltet (maximaler Energieeintrag $I_{max}$, Offsetfaktor $I_{hub}$ und Koeffizient der e-Funktion $\mu_r$), sind mindestens drei dieser Gleichungen nötig, um die Unbekannten mathematisch eindeutig bestimmen zu können. Dies bedeutet also auch, dass mindestens drei Schichten (bzw. Pixel) nötig sind um den ansteigenden Energiedepositionsverlauf vollständig mit seinen für das Spektrum charakteristischen Parameter beschreiben zu können.

Der abfallende Verlauf lässt sich mathematisch nach folgender (ebenfalls bereits genannter) Formel beschreiben:

$$I_{dep\_}f(t) = I_y e^{-\mu_f t}$$

Die gemessene Intensität in einer Schicht (bzw. Pixels) entspricht auch hier dem bestimmten Integral mit den bekannten Schichtgrenzen $t_3$ und $t_4$, also:

$$I_{dep\_}f(t) = \int_{t3}^{t4} I_y e^{-\mu_f t} dt$$

Im Gegensatz zum ansteigenden Energiedepositionsverlauf, besitzt der abfallende Verlauf somit nur die zwei Unbekannten $I_y$ und $\mu_f$. Somit ist es hier bereits mit zwei Schichten (bzw. Pixel)) möglich den abfallenden Energiedepositionsverlauf vollständig mit seinen für das Spektrum charakteristischen Parametern zu beschreiben.

Wie bereits beim Detektoraufbau mit nur drei Schichten ist es möglich, dass eine Schicht sowohl zum Bestimmen des abfallenden, als auch des ansteigenden Verlaufes genutzt werden kann. Hierfür sollte die gemeinsame Schicht idealerweise in der Nähe des Ortes des maximalen Energieeintrages liegen, um eine möglichst gute Aussage über die Höhe des maximalen Energieeintrags zu liefern. Diese Information ist für die mathematische Bestimmung beider Verläufe notwendig. Anstatt der mindestens fünf nötigen Schichten wird so die Anzahl auf mindestens vier nötigen Schichten reduziert.

Einen Detektor mit mehr als vier Schichten zu verwenden, könnte jedoch sinnvoll sein, um die Fehler in der charakteristischen Parameterbestimmung möglichst gering zu halten, bzw. um einen möglichst flexiblen Detektor, für unterschiedliche Röntgenenergiebereiche, zu erhalten. Die Grenze in Richtung der Eindringtiefe zwischen dem ansteigenden und abfallenden Verlauf entspricht der Position des maximalen Energieeintrags. Da diese Position jedoch vom Spektrum abhängig ist, müsste sie somit auch für jedes Spektrum anders gesetzt werden. Sonst könnte es z.B. passieren, dass bei der Bestimmung der Parameter des ansteigenden Verlaufs, der Signaleintrag bereits durch einen dort einsetzenden abfallenden Verlauf verfälscht würde. Stehen mehrere Schichten zur Verfügung, so ist es möglich zunächst das Maximum des Energieeintrags (bezogen auf die Schichtbreite) zu suchen und dort die Grenze zwischen ansteigenden und abfallenden Verlauf zu setzen, bevor auch die anderen charakteristischen Parameter bestimmt werden.

Wie bereits erwähnt, hängt der Anteil der stattfindenden physikalischen Wechselwirkungen von der Photonenenergie ab, d.h. je nach Photonenenergie ergeben sich auch unterschiedliche Verteilungen der Signaleinträge im Sensormaterial. Dabei unterscheidet sich nicht nur das Verhalten der Energiedeposition in Strahlrichtung von der Röntgenphotonenenergie, sondern auch das Energiedepositionsverhalten orthogonal dazu. Im Gegensatz zu der oben beschriebenen Methode spielt hier die energieabhängige Vorzugsrichtung der gestreuten Sekundärteilchen die wesentliche Rolle. Zusätzlich spielt das ebenfalls material- und energieabhängige Elektronen-Strahlungsbremsvermögen (engl. Stopping Power for Electrons) eine Rolle.

Mit Messung bzw. Miteinbeziehung dieser Information kann die Genauigkeit der Gewinnung von Energieinformationen des Röntgenspektrums daher weiter gesteigert werden. Dafür ist es allerdings nötig die bestrahlte Detektorfläche einzugrenzen, d.h. z.B. dass die auf einen Zeilendetektor einfallende Strahlung so stark einkollimiert wird, dass nur noch ein oder wenige bildgebende Pixel bestrahlt werden.

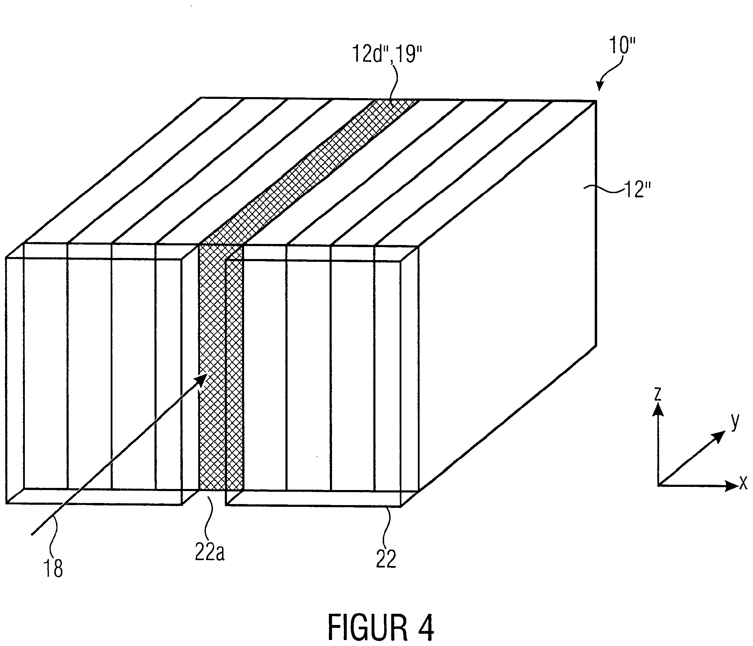

Zur genaueren Untersuchung des Verhaltens wurde eine Simulation durchgeführt. Hierzu wurde ein Zeilendetektor aus Silizium seitlich so bestrahlt, dass lediglich die Fläche eines kompletten Pixels Bestrahlung ausgesetzt war (siehe Fig. 4). Dies lässt sich in der Praxis z.B. durch Kollimation vor dem Detektor umsetzen.

Fig. 4 zeigt schematisch einen Zeilendetektor 10" z.B. aus einem Siliziumsensormaterial, der vom grundsätzlichem Aufbau dem Detektor 10' entspricht, wobei nur die erste Schicht 12" dargestellt ist, da die Schichten 14 und 16 für diese Anwendung einen untergeordnete Rolle spielen. Bestrahlt wurde lediglich der schraffiert markierte Bereich 19" in Richtung 18 der Pixelgeometrie (Richtung y-Achse), der eingezeichnete Rahmen stellt den Kollimator 22 dar, der vor der Schicht 12"angeordnet ist, um die Strahlung auf den schraffierten Bereich 19" des Pixels 12d" zu beschränken.

Untersucht wurde das Aufstreuungsverhalten orthogonal zum Strahleinfall in Abhängigkeit der Röntgenphotonenenergie, normiert auf den Energieeintrag im bestrahltem Pixel.

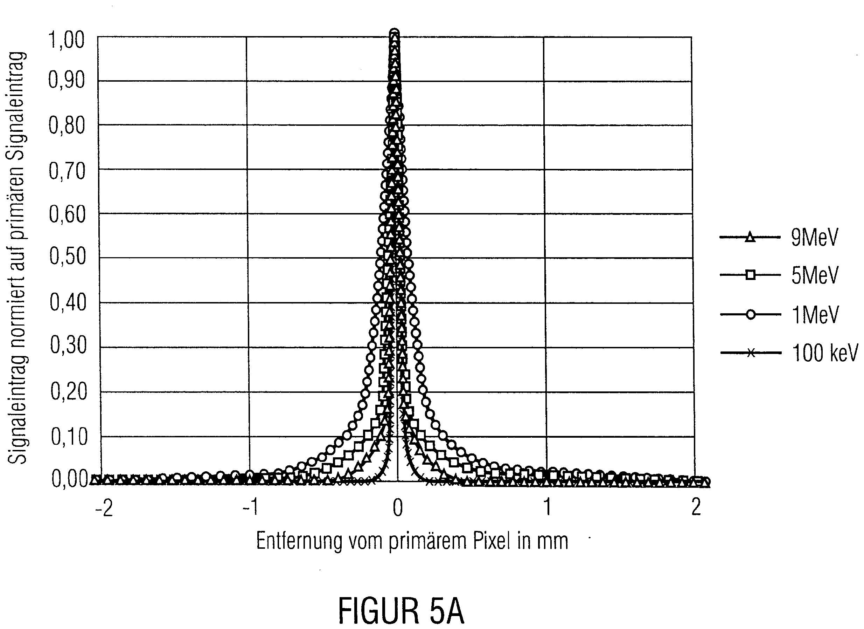

Fig. 5a zeigt den simulierten (auf das primäre Pixel normierten) Signaleintrag für vier verschiedene Photonenenergien (100 keV, 1 MeV, 5 MeV, 9 MeV) für ein Siliziumsensormaterial mit Pixeln von 50 $\mu$m Breite und 5 cm Tiefe. Im Detail sind beispielhaft die normierten Verläufe der Energieeinträge orthogonal zur Bestrahlungsrichtung für verschiedene Röntgenphotonenenergien in einem Zeilendetektor mit 50 $\mu$m Pixelpitch, und einem Sensormaterial aus Silizium mit 5 cm Tiefe dargestellt. Wie zu sehen ist, unterscheiden sich die orthogonalen Einträge in Abhängigkeit der Photonenenergie sehr deutlich voneinander. Gemeinsam haben sie, dass sie zum primären Pixel symmetrische Signaleinträge vorweisen.

Mit der Hilfe von Simulation und Kalibriermessungen, lassen sich Kennlinien für diese Spektren erstellen, mit deren Hilfe sich dann die Messdaten bestimmten Energien zuordnen können. Dabei kann diese Methodik mit dem oben beschriebenen Verfahren kombiniert werden, um die Genauigkeit noch weiter zu erhöhen.

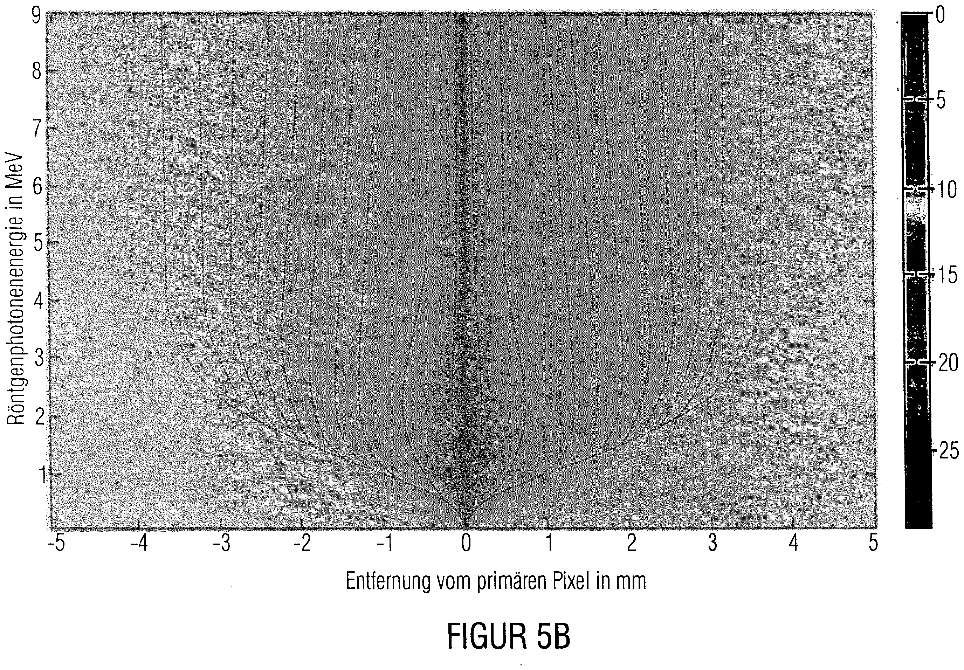

Fig. 5b zeigt den simulierten (auf den primären Pixel normierter und logarithmierter) Signaleintrag in Abhängigkeit der monoenergetischen Röntgenphotonenenergien (X-Achse: Entfernung vom primären Pixel in mm (Pixelpitch ist jeweils 50 $\mu$m); Y-Achse: Röntgenphotonenenergien). Im Detail zeigt Fig. 5b die Aufstreuung (jeweils normiert auf das bestrahlte Pixel in logarithmierter Darstellung) für monoenergetische Strahlung in einem Zeilendetektor aus Silizium mit 50 $\mu$m Pixelpitch, 700 $\mu$m Pixelhöhe und einer Dicke bzw. Tiefe in Strahlrichtung von 5 cm.

Es ist deutlich zu sehen, dass bei niedrigen Energien (< 400 keV), die Aufstreuung sehr gering ist. Nur die unmittelbaren Nachbarpixel bekommen ein erwähnenswertes Signal ab. Mit steigender Photonenenergie nimmt die Höhe und Reichweite der Aufstreuung stark zu und erreicht bei einer Photonenenergie um die 1,7 MeV ein Maximum. Ab dieser Energie nimmt die Höhe der Einträge in der Nähe des primären Pixels wieder leicht ab, aber der Energieeintrag in sehr weit entfernten Pixeln steigt leicht an.

Jede Photonenenergie führt zu einer einzigartigen Signalaufstreuung. Verantwortlich hierfür sind die unterschiedlichen Anteile der Wechselwirkungsarten der Röntgenstrahlung, sowie die energieabhängige Reichweite der erzeugten Sekundärelektronen.

Wie bereits bei der Energiedeposition entlang der Eindringrichtung, lassen sich also auch über die Energiedeposition orthogonal zum Eindringpfad Informationen zu Spektrum und Energie der eintreffenden Röntgenstrahlung gewinnen. Polychromatische Spektren führen zu einem überlagerten Verhalten, dass aber wieder ein für das jeweilige Spektrum charakteristisches Verhalten zeigt. Fig. 5b zeigt außerdem deutlich, dass die mögliche Detektorauflösung abhängig von der Photonenenergie ist.

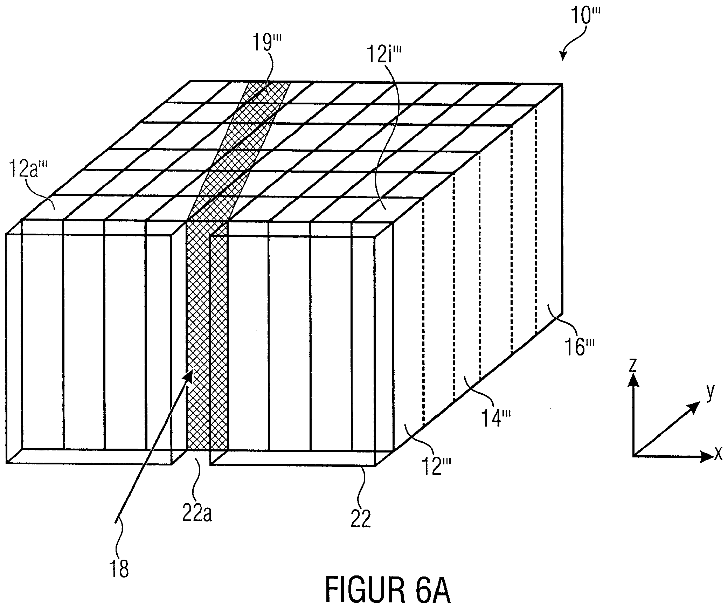

Unter Verwendung eines Detektoraufbaus 10''' (siehe Fig. 6a zeigt einen b) ähnlich dem Detektor 10' aus Fig. 1b, d.h. ein Detektor 10''' der sowohl in Strahlrichtung 18 als auch orthogonal dazu pixeliert ist, in Verbindung mit einer Kollimation 22 der Strahlung 18 auf wenige Pixel ist es möglich denn Ursprungsort der Strahlung 18 zu bestimmen. Dies ermöglicht es z.B. das Röntgensystem (nicht dargestellt) exakt zu justieren. D.h. die Komponenten Röntgenquelle und bildgebenden Detektor 10''' so ausrichten, dass der Zentralstrahl der Röntgenquelle genau orthogonal auf der Oberfläche (vgl. 12''') des bildgebenden Detektors 10''' steht.

Fig. 6a zeigt einen beispielhaften Aufbau eines Detektors 10''' zur Lokalisierung der Strahlungsquelle, wie er auch in der Simulation verwendet wurde. Pixelgröße 50 x 50 x 700 $\mu$m Siliziumsensormaterial, der grau eingezeichnete Rahmen stellt den Kollimator 22 dar, der die Strahlung auf den schraffierten Verlauf 19''' beschränkt. Durch den Kollimator 22 vor der Pixelmatrix wird die Strahlung 18 auf einen definierten Bereich 19''' mittels der Kollimatoröffnung 22a beschränkt. Abhängig von der relativen Position der Strahlungsquelle zum Detektorsystem ist jedoch der Verlauf des bestrahlten Volumens durch den Detektor 10''' unterschiedlich und muss dabei nicht parallel zum Pixelraster, wie in den vorherigen Abschnitten, verlaufen. Dies stellt den wesentlichen Unterschied dar, da zunächst nicht mehr der Signalverlauf entlang des Pixelrasters (in y-Richtung) zur Gewinnung einer Energieinformation genutzt wird, sondern der örtliche Verlauf des Signals innerhalb der Pixelmatrix untersucht wird.

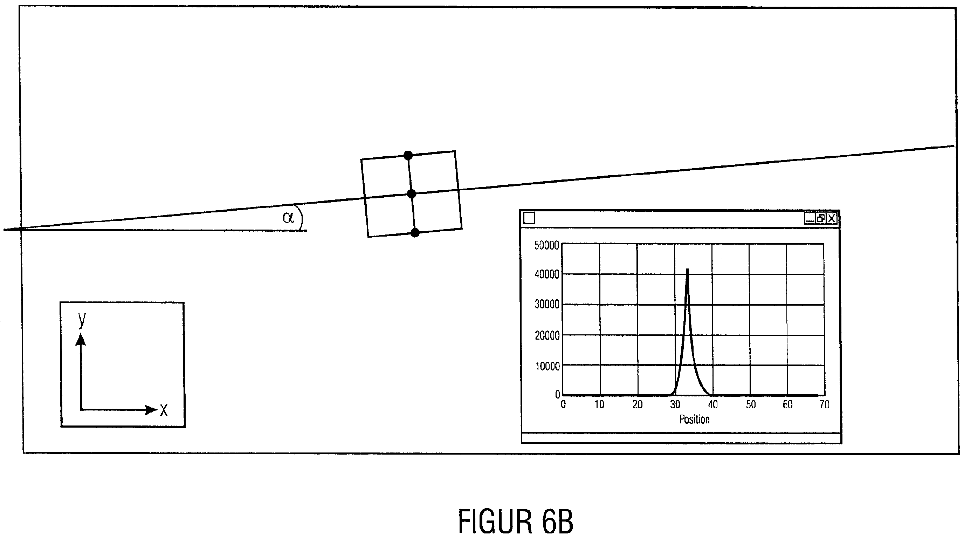

Fig. 6b zeigt einen simulierten Signaleintrag im Siliziumsensormaterial unter einem Einstrahlwinkel $\alpha$ von 5° und 5 MeV Röntgenphotonen bei einer Pixelgröße von 50 $\mu$m x 50 $\mu$m x 700 $\mu$m. Insbesondere ist der räumliche Verlauf des Energieeintrags für eine Einstrahlung unter einem Winkel von 5° in ein Siliziumsensormaterial bei einer Röntgenphotonenenergie von 5 MeV dargestellt. Deutlich ist zu erkennen, dass die Energieeinträge im Detektor auf einer Geraden unter dem Winkel $\alpha$ liegen. Die Verlängerung dieser Geraden führt genau zur Strahlungsquelle. Außerdem ist Ausschnittsweise der Signalverlauf senkrecht zur dieser Geraden (über einen Teilbereich von 5 mm) eingezeichnet. Dieser Signaleintrag im Sensormaterial senkrecht zur Bestrahlungsrichtung ist, unter der Voraussetzung eines idealen Kollimators 22, prinzipiell immer symmetrisch. Dank der Symmetrie, im eingetragenen Signal, kann dass das Symmetriezentrum, das genau der Mitte der Geraden entspricht, exakt bestimmt werden und damit also auch sehr genau auf den Ort der Strahlungsquelle zurückgeschlossen werden. Eine sehr hohe Genauigkeit ist hier insofern nötig, da der Abstand zwischen Röntgenquelle und Detektor sehr groß sein kann und damit selbst kleine Fehler in der Bestimmung der Geraden zu größeren Abweichungen in der Bestimmung der Position führen können.

Allerdings wird das im Sensor eingetragene Signal durch das Pixelraster diskret abgebildet. Je gröber dabei das Pixelraster ist, umso größer kann dabei eine daraus resultierende Asymmetrie im abgetasteten Signal werden. Da jedoch bekannt ist, dass der Signaleintrag (orthogonal zur Einstrahlrichtung) im Sensormaterial symmetrisch sein muss, lässt sich durch eine mathematische Rückrechnung der diskreten Werte das Symmetriezentrum subpixelgenau bestimmen. Je größer die Pixel, also je gröber das Pixelraster, und je weniger Schichten der Detektor in Strahlrichtung besitzt, umso wichtiger wird diese mathematische subpixelgenaue Bestimmung des Symmetriezentrums.

Die Anzahl der Schichten ist insofern wichtig, da sie die Anzahl der bestimmbaren Symmetriezentren beeinflusst. Über die Position der Symmetriezentren kann durch lineare Regression dann auf den subpixelgenauen Verlauf der Geraden zurückgeschlossen werden. Je höher die Anzahl der Symmetriezentren und die Positionsgenauigkeit dieser ist, desto genauer lässt sich die Gerade beschreiben.

Zur Erhöhung der Genauigkeit der mathematischen Bestimmung der Symmetriezentren kann zusätzlich auf die bekannten Signalverläufe senkrecht zum Einstrahlungswinkel zurückgegriffen werden.

In der Realität kann der Kollimator 22 einen Einfluss auf die Symmetrie der Signaleinträge haben. Entscheidend für die Höhe des Einflusses sind hierbei die Dicke des Kollimators 22 und die Position der Quelle relativ zum Detektor. Die Ursache liegt darin, dass bei schräger Einstrahlung die Kante des Kollimators 22 einen Teil der Kollimatoröffnung 22a verdeckt. In diesem Bereich wird die Röntgenstrahlung 18 durch den Kollimator 22 abgeschwächt, was zu einem unsymmetrischen Strahlungsfeld und damit auch zu unsymmetrischen Signaleinträgen führt. Je flacher der Einstrahlwinkel bzw. je dicker der Kollimator 22 ist, desto stärker ist hierbei dieser Einfluss.

Fällt der Einfluss sehr stark aus oder ist eine sehr hohe Genauigkeit verlangt, so kann in einer ersten Messung zunächst grob die Position bestimmt werden, anschließend eine der Komponenten basierend auf den Ergebnis ausgerichtet werden und die Messung, nun unter deutlich besseren Bedingungen erneut durchgeführt werden. Dieser Prozess ist beliebig oft iterativ durchführbar. Ferner besteht zwischen absoluten Energieeintrag und Entfernung zwischen der Strahlungsquelle und den unterschiedlichen Detektorelementen eine Abhängigkeit, welche bei der Bestimmung des Strahlungsquellortes mit berücksichtigt werden kann.

Wie bereits erwähnt, liegt eine Anwendung des beschriebenen Detektors, im Folgenden für diesen Fall vereinfacht Justagedetektor genannt, darin, ein Röntgensystem zu justieren. D.h. die Komponenten Röntgenquelle und bildgebender Detektor sollen so aufeinander ausgerichtet werden, dass der Zentralstrahl der Röntgenquelle genau auf die Mitte des bildgebenden Detektors treffen soll und die Detektoroberfläche orthogonal zu diesem steht.

Bei dem bildgebenden Röntgendetektor des Systems kann es sich um einen hier beschriebenen mehrschichtigen Detektor handeln, es ist jedoch auch möglich ein System, das einen anderen bildgebenden Detektor benutzt, unter Zuhilfenahme eines Justagedetektors zu justieren. Ist der bildgebende Detektor bereits ein hier beschriebener mehrschichtiger Detektor, so wird für die Justage ein Kollimator 22 mit einer Öffnung 22a bzw. eine Blende direkt vor diesem Detektor platziert, welche nach der Justage wieder entfernt werden kann. Handelt es sich bei dem bildgebenden Detektor um einen handelsüblichen Röntgendetektor so wird ein Justagedetektor unter bekannten geometrischen Bedingungen in der Nähe des bildgebenden Detektors platziert. Hierbei ist es vorteilhaft, wenn die Sensorflächen der Detektoren parallel zueinander verlaufen, da ansonsten auch der Winkel zwischen den Sensorflächenebenen berücksichtigt werden muss.

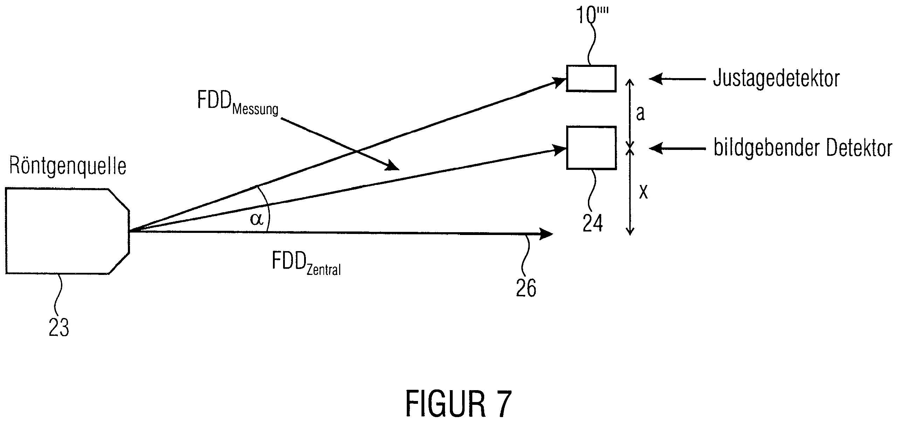

Generell ist eine Justage sowohl in horizontaler als auch in vertikaler Richtung nötig. Bei einem zwei-dimensional pixilierten Justagedetektor erfordert dies gegebenenfalls zwei separate Messungen. Bei einem drei-dimensional pixelierten Detektor ist nur eine Messung nötig, hier können direkt die horizontalen und vertikalen Anteile gemessen und getrennt werden. Der Justagedetektor wird in der Nähe des bildgebenden Detektors befestigt und so ausgerichtet, dass je nach Messung, entweder die horizontalen oder vertikalen Detektorstrukturen parallel verlaufen, siehe Fig. 7.

Für modular aufgebaute Röntgendetektoren, mit zueinander gekrümmt angeordnet Modulen, ist es möglich, jedes Detektormodul individuell nach dieser Methode auf die Strahlungsquelle 23 auszurichten. Hierdurch lässt sich eine optimale Justage des Systems bewerkstelligen.

Fig. 7 zeigt die geometrische Anordnung des Justageaufbaus. Mit Hilfe des Justagedetektors 10'''' wird der Eintreffwinkel $\alpha$ bestimmt. Außerdem werden der derzeitige Fokus-Detektor-Abstand $FDD_{Messung}$, sowie der Abstand a zwischen Justagedetektor 10'''' und bildgebende Detektor 24 gemessen. Gesucht ist nun der Abstand x, den der bildgebende Detektor 24 von der Zentralstrahlposition 26 entfernt ist.

Mit Hilfe der folgenden zwei Gleichungen lässt sich der Abstand x berechnen:

$$\tan(\alpha) = \frac{a+x}{FDD_{Zentral}} \qquad FDD_{Zentral}^2 + x^2 = FDD_{Messung}^2$$

Für den einfachen Fall a = 0, d.h. der bildgebende Detektor 24 ist der Justagedetektor 10'''' oder der Justagedetektor 10'''' wird auf die Detektorposition gefahren oder der Justagedetektor 10'''' befindet sich in vertikaler Ausrichtung links oder rechts auf mittlerer Detektorhöhe für vertikale Justage oder über oder unter dem Detektor 24 in horizontaler Ausrichtung, auf mittlerer Detektorbreite, für horizontaler Justage, gilt:

$$x = \frac{FDD_{Messung}}{\sqrt{1 + \frac{1}{\tan(\alpha)^2}}}$$

Der Abstand x lässt sich auch für den Fall a ungleich null berechnen.

Nachdem der Verkippungs-, bzw. Eintreffwinkel bekannt ist, kann die Position einer Komponente des Röntgensystems (entweder Röhre oder Detektor) entsprechend angepasst werden. Gegebenenfalls kann dieser Prozess iterativ wiederholt werden, bis eine perfekte orthogonale Ausrichtung zwischen Zentralstrahl und Detektorfläche gegeben ist. Eine Wiederholung zur Erhöhung der Justagegenauigkeit könnte insofern auch sinnvoll sein, um Fehler während der Justage durch Toleranzen der mechanischen Achsen des Systems zu minimieren.

Falls der aktuelle Abstand zwischen Quelle 23 und Detektor ($FDD_{Messung}$) 24 nicht gemessen werden kann, ist mit einem Justagedetektor 10'''' nur die Bestimmung des Einstrahlwinkels möglich. Verwendet man allerdings einen weiteren Justagedetektor 10'''' der an einem anderen Ort den Einstrahlwinkel bestimmt, so kann auch die Entfernung zur Quelle 23 berechnet werden. Dies könnten z.B. zweidimensional pixellierte Justagedetektoren 10'''' zum Bestimmen der vertikalen und horizontalen Abweichung sein. Der Quellenort 23 ist der Schnittpunkt der den Einstrahlwinkeln folgenden Geraden bzw. Ebenen. Anstatt zwei Justagedetektoren 10'''' könnte auch ein Justagedetektor 10'''' mit zwei Kollimatorschlitzen bzw. Blenden verwendet werden. Es gilt jedoch, je mehr sich die gemessenen Einstrahlwinkel unterscheiden, d.h. bei größerem Abstand zwischen den Kollimatorschlitzen, umso genauer ist die Bestimmung des Quellenortes möglich.

Der große Vorteil der Systemjustage mit dem vorgestellten Justagedetektor 10'''' ist, dass prinzipiell nur eine einzige Messung nötig ist um mögliche Fehlstände im System zu charakterisieren. Dazu ist diese Messung im Gegensatz zu üblichen Methoden vollkommen unabhängig vom Objektmanipulationssystem. Sogar eine Justage mit dem zu messenden Objekt zwischen Quelle 23 und Detektor 24 ist möglich. Das heißt, dass auch während einer Messung die Bestimmung der Position möglich ist, selbst dann wenn das Objekt den Justagedetektor 10'''' verdeckt.

Das hier vorgestellte Detektorsystem zur Lokalisierung der Strahlungsquelle lässt sich z.B. auch noch für folgende weitere Anwendungen einsetzen:

- Positionsbestimmungs- und Protokollierungssystem: Je nach Messverfahren (z.B. Tomosynthese, Laminographie, Translations-CT, ...) werden während der Messung Detektor und Quelle relativ zueinander verfahren. Dabei wird üblicherweise die Position der Komponenten über das mechanische Achssystem bestimmt. Auf Grund der Toleranzen der Achsen und des nicht exakt bekannten Strahlungsquellenortes können hier jedoch Abweichungen zwischen Soll- und Ist-Position auftreten. Das hier vorgeschlagene System hat die Aufgabe während einer Messung wiederholend (z.B. synchron mit dem bildgebenden Detektor) die (relative) Lage von Röntgendetektor und -quelle zueinander zu bestimmen und zu protokollieren. Mit dem vorgeschlagenen System können Abweichungen in den gewünschten Positionen erkannt und ggf. korrigiert werden. Dies kann im Nachgang per Software oder direkt über Regelung der Achsen geschehen. Dadurch kann die erreichbare Bildqualität gesteigert und Artefakte vermieden werden. Im Umkehrschluss können Röntgensysteme basierend auf diesem Justagesystem gebaut werden, deren Anforderungen an die Toleranzen der Achssysteme geringer ausfallen und damit einfacher zu fertigen und kostengünstiger werden.

- Justage der Komponenten einer "mobilen Roboter-CT": Eine Sonderform der Justage stellt eine mobile Roboter-CT dar. Hier sind die Röntgenquelle und der Röntgendetektor vollkommen ortsveränderlich angeordnet, z.B. auf sechs-achsigen Robotern, und besitzen zunächst vollkommend unabhängige Achs-, bzw. Koordinatensysteme. Gedacht sind solche Roboter-CT-Systeme unter anderen dafür ein CT-Messsystem zum Objekt zu bringen, wenn das Objekt zu groß ist, um es in ein CT-System zu platzieren oder wenn das Objekt ortsfest ist. Daher befindet sich zwischen den Komponenten üblicherweise das Messobjekt und damit ist kein optischer Sichtkontakt zwischen den Komponenten vorhanden. Damit fallen auch die gebräuchlichen optischen Justagemöglichkeiten weg. Der hier vorgestellte Justagedetektor ermöglicht auch für solche Systeme mit komplett autarken Komponenten eine gute Justagemöglichkeit und Angleichung der Koordinatensysteme.

- Detektor zum Überwachen der örtlichen Brennfleckstabilität: Eine weitere Anwendung dieser Methode ist das sogenannte Brennfleckmonitoring. Während einer Messung kann die Erwärmung der Röntgenröhre zu thermischen Ausdehnungen ihrer Komponenten führen. Dadurch kann sich der Brennfleckort verschieben. Besonders kritisch ist dieser Effekt z.B. bei CT-Systemen mit hohen geometrischen Vergrößerungen und stark fokussierten Röntgenröhren. Mit dem vorgestellten Detektor ist es möglich die räumliche Stabilität des Brennfleckes während einer Messung hinweg zu kontrollieren und gegebenenfalls durch Verfahren der Achsen zu korrigieren. Möglich ist auch die Information zur Korrektur der Projektionen heranzuziehen oder sie in die Rekonstruktion mit einfließen zu lassen. Für diese Anwendung könnte es sinnvoll sein, den Kollimator bzw. die Blende in einer größeren Entfernung vom Detektor zu positionieren, so dass sich Änderungen des Brennfleckortes um eine geometrische Vergrößerung verstärkt am Detektor sichtbar machen.

- Detektor zum Überwachen der Strahlungsintensität und -energie: Während einer Messung kann es vorkommen, dass die Intensität der Strahlungsquelle schwankt. Diese Schwankungen können je nach verwendeten Verfahren und Methoden stark die Qualität des Messergebnisses beeinflussen. Durch den Einsatz eines Detektors zur Überwachung der Strahlungsintensität ist es möglich, das Signal des bildgebenden Detektors auf die Strahlungsintensität bzw. -dosis zu normieren, um damit die Schwankungen zu korrigieren. Eine Besonderheit des hier vorgestellten Detektors stellt die Möglichkeit dar, neben der Intensität auch noch eine Energieinformation des Spektrums der Strahlung zu erhalten. Diese Information kann zum einen für energieauflösenden Methoden und Verfahren verwendet werden, als auch um z.B. die richtigen Korrekturbilder für die Hellbildkorrektur (richtiger Vorfilter, richtige Röhrenspannung) automatisch zu wählen.

- Strahlungsfeldkamera: Der hier gezeigte Detektoraufbau lässt sich auch als Blendenkamera einsetzen. Wobei der Vorteil hier ist, dass die Position der Strahlungsquelle direkt aus dem Bild ermittelt werden kann. Eine Anwendung hierfür wäre z.B. das Aufspüren von radioaktiven Stoffen in Containern und Frachtgut.

Zusätzlich zum Ort der Röntgenquelle können über den Verlauf der Energiedeposition außerdem Rückschlüsse auf das Spektrum dieser Quelle geschlossen werden. Radioaktive Stoffe haben charakteristische Spektren und lassen sich so den gemessenen Energiedepositionen zuordnen.

- Strahlungsfeldkamera ohne Blende/Kollimator: Der Einsatz einer Blende bzw. eines Kollimators ist in der Regel nötig, um den Ort der Strahlungsquelle bestimmen zu können, hat jedoch den Nachteil, dass nur ein Bruchteil (der meist ohnehin geringen) Intensität der Quelle genutzt werden kann. Ein Aufbau ohne Blende/Kollimator wäre also vorteilhaft, erfordert aber, dass die Information zur Einstrahlrichtung anderweitig bestimmt werden kann. Hierfür kann sich das für das Spektrum typische Energiedepositionsverhalten entlang des Eindringpfades zu Nutze gemacht werden. Der Eindringpfad entspricht dem Einstrahlwinkel der Strahlung, d.h. dem Winkel den Strahlungsquelle und Detektoroberfläche bilden. Wird ein großer Öffnungswinkelbereich der Quelle, z.B. über einen großen Detektor oder zwei räumlich getrennte Detektoren, abgedeckt, so ist auch mit größeren Variationen des Einstrahlwinkels zu rechnen. Der Verlauf der Energiedeposition in Richtung des Einstrahlwinkels ist dabei, unabhängig vom Einstrahlwinkel selbst, nahezu immer gleich. Lediglich an den Detektorrändern können leichte Abweichungen davon auftreten. Mit dem Detektor ist somit einen Verlauf der deponierten Energie der vom Einstrahlwinkel und dem Spektrum der Strahlung abhängt messbar. Des Weiteren ist noch eine Abhängigkeit zwischen der Entfernung von Strahlungsquellenort und Detektorelement gegeben, dadurch ändert sich die absolute Höhe der Energiedeposition, jedoch nicht ihr Verlauf. Die relativen Verläufe sind nur vom Spektrum und nicht von der Dosis abhängig. Wird das Spektrum als konstant angenommen, ist also lediglich noch der Einstrahlwinkel für Änderungen im Verlauf der Energiedeposition verantwortlich. Mit Hilfe geeigneter Bild- bzw. Datenverarbeitungsoperatoren ist es möglich, das Muster des immer gleichen Energiedepositionsverlauf zu finden und damit auf die jeweiligen Einstrahlungswinkel zurückzurechnen. Der Schnittpunkt der Geraden entlang der Einstrahlungswinkel muss wiederrum der Quellenort der Strahlung sein und kann somit bestimmt werden. Für die Bestimmung des Quellenortes können zusätzlich die absoluten Intensitätsinformationen herangezogen werden.

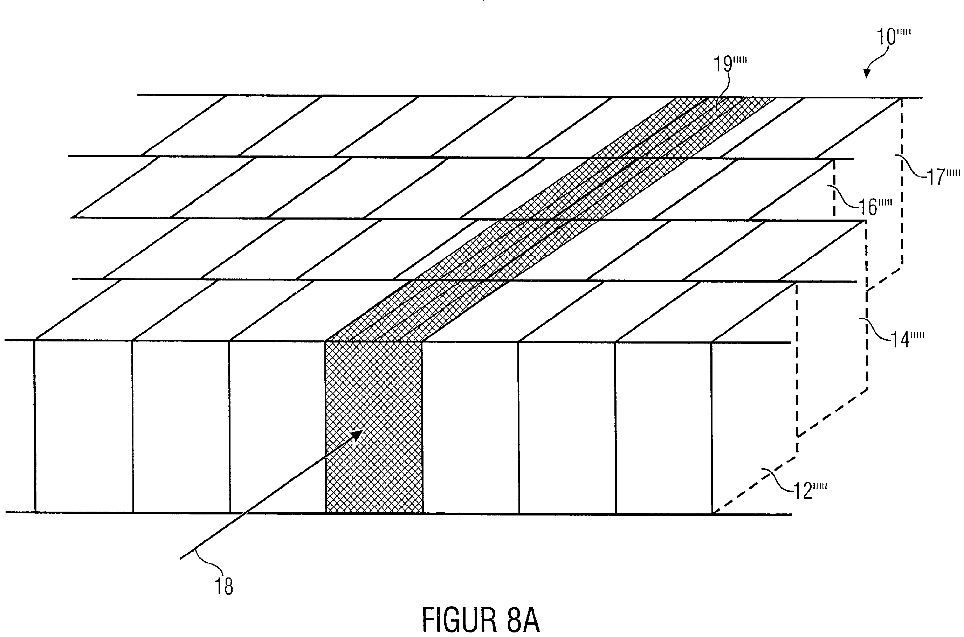

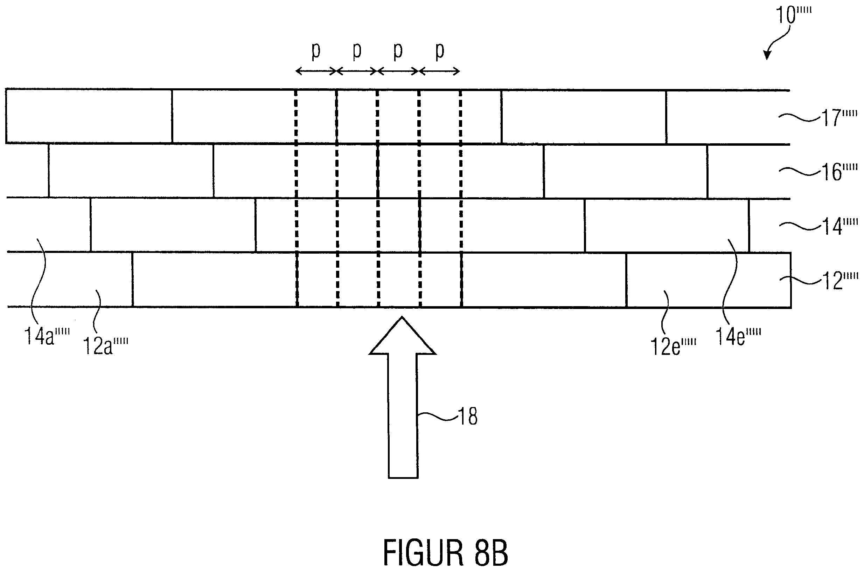

Die diskrete Abtastung durch die Pixelierung ist bei dieser Methode in der Datenverarbeitung zu beachten, da eine Schrägdurchstrahlung der Pixel zu anderen effektiven geometrischen Pixelgrößen führt und bei der Auswertung mit eingebracht werden sollte.
Zusätzlich zum Ort der Röntgenquelle können über den Verlauf der Energiedeposition außerdem Rückschlüsse auf das Spektrum dieser Quelle geschlossen werden. Radioaktive Stoffe haben charakteristische Spektren und lassen sich so den gemessenen Energiedepositionen zuordnen.
Von den oben genannten Anwendungen können mehrere miteinander kombiniert werden, z.B. könnte der Detektor zunächst zum Justieren des Systems genutzt werden, bevor anschließend die örtliche Brennfleckstabilität und die Strahlungsintensität und -energie überwacht werden.
Wird ein Detektor mit mehreren Schichten verwendet, so ist es möglich, über Versatz der Pixelraster der Schichten zueinander, die Ortsauflösungsfähigkeit gegenüber einem homogenen Detektor zu steigern. Hierbei wird sich das Prinzip der Überabtastung zu Nutze gemacht. Fig. 8a zeigt die Frontalansicht eines vierschichtigen Detektors 10''''' mit gleichmäßig versetzten Pixelrastern 12''''', 14''''', 16''''' und 17'''''. Schraffiert hervorgehoben ist der Durchstrahlungspfad 19'''' mit der Breite eins physikalischen Pixels eingezeichnet. Ferner sind die Grenzen der virtuellen Pixel eingezeichnet. Fig. 8b stellt die zugehörige Draufsicht auf den vierschichtigen Detektor 10'''' mit gleichmäßig versetzten Pixelrastern 12'''', 14'''', 16'''' und 17'''' (vgl. Sensorzellen 12a'''' - 12e'''', 14a'''' - 14e'''' bzw. 16a'''' - 16e'''') dar. Schraffiert eingezeichnet sind die Grenzen der virtuellen Pixel. Diese liegen alle um den Pixelpitch p der virtuellen Pixel voneinander entfernt. Der Pixelpitch p der physikalischen Pixel entspricht 4 p.

Fig. 8a und 8b zeigen beispielsweise einen vierschichtigen Detektor 10'''', bei dem die einzelnen Schichten 12'''', 14'''', 16'''' und 17'''' jeweils um ein Viertel versetzt sind. Dabei sind die physikalischen Pixel 12a'''' - 12e'''', 14a'''' - 14e'''' und 16a'''' - 16e'''' mit einer durchgezogenen Linie und die virtuellen gestrichelt dargestellt. Die virtuellen Pixel werden mathematisch aus den Signalen der physikalischen Pixel berechnet und sind lediglich zur Visualisierung eingezeichnet. Wie zu sehen ist, ergeben sich in diesem Beispiel genau vier virtuelle Pixel aus einen physikalisches Pixel 12a'''' - 12e'''', 14a'''' - 14e'''' und 16a'''' - 16e''''. Die Breite der virtuellen Pixel p entspricht, bei gleichmäßigem Versatz der Schichten zueinander, genau dem Pixelpitch der physikalischen Pixel, geteilt durch die Anzahl der Schichten, in diesem Beispiel also einem Viertel des ursprünglichen Pitches. Theoretisch bedeutet dies, dass die Ortsauflösung des Detektors bis um den Faktor vier gesteigert werden kann.

Der Vorteil solch eines Detektoraufbaus ist, dass die Ortsauflösung kleiner als die physikalische Pixelgröße werden kann. Dadurch werden zum einen weniger Pixel benötigt und zum anderen dürfen diese größer sein, was Vorteile in der Fertigung mit sich ziehen kann. Damit das vorgestellte Konzept gut funktioniert und die Ortsauflösung möglichst gut gesteigert werden kann, ist es nötig, dass jede Schicht ein deutlich messbares Signal liefert. Dies erfordert eine Abstimmung zwischen Messspektrum, Sensormaterial und Dicke der Schichten.

Es ist auch möglich, bewusst durch ungleichmäßige Abstände bzw. jeweils unterschiedlichen Versatz, einen Detektor mit ungleich großen virtuellen Pixeln zu erzeugen. Dies muss bei der Berechnung der Information der virtuellen Pixel mit berücksichtigt werden. Die Berechnung der Information der virtuellen Pixel lässt sich auf unterschiedliche Arten bewerkstelligen. Eine mögliche Methode ist dabei z.B. folgende:

- Zunächst soll aus den einzelnen Signalen der physikalischen Pixel ein überabgetastetes Signal aufgestellt werden.
- Auf Grund unterschiedlicher Dicken der Schichten und des spektrenabhängigen Signaleintrags sollte zunächst eine Normierung bzw. Gewichtung der Signallevels der einzelnen Schichten erfolgen. Diese Normierung soll die Information jeder Schicht auf ein gleich großes Signallevel bringen, so dass jede Schicht zu der Bestimmung der Ortsinformation gleich viel beiträgt. Die Normierungsfaktoren sollten dabei in Abhängigkeit einer zuvor durchgeführten Auswertung der für das Spektrum charakteristischen Parameter gewählt werden.
- Die Erzeugung des überabgetasteten Signals kann anschließend zum einem so geschehen, dass die Signale aller physikalischen Pixel entlang des Weges des virtuellen Pixels aufsummiert werden oder zum anderen so, dass das überabgetastete Signal über eine Aneinanderreihung der Signale der physikalischen Pixel jeweils am Ort ihrer Pixelmitte gebildet wird.
- Als Ergebnis erhält man dabei einen um die Detektorantwortfunktion verschmierten Signalverlauf.
- Die Detektorantwortfunktion ist durch die Detektorgeometrie fest vorgegeben und lässt sich durch Entfaltung vom Signalverlauf trennen.

Prinzipiell können beliebig viele Schichten verwendet werden, jedoch muss beachtet werden, dass die Entfaltung sehr rauschanfällig ist.

Für den Fall, dass das überabgetastete Signal durch Aufsummierung der Signale der physikalischen Pixel entlang des Pfades des virtuellen Pixels erzeugt wurde und bei einem gleichmäßigen Versatz der Schichten und normierten Schichtsignalen erhält man z.B. für einen vierschichtigen Detektor folgende Detektorantwortfunktion:

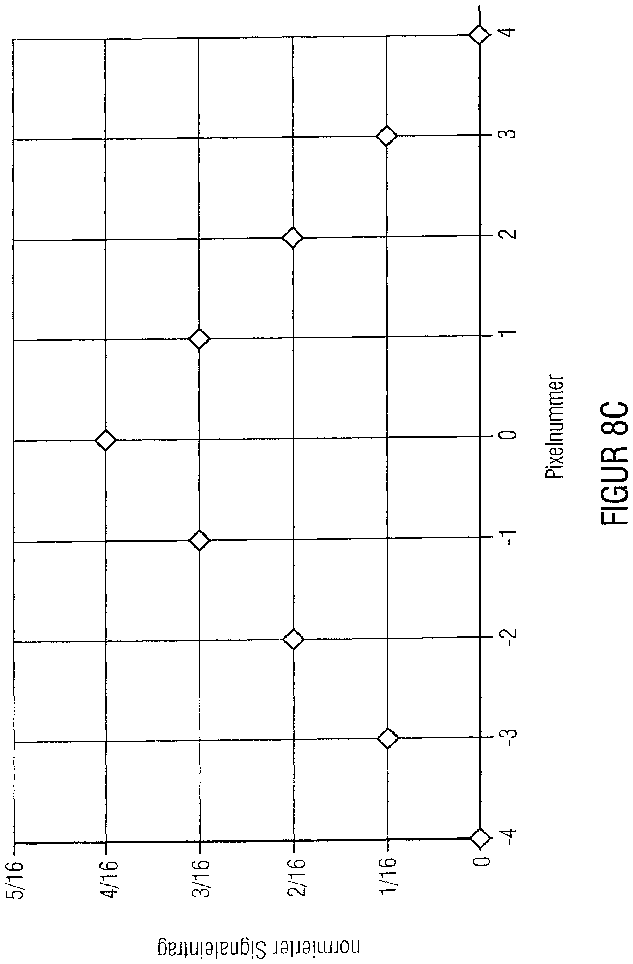

Fig. 8c zeigt die Detektorantwortfunktion eines vierschichtigen Detektors mit gleichmäßigem Pixelversatz. Auf der x-Achse ist die Pixelnummer eingetragen und auf der y-Achse der normierte Signaleintrag. Die Summe aller Einträge muss dabei immer eins ergeben. Der mit x = 0 bezeichnete Pixel stellt das zentrale Element dar.

Weitere Varianten und Anwendungsmöglichkeiten:

Kombination mit Brennfleckentfaltung:

Auf Grund der hohen Überabtastung, mit Hilfe dieses Aufbaus, kann es Sinn machen zusätzlich zu der Entfaltung der Detektorantwortfunktion, auch die Brennfleckverschmierung zu entfalten. Üblicherweise wird ein Röntgensystem so ausgelegt, dass die Auswirkungen der Brennfleckverschmierung in der Größenordnung der Pixelgröße liegen und damit einen geringen Einfluss haben. Das beschränkt jedoch auch die geometrische Vergrößerung und die mögliche Auflösung des Messobjekts. Die mögliche hohe Überabtastung mit diesem Aufbau kann die Messung der Auswirkungen der Brennfleckverschmierung ermöglichen. Die Brennfleckverschmierungsfunktion muss hierzu zunächst separat gemessen werden. Anschließend wird sie mit der Detektorantwortfunktion gefaltet, bevor die gemessenen Signale mit dieser gesamten Verschmierungsfunktion entfaltet werden.

Vom Eintreffwinkel abhängiger virtueller Pixelpfad:

Trifft die Strahlung nicht orthogonal zur Detektoroberfläche ein, so verläuft der Eindringpfad entlang des Detektormaterials schräg zum physikalischen Pixelraster des Detektors. Dies ist besonders dann der Fall wenn mit geradlinigen Detektoren große Öffnungswinkelbereiche der Strahlungsquelle genutzt werden oder die Detektoroberfläche nicht orthogonal zur Strahlungsquelle steht. Die daraus resultierende Schrägdurchstrahlung des Pixelrasters führt durch die diskrete Abtastung zu einer örtlichen Verschmierung des Signals im Detektor. Dieser Effekt wird umso stärker je flacher die Strahlung auf die Detektoroberfläche auftrifft.

Mit Hilfe eines vielschichtigen Detektors ist es möglich, die virtuellen Pixel mathematisch so zu bestimmen, dass der Pfad des virtuellen Pixels nicht senkrecht auf der Detektoroberfläche stehen muss, sondern dem Eintreffwinkels der Strahlung entspricht. Das bedeutet, dass die virtuellen Pixel nicht mehr parallel verlaufen, sondern sternförmig auf den Strahlungsquellort ausgerichtet sind. Die physikalischen Pixel die zur Berechnung der virtuellen Pixel verwendet werden, müssen dabei auf dem Pfad der virtuellen Pixel liegen. Die Detektorantwortfunktion ist für diesen Fall nicht mehr konstant, sondern abhängig vom Pfad des virtuellen Pixels.

Entspricht der Einfallwinkel genau dem Winkel auf dem die Pixel(-mitten) der einzelnen Schichten zueinander stehen, so ist die Überabtastung durch die einzelnen Schichten nicht mehr gegeben. Vergleichbar ist dieser Fall mit der orthogonalen Einstrahlung auf einem Detektor mit karoförmig angeordneten Pixeln (siehe Fig. 1b). Um eine optimale Überabtastung, mit der damit verbundenen Steigerung der Ortsauflösung zu gewährleisten, kann der Schichtversatz dem erwarteten Einfallswinkel angepasst werden.

Weitere Varianten des geometrischen Aufbaus der Schichten:

- Das vorgeschlagene Prinzip funktioniert auch mit nicht viereckigen Pixeln, wie z.B. hexagonalen Pixeln und anderen Pixelformen. Wichtig ist dabei, dass der Pfad des virtuellen Pixels durch den Detektor mehrere (idealerweise pro Schicht jeweils ein) physikalische Pixel schneidet, damit die Überabtastung gegeben bleibt.
- Die Überabtastung lässt sich auch durch unterschiedliche Pixelpitches der Schichten zueinander bewerkstelligen. Bei diesem Aufbau sinkt jedoch der Faktor um den sich die Ortsauflösung (gegenüber den kleinsten Pixelpitch) maximal verbessern lässt.
- Eine weitere Möglichkeit die nötige Überabtastung zu erzeugen, liegt darin, in den einzelnen Schichten den Pixelpitch zu variieren.

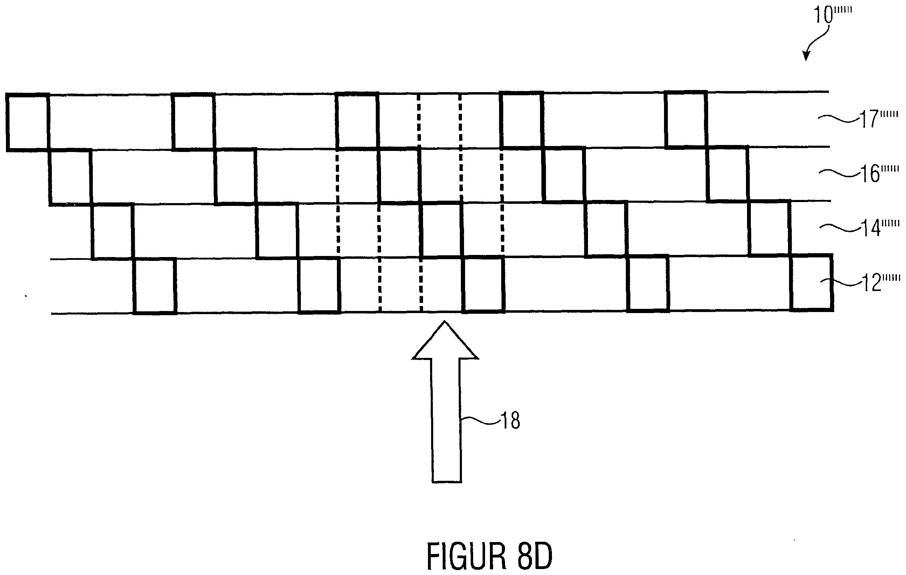

Fig. 8d zeigt die Draufsicht eines vierschichtigen Detektors 10''''', der grundsätzlich dem Detektor 10'''' aus Fig. 8a und 8b entspricht, aber unterschiedliche Pixelpitches in den Schichten 12''''', 14''''', 16''''' und 17''''' mit gleichmäßig versetzten Schichten 12''''', 14''''', 16''''' und 17''''' aufweist; d.h. also, dass die physikalische Pixelraster je Schicht 12''''', 14''''', 16''''' und 17''''' unterschiedlich groß sind. Schraffiert eingezeichnet sind die Grenzen der virtuellen Pixel. Diese liegen alle um den Pixelpitch p der virtuellen Pixel voneinander entfernt. Der Pixelpitch der physikalischen Pixel entspricht 3 p und 1 p. Zu beachten ist, dass die Detektorantwortfunktion jeweils an die Geometrie anzupassen ist.

Bei diesem Aufbau werden keine beweglichen Komponenten benötigt, was mögliche Fehler durch Achstoleranzen ausschließt.

Typisches Anwendungsgebiete ist die (Hochenergie-) Röntgenbildgebung, welche z.B. in industriellen Röntgenprüfsystemen eingesetzt wird. Das beschriebene Konzept lässt sich dabei sowohl in Röntgendetektoren mit nur einer Zeile, sogenannte Zeilendetektoren, also auch auf Detektoren mit vielen Zeilen, sogenannte Mehrzeilendetektoren und prinzipiell auch bei Flächendetektoren anwenden. Möglichen Einsatz könnte die Erfindung auch in der Sicherheitstechnik oder der Medizin finden. Nachfolgend werdend die wichtigsten Charakteristika zusammen mit den Vorteilen je Anwendung nochmals in anderen Worten **zusammengefasst:**

Detektor zur Bestimmung der für das Spektrum charakteristischen Parameter

Detektor mit vielen Schichten, der den Verlauf der Energiedeposition im Sensormaterial hochaufgelöst abtastet und so eine präzise Bestimmung der für das Spektrum charakteristischen Parameter ermöglicht.

Der Detektor besitzt typischerweise viele (mindestens drei) hintereinander angeordnete Schichten. Die Schichten sind so dimensioniert, dass sowohl das aufsteigende als auch das abfallende Energiedepositionsverhalten getrennt voneinander bestimmt werden können. Die Gewinnung von Energieinformation des Röntgenspektrums geschieht auf Grund der vorgestellten, für das Spektrum charakteristischen, Parameter: Koeffizienten der aufklingenden und abfallenden e-Funktion, Oberflächenintensität, Position des maximalen Signals und absoluter auf $I_0$ (d.h. ohne Objekt) normierter Energieeintrag. Die Werte der bestimmten charakteristischen Parameter werden anhand einer (vorher erstellten) Datenbank ausgewertet, mit deren Hilfe die Materialien im Strahlengang bestimmt werden können.

Optimierter Detektor (mit wenigen Schichten) basierend auf den Spektrum charakterisierenden Parametern

Detektor mit möglichst wenig (mindestens drei) Schichten, der den Verlauf der Energiedeposition im Sensormaterial niedrig aufgelöst abtastet und so eine Bestimmung der für das Spektrum charakteristischen Parameter oder der proportionalen Koeffizienten zu diesen, ermöglicht.

Gewinnung von Energieinformation des Röntgenspektrums über den deponierten Signaleintrag orthogonal zur Eindringrichtung der Strahlung

Das Detektormaterial wird nicht vollständig bestrahlt, d.h. ein Teil des Detektors ist z.B. durch einen Kollimator abgeschirmt. Über den Verlauf der Energiedeposition in einem abgeschirmten Bereich werden Rückschlüsse auf das zugrunde liegende Spektrum getroffen.
Neben der Energiedeposition entlang der Eindringtiefe wird zusätzlich auch die Energiedeposition orthogonal zur Eindringrichtung erfasst und zur Gewinnung von Information über das Spektrum verwendet.

Detektor zur Lokalisierung der Strahlungsquelle

Lokalisierung des Ortes der Strahlungsquelle anhand des Pfades der Energiedeposition in einem Detektormaterial. Ort der Strahlungsquelle kann mit einer einzigen Aufnahme bestimmt werden. Methode ist auch mit einem Objekt im Strahlengang anwendbar.
Lokalisierung der Strahlungsquelle findet anhand der Verläufe der Energiedeposition im Detektormaterial statt.
Der örtliche Verlauf der Energiedeposition im Detektor wird bestimmt. Über den ermittelten Eindringpfad ist es möglich Rückschluss auf den Quellenort der Strahlung zu schließen. Eine Lokalisierung der Strahlungsquelle kann auch ohne den Einsatz eines Kollimators/Blende realisiert werden.

Erhöhung der Ortsauflösung (durch erhöhte Abtastung) durch relativen Versatz der Detektorschichten

Der Detektor besitzt mehrere hintereinander angeordnete Schichten, deren Pixellierungen in Strahlrichtung voneinander versetzt angeordnet sind. Die berechneten virtuellen Pixel, welche in Abhängigkeit des Einstrahlwinkels verlaufen, ergeben eine höhere Ortsauflösung, als die physikalisch vorhandenen Pixel.
Die Schichten beinhalten versetzt zueinander angeordnete Pixel bzw. Sensorelemente. Die Einstrahlung erfolgt so, dass alle Schichten hintereinander durchdrungen werden. Es findet eine Überabtastung des gemessenen Signales statt.
Im Allgemeinen sei als - nicht in den Ansprüchen aufgenommenes - Beispiel, angemerkt, dass der oben im Rahmen der Diskussion der Ausführungsbeispiele als Röntgendetektor diskutierte Detektor nicht zwingend nur Röntgenstrahlung detektieren muss, so dass der Detektionsbereich des Detektors auch über das Röntgenspektrum hinaus gehen kann und folglich auch für andere Wellenlängen ausgelegt sein kann.
Des Weiteren sein bezüglich dem in Fig. 2 betriebenen Röntgensystem angemerkt, dass die Auswertevorrichtung auch dazu ausgebildet sein kann, mehrere der beschriebene Verfahren durchzuführen. Das System kann ferner entsprechend weiteren Ausführungsbeispielen auch ein Strahlenquelle umfassen bzw. allgemein ein Sub-System einer Röntgen- oder CT-Anlage sein.
Gemäß Ausführungsbeispielen kann die Vielzahl der Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') in der ersten Sensorschicht (12, 12', 12", 12''', 12'''', 12''''') gegenüber der Vielzahl der Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') in der zweiten und dritten Sensorschicht (16, 16', 16", 16''', 16'''', 16''''') lateral versetzt sein.
Optional kann die Vielzahl der Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') in der zweiten Sensorschicht (14, 14', 14", 14''', 14'''', 14''''') gegenüber der Vielzahl der Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') in der dritten Sensorschicht (16, 16', 16", 16''', 16'''', 16''''') lateral versetzt sein, um die Ortsauflösungsfähigkeit des Röntgendetektors (10, 10', 10", 10''', 10'''', 10''''', 10'''''') zu erhöhen.
Der Röntgendetektor (10, 10', 10", 10''', 10'''', 10''''', 10'''''', 10''''''') kann n Sensorschichten (12, 12', 12", 12''', 12'''', 12''''', 14, 14', 14", 14''', 14'''', 14''''', 16, 16', 16", 16''', 16'''', 16''''') umfassen, wobei der Versatz aufeinander folgenden Sensorschichten (12, 12', 12", 12''', 12'''', 12''''', 14, 14', 14", 14''', 14'''', 14''''', 16, 16', 16", 16''', 16'''', 16''''') so gewählt ist, dass er dem n-ten Teil des Pixelpitch der Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') innerhalb jeder Sensorschicht entspricht.

Ein weiteres Ausführungsbeispiel schafft ein Röntgensystem mit folgenden Merkmalen: einem o.g. Röntgendetektor (10, 10', 10", 10''', 10'''', 10''''', 10'''''', 10'''''''); und einer Auswertevorrichtung, die ausgebildet ist, um auf Basis der Vielzahl der Sensorsignale Ix voneinander überlappender Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') der mehreren Sensorschichten für jede Sensorzelle (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') virtuelle Pixel zu berechnen, und um auf Basis der virtuellen Pixel eine erhöhte Ortsauflösung auszugeben.

Hier kann die Auswertevorrichtung ausgebildet sein, um in Abhängigkeit von einer Position der Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') und/oder von einem Einstrahlwinkel die laterale Ausdehnung der virtuellen Pixel anzupassen.

Ein anderes Ausführungsbeispiel schafft ein Durchstrahlungssystem mit folgenden Merkmalen: einem o.g. Röntgendetektor (10, 10', 10", 10''', 10'''', 10''''', 10'''''', 10'''''''); und einer Strahlenquelle (23).

Gemäß einem Ausführungsbeispiel wird ein Durchstrahlungssystem mit folgenden Merkmalen geschaffen: einem Röntgensystem (vgl. oben); und einer Strahlenquelle (23).

Das Durchstrahlungssystem kann ferner einen Auswertevorrichtung umfassen, die ausgebildet ist, auf Basis des Verlaufs der Energiedeposition im Röntgendetektor (10, 10', 10", 10''', 10'''', 10''''', 10'''''', 10''''''') mechanische Fehlstände des Durchstrahlungssystems und/oder Brennfleck-Verschiebungen zu erkennen und gegeben falls zu kompensieren.

Gemäß Ausführungsbeispielen wird ein Röntgendetektor (10, 10', 10", 10''', 10'''', 10''''', 10'''''', 10''''''') geschaffen, wobei der Röntgendetektor (10, 10', 10", 10''', 10'''', 10''''', 10'''''', 10''''''') einen Kollimator (22) umfasst, der parallel zu den entlang der ersten Sensorschicht (12, 12', 12", 12''', 12'''', 12''''') angeordneten Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') angeordnet ist, so dass die effektive Detektorhauptfläche auf eine Öffnung (22a) beschränkt ist, um die Energiedeposition entlang eines Eindringpfads (19, 19', 19", 19''', 19'''') der sich durch die Öffnung erstreckt, zu beschränken.

Gemäß einem Ausführungsbeispiel wird ein Röntgensystem mit folgenden Merkmalen geschaffen: einem Röntgendetektor (10, 10', 10", 10''', 10'''', 10''''', 10'''''', 10''''''') mit Kollimator; und einer Auswertevorrichtung, die ausgebildet ist, um auf Basis der Sensorsignale Ix der Vielzahl der Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e''''), die eine Röntgenstrahlung (18) detektieren, den Eindringpfad (19, 19', 19", 19''', 19'''') zu bestimmen, um eine Strahlenquelle zu lokalisieren;

Alternativ kann die Auswertevorrichtung ausgebildet sein, um anhand des Verlaufs der Energiedeposition entlang zweier Eindringpfade (19, 19', 19", 19''', 19''''), die sich durch die zwei Öffnung erstrecken, die Entfernung zwischen dem Röntgendetektor (10, 10', 10", 10''', 10'''', 10''''', 10'''''', 10''''''') und einer Strahlenquelle zu bestimmen.

Weiter kann die Auswertevorrichtung ausgebildet sein, um auf Basis des symmetrischen Signaleintrags orthogonal zum Eindringpfad (19, 19', 19", 19''', 19'''') Sub-Pixel zu berechnen.

Gemäß Ausführungsbeispielen kann hierbei der Kollimator (22) zwei Öffnungen (22a) umfassen.

Gemäß Ausführungsbeispielen kann hierbei lateral neben dem Röntgendetektor (10, 10', 10", 10''', 10'''', 10''''', 10'''''', 10''''''') ein weiterer Röntgendetektor (10, 10', 10", 10''', 10'''', 10''''', 10'''''', 10''''''') mit einem weiteren Kollimator (22) so angeordnet sein, dass die zwei Röntgendetektoren (10, 10', 10", 10''', 10'''', 10''''', 10'''''', 10''''''') aneinander angrenzen oder beabstandet sind.

Gemäß einem Ausführungsbeispiel wird ein Röntgensystem mit folgenden Merkmalen gescaffen: einem Röntgendetektor (10, 10', 10", 10''', 10'''', 10''''', 10'''''', 10''''''') mit Kollimator; und einer Auswertevorrichtung, die ausgebildet ist, um den Verlauf der Energiedeposition orthogonal zum Eindringpfad (19, 19', 19", 19''', 19'''') zu bestimmen. Hierbei kann Auswertevorrichtung ausgebildet sein, um eine Eigenschaft des Objekts auf Basis des Verlaufs der Energiedeposition über die Eindringtiefe zu bestimmen.

Weiter kann die Auswertevorrichtung ausgebildet sein, um auf Basis des symmetrischen Signaleintrags orthogonal zum Eindringpfad (19, 19', 19", 19''', 19'''') Sub-Pixel zu berechnen.

Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Röntgendetektor (10, 10', 10", 10''', 10'''', 10''''', 10'''''', 10''''''') zur Detektion von Röntgenstrahlung (18) mit einer Energie größer als 400 keV und einem Spektrum zur Bestimmung einer Eigenschaft eines Objekts und/oder eines Durchstrahlungssystems, mit folgenden Merkmalen:

   einer ersten Sensorschicht (12, 12', 12", 12''', 12'''', 12''''') mit mindestens einer Sensorzelle (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''');
   einer zweiten Sensorschicht (14, 14', 14", 14''', 14'''', 14''''') mit mindestens einer Sensorzelle (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e''''); und
   einer dritten Sensorschicht (16, 16', 16", 16''', 16'''', 16'''''), mit mindestens einer Sensorzelle (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e''''); wobei die mindestens drei Sensorschichten (12, 12', 12", 12''', 12'''', 12'''''. 14, 14', 14", 14''', 14'''', 14''''', 16, 16', 16", 16''', 16'''', 16''''') in Einstrahlungsrichtung (19, 19') der Röntgenstrahlung (18) hintereinander angeordnet sind,

wobei die Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') der ersten, zweiten und dritten Sensorschicht (12, 12', 12", 12''', 12'''', 12''''', 14, 14', 14", 14''', 14'''', 14''''', 16, 16', 16", 16''', 16'''', 16''''') ausgebildet sind, um jeweils ein Sensorsignal $I_x$ abhängig von der einwirkenden Röntgenstrahlung (18) auszugeben, und

wobei auf Basis der Sensorsignale $I_x$ der Sensorzellen (12a, 14a, 16a, 12a' - 12i', 14a' - 14i', 16a' - 16i',12a" - 12i", 12a''' - 12i''', 14a''' - 14i''', 16a''' - 16i''', 12a'''' - 12e'''', 14a'''' - 14e'''', 16a'''' - 16e'''') der mindestens drei Sensorschichten (12, 12', 12", 12''', 12'''', 12''''', 14, 14', 14", 14''', 14'''', 14''''', 16, 16', 16", 16''', 16'''', 16''''') ein Verlauf einer Energiedeposition über eine Eindringtiefe bei Röntgenstrahlung mit einer Energie größer als 400 keV durch die mindestens drei Sensorschichten ermittelbar ist,

wobei die erste Sensorschicht (12, 12', 12", 12''', 12'''', 12''''') abhängig von dem Spektrum der Röntgenstrahlung (18) so angeordnet ist, dass an der Position der ersten Sensorschicht (12, 12', 12", 12''', 12'''', 12''''') der Verlauf der Energiedeposition über die Eindringtiefe zunimmt, und wobei die dritte Sensorschicht (16, 16', 16", 16''', 16'''', 16''''') abhängig von dem Spektrum der Röntgenstrahlung (18) so angeordnet ist, dass an der Position der dritten Sensorschicht (16, 16', 16", 16''', 16'''', 16''''') der Verlauf der Energiedeposition über die Eindringtiefe abnimmt,

wobei die zweite Sensorschicht (14, 14', 14", 14''', 14'''', 14''''') abhängig von dem Spektrum der Röntgenstrahlung (18) so angeordnet ist, dass innerhalb der Position der zweiten Sensorschicht (14, 14', 14", 14''', 14'''', 14''''') der Verlauf der Energiedeposition ein Intensitätsmaximum aufweist; wobei die Eigenschaft des Objekts und/oder des Durchstrahlungssystems auf Basis des ermittelten Verlaufs der Energiedisposition bestimmbar ist.

2. Röntgendetektor (10, 10', 10", 10''', 10'''', 10''''', 10'''''', 10''''''') gemäß Anspruch 1, wobei die erste, zweite und dritte Sensorschicht (12, 12', 12", 12''', 12'''', 12''''', 14, 14', 14", 14''', 14'''', 14''''', 16, 16', 16", 16''', 16'''', 16''''') jeweils eine Vielzahl von nebeneinander angeordneten Sensorzellen (12a, 14a, 16a, 12a' - 12i', 14a' - 14i', 16a' - 16i',12a" - 12i", 12a''' - 121''', 14a''' - 141''', 16a''' - 16i''', 12a'''' - 12e'''', 14a'''' - 14e'''', 16a'''' - 16e'''') umfassen; und/oder wobei der Röntgendetektor (10, 10', 10", 10''', 10'''', 10''''', 10'''''', 10''''''') ein Flächendetektor ist.

3. Röntgendetektor (10, 10', 10", 10''', 10'''', 10''''', 10'''''', 10''''''') gemäß einem der Ansprüche 1 bis 2, wobei zumindest zwei der mindestens drei Sensorschichten (12, 12', 12", 12''', 12'''', 12''''', 14, 14', 14", 14''', 14'''', 14''''', 16, 16', 16", 16''', 16'''', 16''''') unterschiedliche Sensormaterialien umfassen; und/oder

wobei die erste Sensorschicht (12, 12', 12", 12''', 12'''', 12''''') in Einstrahlungsrichtung (19, 19') vor der zweiten und/oder dritten Sensorschicht (16, 16', 16", 16''', 16'''', 16''''') angeordnet ist und wobei ein Sensormaterial der ersten Sensorschicht (12, 12', 12", 12''', 12'''', 12''''') eine niedrigere Kernladungszahl und/oder Dichte im Vergleich zu einem Sensormaterial der zweiten und/oder dritten Sensorschicht (16, 16', 16", 16''', 16'''', 16''''') aufweist, um den Effekt der ansteigenden Energiedeposition räumlich auszudehnen.

4. Röntgendetektor (10, 10', 10", 10''', 10'''', 10''''', 10'''''', 10''''''') gemäß einem der Ansprüche 1 bis 3, wobei eine Dicke der ersten Sensorschicht (12, 12', 12", 12''', 12'''', 12''''') kleiner ist als eine Dicke der zweiten Sensorschicht (14, 14', 14", 14''', 14'''', 14''''') ; und/oder

wobei Schichtdicken der ersten und zweiten Sensorschicht (14, 14', 14", 14''', 14'''', 14''''') so gewählt sind, dass eine Dickendifferenz zwischen der ersten Sensorschicht (12, 12', 12", 12''', 12'''', 12''''') und der zweiten Sensorschicht (14, 14', 14", 14''', 14'''', 14''''') kleiner ist als eine Dickendifferenz zwischen der zweiten Sensorschicht (14, 14', 14", 14''', 14'''', 14''''') und der dritten Sensorschicht (16, 16', 16", 16''', 16'''', 16''''').

5. Röntgendetektor (10, 10', 10", 10''', 10'''', 10''''', 10'''''', 10''''''') gemäß einem der Ansprüche 1 bis 4, wobei der Verlauf der Energiedeposition über die Eindringtiefe (t) anhand der Faltung

$$I_{dep}(t,E) = I_{Verlust}(t,E) * y(x,t,E),$$

mit

$$I_{Verlust}(t,E) = \mu(E)I_0(E)\, e^{-\mu(E)t}$$

beschreibbar ist, wobei E die Röntgenphotonenenergie, μ ein Schwächungskoeffizient des Materials der Sensorzellen (12a, 14a, 16a, 12a' - 12i', 14a' - 14i', 16a' - 16i',12a" - 12i", 12a"' - 12i"', 14a"' - 14i"', 16a'" - 16i"', 12a"" - 12e"", 14a"" - 14e"", 16a'" - 16e""), $I_0$ die Ursprungsintensität der Strahlung und y(x,t,E) eine Verteilfunktion ist; und/oder

wobei die Verteilfunktion y(x,t,E) die Energiedeposition über eine Eindringtiefe durch Sekundäreffekte und -teilchen der Röntgenstrahlung (18) beschreibt, wobei die Energiedeposition durch die Sekundärteilchen Effekten aus der Gruppe, welche Photoeffekt, Comptonstreuung, Paarbildung und/oder Reichweite und dem Energiedepositionsverhalten von Sekundärelektronen umfasst, unterliegt; und/oder

wobei das Ergebnis der Faltung mathematisch durch folgende Formel zu beschreiben ist:

$$\text{für } t = 0 \text{ bis } t = t_{lmax}: \quad I_{dep\_r}(t) = I_{max} - I_{hub}\, e^{-\mu_r t}$$

wobei $\mu_r$ ein den aufklingenden Bereich t = 0 bis t = $t_{lmax}$ beschreibender Koeffizient ist,
$I_{max}$ der maximale Intensitätseintrag oder ein auf den Ursprungsintensitätseintrag oder ein auf den absoluten Intensitätseintrag oder den absoluten Ursprungsintensitätseintrag $I_0$ normierter Intensitätseintrag ist, und
$I_{hub}$ die Intensitätsdifferenz zwischen der Oberflächenintensität und dem maximalen Intensitätseintrag oder eine auf der Ursprungsintensitätsdifferenz oder eine auf den absoluten Intensitätseintrag oder den absoluten Ursprungsintensitätseintrag normierte Intensitätsdifferenz ist; und/oder
wobei das Ergebnis der Faltung mathematisch durch folgende Formel zu beschreiben ist:

$$\text{für } t = t_{lmax} \text{ bis } t = t_{max}: \quad I_{dep\_f}(t) = I_\gamma e^{-\mu_f t},$$

wobei $\mu_f$ ein den abklingenden Bereich t = $t_{lmax}$ bis $t_{max}$ beschreibender Koeffizient ist,
$t_{lmax}$ die Tiefenposition des maximalen Intensitätseintrags ist, und
$I_\gamma$ ein Energieeintrag oder ein auf den Ursprungsintensitätseintrag oder ein auf den absoluten Ursprungsintensitätseintrag normierten Energieeintrag ist.

6. Röntgendetektor (10, 10', 10", 10"', 10"", 10""', 10""", 10"""") gemäß einem der Ansprüche 1 bis 5, wobei zwischen der ersten und zweiten Sensorschicht (14, 14', 14", 14"', 14"", 14""') und/oder zwischen der zweiten und dritten Sensorschicht (16, 16', 16", 16"', 16"", 16""') weitere Sensorschichten angeordnet sind.

7. Röntgendetektor (10, 10', 10", 10"', 10"", 10""', 10""", 10"""") gemäß einem der Ansprüche 1 bis 6, wobei die Sensorzellen (12a, 14a, 16a, 12a' - 12i', 14a' - 14i', 16a' - 16i',12a" - 12i", 12a"' - 12i"', 14a"' - 14i"', 16a'" - 16i"', 12a"' - 12e"", 14a"" - 14e"", 16a"" - 16e""') der einzelnen Sensorschichten (12, 12', 12", 12"', 12"", 12""', 14, 14', 14", 14"', 14"", 14""', 16, 16', 16", 16"', 16"", 16""') entlang der Einstrahlungsrichtung (19, 19') zueinander fluchtend ausgerichtet sind.

8. Röntgendetektor (10, 10', 10", 10"', 10"", 10""', 10""", 10"""") gemäß Anspruch 1, wobei die Sensorzellen (12a, 14a, 16a, 12a' - 12i', 14a' - 14i', 16a' - 16i',12a" - 12i", 12a"' - 12i"', 14a"' - 14i"', 16a'" - 16i"', 12a"" - 12e"", 14a"" - 14e"", 16a"" - 16e""') der Sensorschichten (12, 12', 12", 12"', 12"", 12""', 14, 14', 14", 14"', 14"", 14""', 16, 16', 16", 16"', 16"", 16""') aneinander angrenzend sind.

9. Röntgendetektor (10, 10', 10", 10"', 10"", 10""', 10""", 10"""") gemäß einem der vorherigen Ansprüche, der mindestens vier oder fünf Sensorschichten umfasst.

10. Röntgensystem mit folgenden Merkmalen:

einem Röntgendetektor (10, 10', 10", 10"', 10"", 10""', 10""", 10"""") gemäß einem der Ansprüche 1 bis 9; und
einer Auswertevorrichtung, die ausgebildet ist, um eine Eigenschaft des Objekts auf Basis des Verlaufs der Energiedeposition über die Eindringtiefe zu bestimmen.

11. Röntgensystem gemäß Anspruch 10, wobei die Auswertevorrichtung ausgebildet ist, um die Eigenschaft des Objekts auf Basis eines bekannten Spektrums der Röntgenstrahlung (18) und/oder auf Basis eines bekannten Einflusses hinsichtlich Strahlaufhärtung des Materials der Sensorzellen (12a, 14a, 16a, 12a' - 12i', 14a' - 14i', 16a' - 16i',12a" - 12i", 12a"' - 12i"', 14a"' - 14i"', 16a'" - 16i"', 12a"" - 12e"", 14a"" - 14e"", 16a"" - 16e""') und/oder hinsichtlich Energiedeposition in dem Material der Sensorzellen (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"") zu ermitteln; und/oder wobei die Auswertevorrichtung ausgebildet ist, um die Eigenschaft des Objekts mittels einer Nachschlagtabelle, in welcher ein Zusammenhang zwischen einem Sensorsignal $I_x$ und dem Energiedepositionsverlauf entlang der Eindringtiefe gespeichert ist, zu ermitteln; und/oder wobei die Auswertevorrichtung ausgebildet ist, um die Eigenschaft des Objekts mittels einer Nachschlagtabelle, in welcher ein Zusammenhang zwischen einem Sensorsignal $I_x$ und dem Spektrum der Röntgenstrahlung (18) gespeichert ist, zu ermitteln, wobei der Zusammenhang einen Rückschluss auf einen Energiedepositionsverlauf entlang der Eindringtiefe zulässt.

12. Röntgensystem gemäß Anspruch 10 oder 11, wobei die Auswertevorrichtung ausgebildet ist, um den Verlauf der Energiedeposition anhand von zwei e-Funktionen

$$\text{für } t = 0 \text{ bis } t = t_{Imax}: \quad I_{dep\_r}(t) = I_{max} - I_{hub}\, e^{-\mu_r t},$$

$$\text{für } t = t_{Imax} \text{ bis } t = t_{max} \quad I_{dep\_f}(t) = I_\gamma\, e^{-\mu_f t},$$

die bis zu sechs Koeffizienten umfassen, durch Bestimmung der bis zu sechs Koeffizienten zu berechnen,

wobei $\mu_r$ ein den aufklingenden Bereich $t = 0$ bis $t = t_{Imax}$ beschreibender Koeffizient ist,
$I_{max}$ der maximale Intensitätseintrag oder ein auf den Ursprungsintensitätseintrag oder ein auf den absoluten Intensitätseintrag oder den absoluten Ursprungsintensitätseintrag $I_0$ normierter Intensitätseintrag ist,
$I_{hub}$, die Intensitätsdifferenz zwischen der Oberflächenintensität und dem maximalen Intensitätseintrag oder eine auf der Ursprungsintensitätsdifferenz oder eine auf den absoluten Intensitätseintrag oder den absoluten Ursprungsintensitätseintrag normierte Intensitätsdifferenz ist,
$\mu_f$ ein den abklingenden Bereich $t = t_{Imax}$ bis $t_{max}$ beschreibender Koeffizient ist,
$t_{Imax}$ die Tiefenposition des maximalen Intensitätseintrags ist, und
$I_\gamma$ ein Energieeintrag oder ein auf den Ursprungsintensitätseintrag oder ein auf den absoluten Ursprungsintensitätseintrag normierten Energieeintrag ist.

13. Röntgensystem gemäß Anspruch 12, wobei die Bestimmung der Koeffizienten darauf basiert, dass $\ln(I_2/I_1)$ proportional zu dem ersten der sechs Koeffizienten ist und/oder dass $\ln(I_3/I_2)$ proportional zu dem vierten der sechs Koeffizienten ist, und wobei $I_1$ ein Sensorsignal einer Sensorzelle (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"") der ersten Sensorschicht (12, 12', 12", 12"', 12"", 12""), $I_2$ ein Sensorsignal einer Sensorzelle (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"") der zweiten Sensorschicht (14, 14', 14", 14"', 14"", 14"") und $I_3$ ein Sensorsignal einer Sensorzelle (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"") der dritten Sensorschicht (16, 16', 16", 16"', 16"", 16"") ist.

14. Verwendung eines Röntgendetektors (10, 10', 10", 10"', 10"", 10"", 10'"", 10"""') gemäß einem der Ansprüche 1 bis 9 zur Strahlungsfelddetektion, wobei auf Basis der Sensorsignale der Vielzahl der Sensorsignale $I_x$, auf die eine Strahlung einwirkt, eine Vielzahl von Eindringpfaden (19, 19', 19", 19"', 19"") und auf Basis der Vielzahl der Eindringpfade (19, 19', 19", 19"', 19"") ein Schnittpunkt der Eindringpfade (19, 19', 19", 19"', 19"") und damit ein Strahlungsfeld detektierbar sind.

15. Verfahren zur Bestimmung einer Eigenschaft eines Objekts und/oder einer Eigenschaft eines Durchstrahlungssystems mittels eines Röntgendetektors (10, 10', 10", 10"', 10"", 10"", 10'"", 10""") gemäß einem der Ansprüche 1 bis 8, mit folgenden Schritten:

Ermitteln eines Verlaufs einer Energiedeposition über eine Eindringtiefe durch die mindestens drei Sensorschichten auf Basis der Sensorsignale $I_x$ der Sensorzellen (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"") der mindestens drei Sensorschichten; und

Bestimmung der Eigenschaft des Objekts und/oder der Eigenschaft des Durchstrahlungssystems auf Basis des ermittelten Verlaufs der Energiedeposition.

16. Verfahren gemäß Anspruch 15, wobei der Verlauf der Energiedeposition anhand von zwei e-Funktionen

$$\text{für } t = 0 \text{ bis } t = t_{Imax}: \quad I_{dep\_r}(t) = I_{max} - I_{hub}\,e^{-\mu_r t},$$

$$\text{für } t = t_{Imax}: \text{ bis } t = t_{max} \quad I_{dep\_f}(t) = I_\gamma\,e^{-\mu_f t},$$

die bis zu sechs Koeffizienten umfassen, durch Bestimmung der bis zu sechs Koeffizienten berechenbar ist,

wobei $\mu_r$ ein den aufklingenden Bereich $t = 0$ bis $t = t_{Imax}$ beschreibender Koeffizient ist,
$I_{max}$ der maximale Intensitätseintrag oder ein auf den Ursprungsintensitätseintrag oder ein auf den absoluten Intensitätseintrag oder den absoluten Ursprungsintensitätseintrag $I_0$ normierter Intensitätseintrag ist,
$I_{hub}$ die Intensitätsdifferenz zwischen der Oberflächenintensität und dem maximalen Intensitätseintrag oder eine auf der Ursprungsintensitätsdifferenz oder eine auf den absoluten Intensitätseintrag oder den absoluten Ursprungsintensitätseintrag normierte Intensitätsdifferenz ist,
$\mu_f$ ein den abklingenden Bereich $t = t_{Imax}$ bis $t_{max}$ beschreibender Koeffizient ist,
$t_{Imax}$ die Tiefenposition des maximalen Intensitätseintrags ist, und
$I_\gamma$ ein absoluter auf die Ursprungsintensität $I_0$ normierten Energieeintrag ist, und

wobei das Ermitteln des Verlaufs der Energiedeposition das Bestimmen der bis zu sechs Koeffizienten umfasst;
und/oder
wobei die Eigenschaft des Objekts eine Information über Material und/oder eine Dicke des Objekts ist, wobei die Eigenschaft des Durchstrahlungssystems eine Information über eine Geometrie des Durchstrahlungssystems und/oder ein Spektrum einer Strahlenquelle des Durchstrahlungssystems ist.

17. Computerprogramm mit einem Programmcode zur Durchführung des Verfahrens nach einem der Ansprüche 15 bis 16, wenn das Programm auf einem Computer abläuft.

**Claims**

1. X-ray detector (10, 10', 10", 10"', 10"", 10""', 10"""', 10"""") for detecting X-rays (18) having an energy of more than 400 keV and a spectrum for determining a characteristic of an object and/or a radiography system, comprising:

a first sensor layer (12, 12', 12", 12"', 12"", 12""") having at least one sensor cell (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"");
a second sensor layer (14, 14', 14", 14"', 14"", 14""") having at least one sensor cell (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e""); and
a third sensor layer (16, 16', 16", 16"', 16"", 16""") having at least one sensor cell (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"");
wherein the at least three sensor layers (12, 12', 12", 12"', 12"", 12""", 14, 14', 14", 14"', 14"", 14""", 16, 16', 16", 16"', 16"", 16""") are arranged one behind the other in the irradiation direction (19, 19') of the X-rays(18),
wherein the sensor cells (12a, 14a, 16a, 12a'- 12i', 14a' - 14i', 16a'- 16i',12a" - 12i", 12a"' - 12i"', 14a"' - 14i"', 16a"' - 16i"', 12a"" - 12e"", 14a"" - 14e"", 16a"" - 16e"") of the first, second and third sensor layer (12, 12', 12", 12"', 12"", 12""", 14, 14', 14", 14"', 14"", 14""", 16, 16', 16", 16"', 16"", 16""") are configured to output one sensor signal $I_x$ each, depending on the impacting X-rays(18) and
wherein, based on the sensor signals $I_x$ of the sensor cells (12a, 14a, 16a, 12a' - 12i', 14a' - 14i', 16a' - 16i',12a" - 12i", 12a"' - 12i"', 14a"' - 14i"', 16a"' - 16i"', 12a"" -12e"", 14a"" - 14e"", 16a"" - 16e"") of the at least three sensor layers (12, 12', 12", 12"', 12"", 12""", 14, 14', 14", 14"', 14"", 14""", 16, 16', 16", 16"', 16"", 16""), a course of an energy disposition across a penetration depth for X-rays having an energy of more than 400 keV through the at least three sensor layers can be determined,
wherein the first sensor layer (12, 12', 12", 12"', 12"", 12""") is arranged, depending on the spectrum of the X-rays (18), such that the course of the energy deposition across the penetration depth increases at the position of the first sensor layer (12, 12', 12", 12"', 12"") and wherein the third sensor layer (16, 16', 16", 16"', 16"", 16""') is arranged, depending on the spectrum of the X-rays (18), such that the course of the energy deposition across the penetration depth decreases at the position of the third sensor layer (16, 16', 16", 16"', 16"", 16""'),

wherein the second sensor layer (14, 14', 14", 14"', 14"", 14""') is arranged, depending on the spectrum of the X-rays (18), such that the course of the energy deposition has an intensity maximum within the position of the second sensor layer (14, 14', 14", 14"', 14"", 14""'); wherein the characteristic of the object and/or the radiography system can be determined based on the determined course of the energy disposition.

2. X-ray detector (10, 10', 10", 10"', 10"", 10""', 10"""', 10"""'') according to claim 1, wherein the first, second and third sensor layer (12, 12', 12", 12"', 12"", 12""', 14, 14', 14", 14"', 14"", 14""', 16, 16', 16", 16"', 16"", 16""') each include a plurality of sensor cells (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"") arranged side by side; and/or

wherein the X-ray detector (10, 10', 10", 10"', 10"", 10""', 10"""', 10"""'') is a planar detector.

3. X-ray detector (10, 10', 10", 10"', 10"", 10""', 10"""', 10"""'') according to one of claims 1 to 2, wherein at least two of the at least three sensor layers (12, 12', 12", 12"', 12"", 12""', 14, 14', 14", 14"', 14"", 14""', 16, 16', 16", 16"', 16"", 16""') comprise different sensor materials; and/or

wherein the first sensor layer (12, 12', 12", 12"', 12"", 12""') is arranged in front of the second and/or third sensor layer (16, 16', 16", 16"', 16"", 16""') in the irradiation direction (19, 19') and wherein a sensor material of the first sensor layer (12, 12', 12", 12"', 12"", 12""') comprises a lower atomic number and/or density compared to a sensor material of the second and/or third sensor layer (16, 16', 16", 16"', 16"", 16""') to spatially extend the effect of the increasing energy deposition.

4. X-ray detector (10, 10', 10", 10"', 10"", 10""', 10"""', 10"""'') according to one of claims 1 to 3, wherein a thickness of the first sensor layer (12, 12', 12", 12"', 12"", 12""') is smaller than a thickness of the second sensor layer (14, 14', 14", 14"', 14"", 14""'); and/or

wherein layer thicknesses of the first and second sensor layer (14, 14', 14", 14"', 14"", 14""') are selected such that a thickness difference between the first sensor layer (12, 12', 12", 12"', 12"", 12""') and the second sensor layer (14, 14', 14", 14"', 14"", 14""') is smaller than a thickness difference between the second sensor layer (14, 14', 14", 14"', 14"", 14""') and the third sensor layer (16, 16', 16", 16"', 16"", 16""').

5. X-ray detector (10, 10', 10", 10"', 10"", 10""', 10"""', 10"""'') according to one of claims 1 to 4, wherein the course of the energy deposition across the penetration depth (t) can be described based on the convolution

$$I_{dep}(t, E) = I_{loss}(t, E) * y(x, t, E),$$

with

$$I_{loss}(t, E) = \mu(E)I_0(E)\, e^{-\mu(E)t}$$

wherein E is the X-ray photon energy, $\mu$ is an attenuation coefficient of the material of the sensor cells (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e""), $I_0$ the original intensity of the radiation and y(x,t,E) a distribution function; and/or
wherein the distribution function y(x,t,E) describes the energy deposition across a penetration depth by secondary effects and particles of the X-rays (18), wherein the energy deposition by the secondary particles is subject to effects of the group including photo effects, compton scattering, pairing and/or range and the energy deposition behavior of secondary electrons; and/or
wherein the result of the convolution can be described mathematically by the following equation:

for t = 0 to t = $t_{Imax}$:    $I_{dep\_r}(t) = I_{max} - I_{hub}\, e^{-\mu_r t}$

wherein $\mu_r$ is a coefficient describing the spreading range t = 0 to t = $t_{Imax}$,
$I_{max}$ is the maximum intensity input or an intensity input normalized to the original intensity input or to the absolute intensity input or the absolute original intensity input $I_0$ and

$I_{hub}$ is the intensity difference between the surface intensity and the maximum intensity input or an intensity difference normalized to the original intensity difference or to the absolute intensity input or the absolute original intensity input; and/or

wherein the result of the convolution can be described mathematically by the following equation:

$$\text{for } t = t_{lmax} \text{ to } t = t_{max}: \quad I_{dep\_f}(t) = I_\gamma e^{-\mu_f t},$$

wherein $\mu_f$ is a coefficient describing the fading range $t = t_{lmax}$ to $t_{max}$,

$t_{max}$ is the depth position of the maximum intensity input and

$I_\gamma$ is an energy input or an energy input normalized to the original intensity input or the absolute original intensity input.

6.  X-ray detector (10, 10', 10", 10'", 10"", 10'"", 10"""') according to one of claims 1 to 5, wherein further sensor layers are arranged between the first and second sensor layer (14, 14', 14", 14'", 14"", 14"""') and/or between the second and third sensor layer (16, 16', 16", 16'", 16"", 16"""').

7.  X-ray detector (10, 10', 10", 10'", 10"", 10'"", 10"""') according to one of claims 1 to 6, wherein the sensor cells (12a, 14a, 16a, 12a' - 12i', 14a' - 14i', 16a' - 16i', 12a" - 12i", 12a'" - 12i'", 14a'" - 14i'", 16a'" - 16i'", 12a"" - 12e"", 14a"" - 14e"", 16a"" - 16e"") of the individual sensor layers (12, 12', 12", 12'", 12"", 12"""', 14, 14", 14", 14'", 14"", 14"""', 16, 16', 16", 16'", 16"", 16"""') are aligned with one another in a flush manner along the irradiation direction (19, 19').

8.  X-ray detector (10, 10', 10", 10'", 10"", 10'"", 10"""') according to claim 1, wherein the sensor cells (12a, 14a, 16a, 12a' - 12i', 14a' - 14i', 16a' - 16i', 12a" - 12i", 12a'" - 12i'", 14a'" - 14i'", 16a'" - 16i'", 12a"" - 12e"", 14a"" - 14e"", 16a"" - 16e"") of the sensor layers (12, 12', 12", 12'", 12"", 12"""', 14, 14', 14", 14'", 14"", 14"""', 16, 16', 16", 16'", 16"", 16"""') are adjacent to one another.

9.  X-ray detector (10, 10', 10", 10'", 10"", 10'"", 10"""') according to one of the preceding claims comprising at least four or five sensor layers.

10. X-ray system, comprising:

an X-ray detector (10, 10', 10", 10'", 10"", 10'"", 10"""') according to one of claims 1 to 9; and
an evaluation apparatus configured to determine a characteristic of the object based on the course of the energy deposition across the penetration depth.

11. X-ray system according to claim 10, wherein the evaluation apparatus is configured to determine the characteristic of the object based on a known spectrum of the X-rays (18) and/or based on a known influence regarding beam-hardening of the material of the sensor cells (12a, 14a, 16a, 12a' - 12i', 14a' - 14i', 16a' - 16i', 12a" - 12i", 12a'" - 12i'", 14a'" - 14i'", 16a'" - 16i'", 12a"" - 12e"", 14a"" - 14e"", 16a"" - 16e"") and/or regarding energy deposition in the material of the sensor cells (12a, 14a, 16a, 12a' - 12i', 14a' - 14i', 16a' - 16i', 12a" - 12i", 12a'" - 12i'", 14a'" - 14i'", 16a'" - 16i'", 12a"" - 12e"", 14a"" - 14e"", 16a"" - 16e"") and/or
wherein the evaluation apparatus is configured to determine the characteristic of the object by means of a lookup table where a connection between a sensor signal $I_x$ and the course of the energy deposition along the penetration depth is stored; and/or
wherein the evaluation apparatus is configured to determine the characteristic of the object by means of a lookup table where a connection between a sensor signal $I_x$ and the spectrum of the X-rays (18) is stored, wherein the connection allows a conclusion to be drawn on a course of the energy deposition along the penetration depth.

12. X-ray system according to claim 10 or 11, wherein the evaluation apparatus is configured to calculate the course of the energy deposition based on two e functions

$$\text{for } t = 0 \text{ to } t = t_{lmax}: \quad I_{dep\_r}(t) = I_{max} - I_{hub} e^{-\mu_r t},$$

$$\text{for } t = t_{Imax}: \text{ to } t = t_{max} \quad I_{dep\_f}(t) = I_\gamma e^{-\mu_f t},$$

including up to six coefficients by determining the up to six coefficients,

wherein $\mu_r$ is a coefficient describing the spreading range $t = 0$ to $t = t_{Imax}$,

$I_{max}$ is the maximum intensity input or an intensity input normalized to the original intensity input or to the absolute intensity input or the absolute original intensity input $I_0$ and

$I_{hub}$ is the intensity difference between the surface intensity and the maximum intensity input or an intensity difference normalized to the original intensity difference or to the absolute intensity input or the absolute original intensity input;

$\mu_f$ is a coefficient describing the fading range $t = t_{Imax}$ to $t_{max}$,

$t_{max}$ is the depth position of the maximum intensity input and

$I_\gamma$ is an energy input or an energy input normalized to the original intensity input or the absolute original intensity input.

13. X-ray system according to claim 12, wherein determining the coefficients is based on the fact that $\ln(I_2/I_1)$ is proportional to the first of the six coefficients and/or that $\ln(I_3/I_2)$ is proportional to the fourth of the six coefficients and wherein $I_1$ is a sensor signal of a sensor cell (12a, 14a, 16a, 12a' - 12i', 14a' - 14i', 16a' - 16i',12a" - 12i", 12a"' - 12i"', 14a"' - 14i"', 16a"' - 16i"', 12a"" -12e"", 14a"" - 14e"", 16a"" - 16e"") of the first sensor layer (12, 12', 12", 12"', 12"", 12""'), $I_2$ is a sensor signal of a sensor cell (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"") of the second sensor layer (14, 14', 14", 14"', 14"", 14""') and $I_3$ is a sensor signal of a sensor cell (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"") of the third sensor layer (16, 16', 16", 16"', 16"", 16""').

14. Usage of an X-ray detector (10, 10', 10", 10"', 10"", 10""', 10""", 10""""") according to one of claims 1 to 9 for radiation field detection, wherein, based on the sensor signals of the plurality of sensor signals $I_x$, on which radiation impacts, a plurality of penetration paths (19, 19', 19", 19"', 19"") and based on the plurality of penetration paths (19, 19', 19", 19"', 19"") an intersection of the penetration paths (19, 19', 19", 19"', 19"") and hence a radiation field can be detected.

15. Method for determining a characteristic of an object and/or a characteristic of a radiography system by means of an X-ray detector (10, 10', 10", 10"', 10"", 10""', 10""", 10""""") according to one of claims 1 to 8, comprising:

determining a course of an energy deposition across a penetration depth through the at least three sensor layers based on the sensor signals $I_x$ of the sensor cells (12a, 14a, 16a, 12a' - 12i', 14a' - 14i', 16a' - 16i',12a" - 12i", 12a"' - 12i"', 14a"' - 14i"', 16a"' - 16i"', 12a"" - 12e"", 14a"" - 14e"", 16a"" - 16e"") of the at least three sensor layers; and

determining the characteristic of the object and/or the characteristic of the radiography system based on the determined course of the energy deposition.

16. Method according to claim 15, wherein the course of the energy deposition can be calculated based on two e functions

$$\text{for } t = 0 \text{ to } t = t_{Imax}: \quad I_{dep\_r}(t) = I_{max} - I_{hub} e^{-\mu_r t},$$

$$\text{for } t = t_{Imax}: \text{ to } t = t_{max} \quad I_{dep\_f}(t) = I_\gamma e^{-\mu_f t},$$

including up to six coefficients by determining the up to six coefficients,

wherein $\mu_r$ is a coefficient describing the spreading range $t = 0$ to $t = t_{Imax}$,

$I_{max}$ is the maximum intensity input or an intensity input normalized to the original intensity input or to the absolute intensity input or the absolute original intensity input $I_0$ and

$I_{hub}$ is the intensity difference between the surface intensity and the maximum intensity input or an intensity difference normalized to the original intensity difference or to the absolute intensity input or the absolute original

intensity input,

$\mu_f$ is a coefficient describing the fading range t = $t_{Imax}$ to $t_{max}$,

$t_{max}$ is the depth position of the maximum intensity input and

$I_\gamma$ is an absolute energy input normalized to the original intensity $I_0$ and

wherein determining the course of the energy deposition includes determining the up to six coefficients; and/or wherein the characteristic of the object is information on material and/or thickness of the object, wherein the characteristic of the radiography system is information on the geometry of the radiography system and/or a spectrum of a radiation source of the radiography system.

17. Computer program having a program code for performing the method according to one of claims 15 to 16 when the program runs on a computer.

## Revendications

1. Détecteur de rayons X (10, 10', 10", 10"', 10"", 10""', 10""", 10""") destiné à détecter le rayonnement X (18) d'une énergie supérieure à 400 keV, et un spectre pour déterminer une propriété d'un objet et/ou d'un système radiographique, aux caractéristiques suivantes:

une première couche de détection (12, 12', 12", 12"', 12"", 12""") avec au moins une cellule de capteur (12a, 14a, 16a, 12a' à 12i', 14a' à 14i', 16a' à 16i', 12a" à 12i", 12a"' à 12i"', 14a"' à 14i"', 16a"' à 16i"', 12a"" à 12e"", 14a"" à 14e"", 16a"" à 16e"");

une deuxième couche de détection (14, 14', 14", 14"', 14"", 14""") avec au moins une cellule de capteur (12a, 14a, 16a, 12a' à 12i', 14a' à 14i', 16a' à 16i', 12a" à 12i", 12a"' à 12i"', 14a"' à 14i"', 16a"' à 16i"', 12a"" à 12e"", 14a"" à 14e"", 16a"" à 16e""); et

une troisième couche de détection (16, 16', 16", 16"', 16"", 16""), avec au moins une cellule de capteur (12a, 14a, 16a, 12a' à 12i', 14a' à 14i', 16a' à 16i', 12a" à 12i", 12a"' à 12i"', 14a"' à 14i"', 16a"' à 16i"', 12a"" à 12e"", 14a"" à 14e"", 16a"" à 16c"");

dans lequel les au moins trois couches de détection (12, 12', 12", 12"', 12"", 12""", 14, 14', 14", 14"', 14"", 14""", 16, 16', 16", 16"', 16"", 16""") sont disposés l'une derrière l'autre dans la direction de rayonnement (19, 19') des rayons X (18),

dans lequel les cellules de capteur (12a, 14a, 16a, 12a' à 12i', 14a' à 14i', 16a' à 16i', 12a" à 12i", 12a"' à 12i"', 14a"' à 14i"', 16a"' à 16i"', 12a"" à 12e"", 14a"" à 14e"", 16a"" à 16e"") de la première, de la deuxième et de la troisième couche de détection (12, 12', 12", 12"', 12"", 12""", 14, 14', 14", 14"', 14"", 14""", 16, 16', 16", 16"', 16"", 16""") sont conçues pour émettre, chacune, un signal de capteur $I_x$ en fonction du rayonnement agissant (18), et dans lequel peut être déterminée, sur base des signaux de capteur $I_x$ des cellules de capteur (12a, 14a, 16a, 12a' à 12i', 14a' à 14i', 16a' à 16i', 12a" à 12i", 12a"' à 12i"', 14a"' à 14i"', 16a"' à 16i"', 12a"" à 12e"", 14a"" à 14e"", 16a"" à 16e"") des au moins trois couches de détection (12, 12', 12", 12"', 12"", 12""", 14, 14', 14", 14"', 14"", 14""", 16, 16', 16", 16"', 16"", 16""), une évolution d'un dépôt d'énergie sur une profondeur de pénétration à un rayonnement X d'une énergie supérieure à 400 Kev à travers les au moins trois couches de détection,

dans lequel la première couche de détection (12, 12', 12", 12"', 12"", 12""") est disposée en fonction du spectre du rayonnement X (18) de sorte que, à la position de la première couche de détection (12, 12', 12", 12"', 12"", 12""), l'évolution du dépôt d'énergie augmente avec la profondeur de pénétration, et dans lequel la troisième couche de détection (16, 16', 16", 16"', 16"", 16""") est disposée en fonction du spectre du rayonnement X (18) de sorte que, à la position de la troisième couche de détection (16, 16', 16", 16"', 16"", 16""), l'évolution du dépôt d'énergie diminue avec la profondeur de pénétration,

dans lequel la deuxième couche de détection (14, 14', 14", 14"', 14"", 14""") est disposée en fonction du spectre du rayonnement X (18) de sorte que, à la position de la deuxième couche de détection (14, 14', 14", 14"', 14"", 14""), l'évolution du dépôt d'énergie présente un maximum d'intensité; dans lequel la propriété de l'objet et/ou du système radiographique peut être déterminée sur base de l'évolution déterminée du dépôt d'énergie.

2. Détecteur de rayons X (10, 10', 10", 10"', 10"", 10""', 10""", 10""") selon la revendication 1, dans lequel la première, la deuxième et la troisième couche de détection (12, 12', 12", 12"', 12"", 12""", 14, 14', 14", 14"', 14"", 14""", 16, 16', 16", 16"', 16"", 16""") comportent, chacune, une pluralité de cellules de capteur disposées l'une à côté de l'autre (12a, 14a, 16a, 12a' à 12i', 14a' à 14i', 16a' à 16i', 12a" à 12i", 12a"' à 12i"', 14a"' à 14i"', 16a"' à 16i"', 12a"" à 12e"", 14a"" à 14e"", 16a"" à 16e""); et/ou

dans lequel le détecteur de rayons X (10, 10', 10", 10"', 10"", 10""', 10""", 10""") est un détecteur de surface.

3. Détecteur de rayons X (10, 10', 10", 10"', 10"", 10""', 10""", 10""") selon l'une des revendications 1 à 2, dans lequel au moins deux des au moins trois couches de détection (12, 12', 12", 12"', 12"", 12""", 14, 14', 14", 14"', 14"", 14""", 16, 16', 16", 16"', 16"", 16""") comportent différents matériaux de capteur; et/ou

dans lequel la première couche de détection (12, 12', 12", 12"', 12"", 12""") est disposée, dans la direction de rayonnement (19, 19'), avant la deuxième et/ou la troisième couche de détection (16, 16', 16", 16"', 16"", 16""") et dans lequel un matériau de capteur de la première couche de détection (12, 12', 12", 12"', 12"", 12""") présente un numéro atomique et/ou une densité inférieurs par rapport à un matériau de capteur de la deuxième et/ou troisième couche de détection (16, 16', 16", 16"', 16"", 16""") pour étendre spatialement l'effet de l'augmentation du dépôt d'énergie.

4. Détecteur de rayons X (10, 10', 10", 10"', 10"", 10""', 10""", 10""") selon l'une quelconque des revendications 1 à 3, dans lequel une épaisseur de la première couche de détection (12, 12', 12", 12"', 12"", 12""") est inférieure à une épaisseur de la deuxième couche de détection (14, 14', 14", 14"', 14"", 14""'); et/ou

dans lequel les épaisseurs de couche de la première et de la deuxième couche de détection (14, 14', 14", 14"', 14"", 14""") sont sélectionnées de sorte qu'une différence d'épaisseur entre la première couche de détection (12, 12', 12", 12"', 12"", 12""") et la deuxième couche de détection (14, 14', 14", 14"', 14"", 14""") soit inférieure à une différence d'épaisseur entre la deuxième couche de détection (14, 14', 14", 14"', 14"", 14""") et la troisième couche de détection (16, 16', 16", 16"', 16"", 16""").

5. Détecteur de rayons X (10, 10', 10", 10"', 10"", 10""', 10""", 10""") selon l'une des revendications 1 à 4, dans lequel l'évolution du dépôt d'énergie avec la profondeur de pénétration (t) peut être décrite à l'aide de la convolution

$$I_{dep}(t,E) = I_{perte}(t,E) * y(x,t,E) ,$$

où

$$I_{perte}(t,E) = \mu(E)I_0(E)\, e^{-\mu(E)t}$$

où E est l'énergie des photons des rayons X, $\mu$ est un coefficient d'affaiblissement du matériau des cellules de capteur (12a, 14a, 16a, 12a' à 12i', 14a' à 14i', 16a' à 16i', 12a" à 12i", 12a"' à 12i"', 14a"' à 14i"', 16a"' à 16i"', 12a"" à 12e"", 14a"" à 14e"", 16a"" à 16e""), $I_0$ est l'intensité originale du rayonnement et y(x,t,E) est une fonction de distribution; et/ou

dans lequel la fonction de distribution y(x,t,E) décrit le dépôt d'énergie sur une profondeur de pénétration par les effets et les particules secondaires du rayonnement X (18), dans lequel le dépôt d'énergie par les particules secondaires est soumis aux effets du groupe qui comporte l'effet photoélectrique, la dispersion de Compton, la formation de paires et/ou la portée et le comportement du dépôt d'énergie des électrons secondaires; et/ou

dans lequel le résultat de la convolution peut être décrit mathématiquement par la formule suivante:

$$\text{pour } t = 0 \text{ à } t = t_{Imax}: \quad I_{dep\_r}(t) = I_{max} - I_{hub}e^{-\mu_r t}$$

où $\mu_r$ est un coefficient décrivant la zone émergente t = 0 à t = $t_{Imax}$,

$I_{max}$ est l'apport d'intensité maximal ou un apport d'intensité normalisé sur l'apport d'intensité original ou un apport d'intensité normalisé sur l'apport d'intensité absolu ou sur l'apport d'intensité original absolu $I_0$, et $I_{hub}$ est la différence d'intensité entre l'intensité de surface et l'apport d'intensité maximal ou une différence d'intensité normalisée sur la différence d'intensité originale ou une différence d'intensité normalisée sur l'apport d'intensité absolu ou sur l'apport d'intensité original absolu; et/ou

dans lequel le résultat de la convolution peut être décrit mathématiquement par la formule suivante:

$$\text{pour } t = t_{Imax} \text{ à } t = t_{max}: \quad I_{dep\_f}(t) = I_\gamma e^{-\mu_f t},$$

où $\mu_f$ est un coefficient décrivant la zone émergente t = $t_{Imax}$ à $t_{max}$,

$t_{Imax}$ est la position en profondeur de l'apport d'intensité maximal, et

$I_\gamma$ est un apport d'énergie ou un apport d'énergie normalisé sur l'apport d'intensité original ou un apport d'énergie normalisé sur l'apport d'intensité original absolu.

**6.** Détecteur de rayons X (10, 10', 10", 10'", 10"", 10'"", 10'"", 10"""") selon l'une des revendications 1 à 5, dans lequel sont disposées, entre la première et la deuxième couche de détection (14, 14', 14", 14'", 14"", 14'"") et/ou entre la deuxième et la troisième couche de détection (16, 16', 16", 16'", 16"", 16'"") , d'autres couches de détection.

**7.** Détecteur de rayons X (10, 10', 10", 10'", 10"", 10'"", 10'"", 10"""") selon l'une des revendications 1 à 6, dans lequel les cellules de capteur (12a, 14a, 16a, 12a' à 12i', 14a' à 14i', 16a' à 16i', 12a" à 12i", 12a'" à 12i'", 14a'" à 14i'", 16a'" à 16i'", 12a"" à 12e"", 14a"" à 14e'", 16a"" à 16e"") des couches de détection individuelles (12, 12', 12", 12'", 12"", 12'"", 14, 14', 14", 14'", 14"", 14'"", 16, 16', 16", 16'", 16"", 16'"") sont alignées à fleur l'une avec l'autre le long de la direction de rayonnement (19, 19').

**8.** Détecteur de rayons X (10, 10', 10", 10'", 10"", 10'"", 10'"", 10"""") selon la revendication 1, dans lequel les cellules de capteur (12a, 14a, 16a, 12a' à 12i', 14a' à 14i', 16a' à 16i', 12a" à 12i", 12a'" à 12i'", 14a'" à 14i'", 16a'" à 16i'", 12a"" à 12e"", 14a"" à 14e'", 16a"" à 16e"") des couches de détection (12, 12', 12", 12'", 12"", 12'"", 14, 14', 14", 14'", 14"", 14'"", 16, 16', 16", 16'", 16"", 16'"") sont adjacentes l'une à l'autre.

**9.** Détecteur de rayons X (10, 10', 10", 10'", 10"", 10'"", 10'"", 10"""") selon l'une des revendications précédentes, qui comporte au moins quatre ou cinq couches de détection.

**10.** Système à rayons X aux caractéristiques suivantes:

un détecteur de rayons X (10, 10', 10", 10'", 10"", 10'"", 10'"", 10"""") selon l'une des revendications 1 à 9; et un dispositif d'évaluation qui est conçu pour déterminer une propriété de l'objet sur base de l'évolution du dépôt d'énergie sur la profondeur de pénétration.

**11.** Système à rayons X selon la revendication 10, dans lequel le dispositif d'évaluation est conçu pour déterminer la propriété de l'objet sur base d'un spectre connu du rayonnement X (18) et/ou sur base d'une influence connue en ce qui concerne le durcissement par faisceau du matériau des cellules de capteur (12a, 14a, 16a, 12a' à 12i', 14a' à 14i', 16a' à 16i', 12a" à 12i", 12a'" à 12i'", 14a'" à 14i'", 16a'" à 16i'", 12a"" à 12e"", 14a"" à 14e"", 16a"" à 16e"") et/ou en ce qui concerne le dépôt d'énergie dans le matériau des cellules de capteur (12a, 14a, 16a, 12a' à 12i', 14a' à 14i', 16a' à 16i', 12a" à 12i", 12a'" à 12i'", 14a'" à 14i'", 16a'" à 16i'", 12a"" à 12e"", 14a"" à 14e"", 16a"" à 16e""); et/ou

dans lequel le dispositif d'évaluation est conçu pour déterminer la propriété de l'objet au moyen d'un tableau de consultation dans lequel est mémorisé un rapport entre un signal de capteur $I_x$ et l'évolution de dépôt d'énergie le long de la profondeur de pénétration; et/ou

dans lequel le dispositif d'évaluation est conçu pour déterminer la propriété de l'objet au moyen d'un tableau de consultation dans lequel est mémorisé un rapport entre un signal de capteur $I_x$ et le spectre du rayonnement X (18), dans lequel le rapport permet une conclusion sur une évolution de dépôt d'énergie le long de la profondeur de pénétration.

**12.** Système à rayons X selon la revendication 10 ou 11, dans lequel le dispositif d'évaluation est conçu pour calculer l'évolution du dépôt d'énergie à l'aide de deux e-fonctions

$$\text{pour t = 0 à t = t}_{\text{Imax}}: \quad I_{dep\_r}(t) = I_{max} - I_{hub}e^{-\mu_r t},$$

$$\text{pour t = t}_{\text{Imax}}: \text{ à t= t}_{max} \quad I_{dep\_f}(t) = I_\gamma e^{-\mu_f t},$$

qui comportent jusqu'à six coefficients, par détermination des jusqu'à six coefficients,

où $\mu_r$ est un coefficient décrivant la zone émergente t = 0 à t = $t_{Imax}$,
$I_{max}$ est l'apport d'intensité maximale ou un apport d'intensité normalisé sur l'apport d'intensité original ou un apport d'intensité normalisé sur l'apport d'intensité absolu ou sur l'apport d'intensité original absolu $I_0$,
$I_{hub}$ est la différence d'intensité entre l'intensité de surface et l'apport d'intensité maximal ou une différence d'intensité normalisée sur la différence d'intensité originale ou une différence d'intensité normalisée sur l'apport d'intensité absolu ou sur l'apport d'intensité original absolu,
$\mu_f$ est un coefficient décrivant la zone émergente t = timax à $t_{max}$,
$t_{Imax}$ est la position en profondeur de l'apport d'intensité maximal, et

$I_\gamma$ est un apport d'énergie ou un apport d'énergie normalisé sur l'apport d'intensité original ou un apport d'énergie normalisé sur l'apport d'intensité original absolu.

13. Système à rayons X selon la revendication 12, dans lequel la détermination des coefficients est basée sur le fait que $\ln(I_2/I_1)$ est proportionnel au premier des six coefficients et/ou que $\ln(I_3/I_2)$ est proportionnel au quatrième des six coefficients, et

où $I_1$ est un signal de capteur d'une cellule de capteur (12a, 14a, 16a, 12a' à 12i', 14a' à 14i', 16a' à 16i', 12a" à 12i", 12a'" à 12i'", 14a'" à 14i'", 16a'" à 16i'", 12a"" à 12e"", 14a"" à 14e"", 16a"" à 16e"") de la première couche de détection (12, 12', 12", 12'", 12"", 12"""), $I_2$ est un signal de capteur d'une cellule de capteur (12a, 14a, 16a, 12a' à 12i', 14a' à 14i', 16a' à 16i', 12a" à 12i", 12a'" à 12i'", 14a'" à 14i'", 16a'" à 16i'", 12a"" à 12e"", 14a"" à 14e"", 16a"" à 16e"") de la deuxième couche de détection (14, 14', 14", 14'", 14"", 14""") et $I_3$ un signal de capteur d'une cellule de capteur (12a, 14a, 16a, 12a' à 12i', 14a' à 14i', 16a' à 16i', 12a" à 12i", 12a'" à 12i'", 14a'" à 14i'", 16a'" à 16i'", 12a"" à 12e"", 14a"" à 14e"", 16a"" à 16e"") de la troisième couche de détection (16, 16', 16", 16'", 16"", 16""").

14. Utilisation d'un détecteur de rayons X (10, 10', 10", 10'", 10"", 10""", 10"""", 10""""") selon l'une des revendications 1 à 9 pour la détection de champ de rayonnement, dans laquelle peuvent être détectés, sur base des signaux de capteur de la pluralité des signaux de capteur $I_x$ sur lesquels agit un rayonnement, une pluralité de trajets de pénétration (19, 19', 19", 19'", 19"") et, sur base de la pluralité des trajets de pénétration (19, 19', 19", 19'", 19""), une intersection des trajets de pénétration (19, 19', 19", 19'", 19"") et, de ce fait, un champ de rayonnement.

15. Procédé pour déterminer une propriété d'un objet et/ou une propriété d'un système radiographique au moyen d'un détecteur de rayons X (10, 10', 10", 10'", 10"", 10""", 10"""", 10""""") selon l'une des revendications 1 à 8, aux étapes suivantes consistant à:

déterminer une évolution d'un dépôt d'énergie sur une profondeur de pénétration à travers les au moins trois couches de détection sur base des signaux de capteur $I_x$ des cellules de capteur (12a, 14a, 16a, 12a' à 12i', 14a' à 14i', 16a' à 16i', 12a" à 12i", 12a'" à 12i'", 14a'" à 14i'", 16a'" à 16i'", 12a"" à 12e"", 14a"" à 14e"", 16a"" à 16e"") des au moins trois couches de détection; et
déterminer la propriété de l'objet et/ou la propriété du système radiographique sur base de l'évolution déterminée du dépôt d'énergie.

16. Procédé selon la revendication 15, dans lequel l'évolution du dépôt d'énergie à l'aide de deux e-fonctions

$$\text{pour } t = 0 \text{ à } t = t_{\text{Imax}}: \qquad I_{dep\_r}(t) = I_{max} - I_{hub}e^{-\mu_r t},$$

$$\text{pour } t = t_{\text{Imax}}: \text{ à } t= t_{\text{max}} \qquad I_{dep\_f}(t) = I_\gamma e^{-\mu_f t},$$

qui comportent jusqu'à six coefficients, peut être calculée en déterminant les jusqu'à six coefficients,

où $\mu_r$ est un coefficient décrivant la zone émergente $t = 0$ à $t = t_{\text{Imax}}$,
$I_{max}$ est l'apport d'intensité maximale ou un apport d'intensité normalisé sur l'apport d'intensité original ou un apport d'intensité normalisé sur l'apport d'intensité absolu ou sur l'apport d'intensité original absolu $I_0$,
$I_{hub}$ est la différence d'intensité entre l'intensité de surface et l'apport d'intensité maximal ou une différence d'intensité normalisée sur la différence d'intensité originale ou une différence d'intensité normalisée sur l'apport d'intensité absolu ou sur l'apport d'intensité original absolu,
$\mu_f$ est un coefficient décrivant la zone émergente $t = t_{\text{Imax}}$ à $t_{\text{max}}$,
$t_{\text{Imax}}$ est la position en profondeur de l'apport d'intensité maximale, et
$I_\gamma$ est un apport d'énergie absolu normalisé sur l'intensité initiale $I_0$, et

dans lequel la détermination de l'évolution du dépôt d'énergie comporte le fait de déterminer les jusqu'à six coefficients; et/ou
dans lequel la propriété de l'objet est une information sur le matériau et/ou une épaisseur de l'objet, dans lequel la propriété du système radiographique est une information sur une géométrie du système radiographique et/ou un spectre d'une source de rayons du système radiographique.

17. Programme d'ordinateur avec un code de programme pour réaliser le procédé selon l'une des revendications 15 à 16 lorsque le programme est exécuté sur un ordinateur.

FIGUR 1A

FIGUR 1B

X-ray 18'

FIGUR 2

EP 3 052 966 B1

FIGUR 3A

FIGUR 3B

FIGUR 3C

FIGUR 3D

EP 3 052 966 B1

FIGUR 3E

EP 3 052 966 B1

FIGUR 3F

FIGUR 3G

EP 3 052 966 B1

EP 3 052 966 B1

**FIGUR 4**

FIGUR 5A

FIGUR 5B

FIGUR 6A

EP 3 052 966 B1

**FIGUR 6B**

FIGUR 7

EP 3 052 966 B1

FIGUR 8A

EP 3 052 966 B1

FIGUR 8B

EP 3 052 966 B1

FIGUR 8C

FIGUR 8D

EP 3 052 966 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009031126 A
- EP 2060932 A

- US 2006081899 A

**In der Beschreibung aufgeführte Nicht-Patentliteratur**

- **NICHOLAS ALLEN ; KARIM S.KARIM.** Physics of Medical Imaging. *Proc.of SPIE,* 2010, vol. 7622